(19) Europäisches Patentamt
European Patent Office
Office européen des brevets

(11) EP 2 390 556 A1

(12) # EUROPEAN PATENT APPLICATION

published in accordance with Art. 153(4) EPC

(43) Date of publication:
**30.11.2011 Bulletin 2011/48**

(21) Application number: **09841144.0**

(22) Date of filing: **07.10.2009**

(51) Int Cl.:
***F21S 2/00*** (2006.01) ***G02F 1/13357*** (2006.01)
***F21Y 101/02*** (2006.01)

(86) International application number:
**PCT/JP2009/067465**

(87) International publication number:
**WO 2010/100784 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 JP 2009053104**
**23.06.2009 JP 2009148805**

(71) Applicant: **Sharp Kabushiki Kaisha**
**Osaka-shi, Osaka 545-8522 (JP)**

(72) Inventors:
- **ISHIDA, Takeshi**
**Osaka 545-8522 (JP)**
- **KAIDA, Kazuya**
**Osaka 545-8522 (JP)**
- **KAWAMURA, Tadashi**
**Osaka 545-8522 (JP)**
- **YASHIRO, Yuji**
**Osaka 545-8522 (JP)**
- **KADOWAKI, Shinya**
**Osaka 545-8522 (JP)**
- **KUNIMASA, Fumie**
**Osaka 545-8522 (JP)**
- **SHIGETA, Hiroaki**
**Osaka 545-8522 (JP)**
- **YUKI, Ryuzo**
**Osaka 545-8522 (JP)**

(74) Representative: **Müller-Boré & Partner**
**Patentanwälte**
**Grafinger Straße 2**
**81671 München (DE)**

(54) **PLANAR ILLUMINATION DEVICE AND DISPLAY DEVICE PROVIDED WITH THE SAME**

(57) A planar illumination device is provided that enhances the efficiency of use of light and its brightness while suppressing uneven brightness, that reduces an increase in the manufacturing cost and that can reduce the thickness of the planar illumination device. In this backlight device (planar illumination device) (20), in the light emitting surface (23b) of a light guide body (23), a plurality of prisms (23e) that gradually reduce an angle of incidence of light with respect to the back surface (23c) of the light guide body are provided, and, in the back surface (24a) of a low refractive index layer (24), a plurality of prisms (24b) that have the function of forwardly and totally reflecting light from LEDs (21) in an interface between the back surface of the low refractive index layer and an air layer are formed.

FIG.3

20
B
C
θ1
23e
23d
23f
23b
Q1
21
θ2
Q2
θ3
Q3
θ4
Q4
θ5
23
24
22
23a
23c
Q5
24b
24a

EP 2 390 556 A1

## Description

## Technical Field

The present invention relates to a planar illumination device and a display device incorporating such a planar illumination device. More particularly, the present invention relates to a planar illumination device including a light guide member and to a display device incorporating such a planar illumination device.

## Background Art

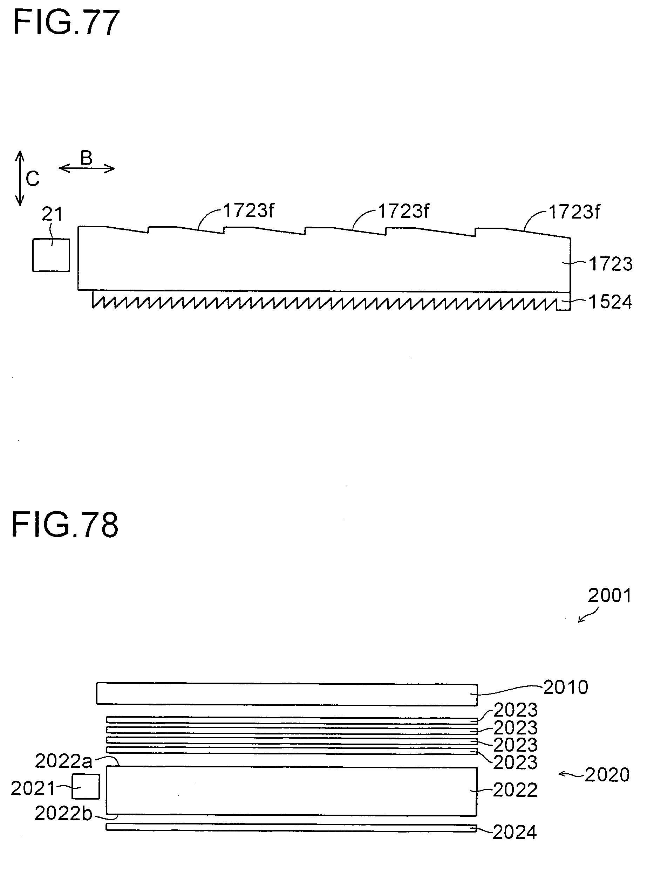

Conventionally, there is known a display device that incorporates a planar illumination device including a light guide member. Fig. 78 is a side view showing the structure of a display device that is one conventional example. As shown in Fig. 78, the display device 2001 that is one conventional example includes a display panel 2010 and a planar illumination device 2020 arranged on the side of the back surface of the display panel 2010.

The planar illumination device 2020 is an edge light type illumination device. The planar illumination device 2020 includes: a plurality of LEDs (light-emitting diodes) 2021 that are aligned in a predetermined direction (a direction perpendicular to the plane of the figure); a light guide plate 2022 that guides light from the LEDs 2021; a plurality of optical sheets 2023 that are arranged on the side of the light emitting surface 2022a of the light guide plate 2022; and a reflective sheet 2024 that is arranged on the side of the back surface 2020b of the light guide plate 2022.

The light guide plate 2022 has the function of guiding the light from the LEDs 2021 to the entire light guide plate 2022.

The optical sheets 2023 are formed with three or four sheet members composed of a diffusion plate, a light collecting lens and the like; the optical sheets 2023 have the function of making uniform the brightness of the display panel 2010. The optical sheets 2023 also have the function of collecting light from the light guide plate 2022 in an area in front thereof (on the side of the display panel 2010) and thereby increasing the brightness.

In the display device 2001 that is one conventional example, as described above, the optical sheets 2023 are arranged between the display panel 2010 and the light guide plate 2022. In general, the optical sheets 2023 each, such as the diffusion plate and the light collecting lens, have a thickness of about 40 $\mu$m to about 80 $\mu$m. Thus, it is disadvantageously difficult not only to reduce the thickness of the planar illumination device 2020 and the display device 2001 but also to reduce the manufacturing cost.

In the display device 2001 that is one conventional example, since light emitted from the light guide plate 2022 passes through the optical sheets 2023, the loss of the light when the light passes through the optical sheets 2023 is increased. Hence, the efficiency of use of light is also disadvantageously reduced.

In order to overcome these disadvantages, there is proposed a display device incorporating a planar illumination device that uses a light guide plate to collect light in an area in front thereof (on the side of the display panel) without provision of optical sheets.

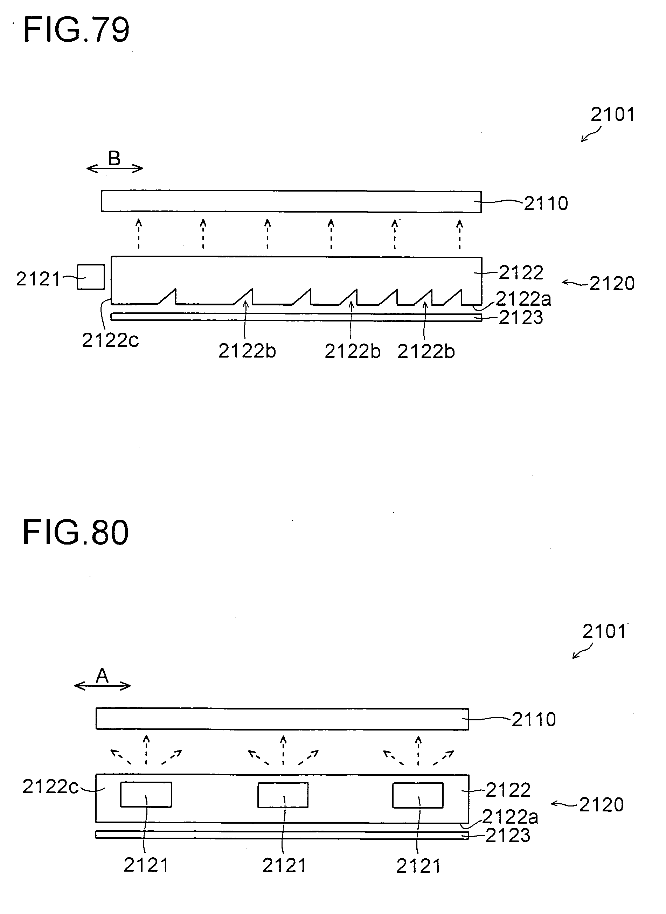

Figs. 79 to 81 are diagrams showing the structure of a conventional display device that incorporates a planar illumination device including a light guide plate which has the function of collecting light in an area in front thereof. As shown in Figs. 79 and 80, this display device 2101 incorporates a display panel 2110 and a planar illumination device 2120 arranged on the side of the back surface of the display panel 2110.

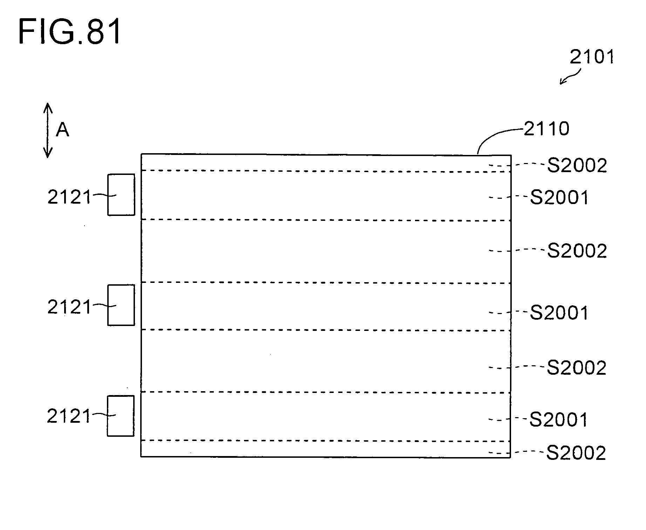

The planar illumination device 2120 includes: a plurality of LEDs 2121 that are aligned in an A-direction (see Figs. 80 and 81); a light guide plate 2122 that guides light from the LEDs 2121; and a reflective sheet 2123 that is arranged on the side of the back surface 2122a of the light guide plate 2122.

As shown in Fig. 79, in the back surface 2122a of the light guide plate 2122, a plurality of prisms 2122b having inclined surfaces are formed.

These prisms 2122b are arranged such that, as the prisms 2122b are closer to the LEDs 2121, the distance between the adjacent prisms 2122b is increased. Since the amount of light (a beam of light) from the LEDs 2121 is increased as the prisms 2122b are closer to the LEDs 2121, as described above, the prisms 2122b are arranged such that, as the prisms 2122b are closer to the LEDs 2121, the distance between the adjacent prisms 2122b is increased, and thus it is possible to make substantially uniform the brightness of the display panel 2110.

The prisms 2122b also have the function of collecting the light from the LEDs 2121 in an area in front thereof (on the side of the display panel 2110). Specifically, the prisms 2122b have the function of suppressing the spread of the light in a B-direction (in the direction of a normal to the light entering surface 2122c of the light guide plate 2122) and then the emission of the light from the light guide plate 2122. In other words, the prisms 2122b can enhance the property of collecting light in the B-direction.

Conventionally, there is proposed a display device incorporating a planar illumination device that uses a light guide plate to collect light in an area in front thereof (on the side of the display panel) without provision of optical sheets (see, for example, patent document 1).

Patent document 1 discloses a liquid crystal display device that incorporates an LCD panel (display panel) and a backlight device (planar illumination device) arranged on the side of the back surface of the LCD panel.

In this liquid crystal display device, the backlight device includes a light source and a light guide plate that guides light from the light source. The light guide plate is formed with: a light guide body that the light from the light source enters; a first light transmission layer that is provided on the bottom surface (back surface) of the light guide body; a second light transmission layer that is provided on the bottom surface of the first light transmission layer; and a metallic mirror that is provided on the bottom surface of the second light transmission layer. The light guide body, the first light transmission layer, the second light transmission layer and the mirror are integrally formed without the intervention of an air layer.

The light guide body is formed such that the thickness of the light guide member is decreased as it extends away from the light source. In other words, the light guide body is formed in the shape of a wedge such that the bottom surface is inclined only at a predetermined angle with respect to the top surface (front surface).

The first light transmission layer has a lower refractive index than the light guide body; the second light transmission layer has a refractive index substantially equal to that of the light guide body. In the bottom surface of the second light transmission layer, a plurality of concave portions (prisms) having inclined surfaces are formed; the mirror is provided on the bottom surface of the second light transmission layer so as to embed the concave portions.

In this liquid crystal display device, within the light guide body, the light from the light source is guided while being repeatedly reflected between the top surface and the bottom surface. Here, the light guide angle (an angle of incidence with respect to the bottom surface of the light guide body) of the light is gradually changed, and the angle of incidence with respect to the bottom surface of the light guide body is gradually reduced. Then, the guided light enters the first light transmission layer. Thereafter, the light that has entered the first light transmission layer enters the second light transmission layer, and then the light is reflected forwardly (toward the liquid crystal display panel) by the mirror.

## Related Art Document

### Patent Document

Patent document 1: JP-A-2001-110218

## Disclosure of the Invention

### Problems to be Solved by the Invention

In the planar illumination device 2120 shown in Figs. 79 and 80, the prisms 2122b are arranged such that, as the prisms 2122b are closer to the LEDs 2121, the distance between the adjacent prisms 2122b is increased. Hence, dot unevenness is produced in part of the display panel 2110 on the side of the LEDs 2121. In other words, it is disadvantageously difficult to make uniform the brightness of the part of the display panel 2110 on the side of the LEDs 2121.

In the planar illumination device 2120, as described above, it is possible to suppress the spread of the light emitted from the light guide plate 2122 in the B-direction whereas, as shown in Fig. 80, it is difficult to suppress the spread of the light emitted from the light guide plate 2122 in the A-direction. It is therefore difficult to enhance the brightness of the display panel 2110.

When, as with the planar illumination device 2120, a diffusion plate and the like are not used and light-emitting elements such as the LEDs 2121 are used as the light source, since the light is prevented from being diffused in the A-direction within the light guide plate 2122, as shown in, for example, Fig. 81, the brightness of parts S2001 of the display panel 2110 opposite the front of the LEDs 2121 is different from that of parts S2002 of the display panel 2110 other than the parts S2001 of the display panel 2110 opposite the front. In other words, it is difficult to make uniform the brightness of the display panel 2110.

On the other hand, in the liquid crystal display device disclosed in patent document 1 described above, the light is reflected forwardly (toward the liquid crystal display panel) by the metallic mirror. When the light is reflected by the metallic mirror as described above, since the light is absorbed by the mirror, the efficiency of use of light is disadvantageously reduced.

When, as in patent document 1 described above, the metallic mirror is formed in the bottom surface of the second light transmission layer, it is difficult to reduce the manufacturing time of the light guide plate, and the manufacturing cost is increased.

When, as in patent document 1 described above, the bottom surface of the light guide body is inclined with respect to the top surface (front surface), as compared with a case where the top surface and the bottom surface of the light guide body are formed substantially parallel to each other, it is difficult to form the first light transmission layer and the second light transmission layer on the bottom surface of the light guide body.

The present invention is made to solve the foregoing problems. An object of the present invention is to provide: a planar illumination device that enhances the efficiency of use of light and its brightness while suppressing uneven brightness, that reduces an increase in the manufacturing cost and that can reduce the thickness of the planar illumination device; and a display device incorporating such a planar illumination device.

**Means for Solving the Problem**

To achieve the above object, according to the first aspect of the present invention, there is provided a planar illumination device which includes: a light source; and a light guide member that guides light from the light source, in which the light guide member includes: a light guide body that the light from the light source enters; and a low refractive index layer that is provided on a back surface of the light guide body without intervention of an air layer and that has a lower refractive index than the light guide body, in a side of a front surface of the light guide body or in the back surface of the light guide body, a plurality of first reflective portions are provided that gradually reduce an angle of incidence of the light from the light source with respect to the back surface of the light guide body, and in a light emitting region of the light guide member, a plurality of second reflective portions that have a function of totally and forwardly reflecting the light from the light source in an interface between a back surface of the light guide member and an air layer are formed over substantially the entire back surface of the light guide member.

In the planar illumination device according to the first aspect of the present invention, as described above, in the side of the front surface of the light guide body or in the back surface of the light guide body, a plurality of first reflective portions are provided that gradually reduce the angle of incidence of the light from the light source with respect to the back surface of the light guide body, and, in the back surface of the light guide member, a plurality of second reflective portions that forwardly reflects the light from the light source in the interface between the back surface of the light guide member and an air layer. Thus, the light from the light source is guided while being reflected repeatedly between the front surface and the back surface of the light guide body, with the result that the angle of incidence of the light with respect to the back surface of the light guide body is gradually reduced. Then, when the angle of incidence of the light with respect to the back surface of the light guide body becomes lower than the critical angle between the light guide body and the low refractive index layer, the light from the light source enters the low refractive index layer. Hence, the angle of spread of the light that enters the low refractive index layer is reduced, and the angle of spread of the light that is reflected off the interface between the back surface of the light guide member and the air layer is also reduced. In other words, it is possible not only to enhance the light collecting property but also to enhance the brightness of the liquid crystal display panel. Consequently, since it is unnecessary to provide a plurality of optical sheets such as a diffusion plate and a light collecting lens on the light guide member, it is possible not only to reduce the thickness of the planar illumination device but also to reduce an increase in the manufacturing cost.

Moreover, since it is unnecessary to provide a plurality of optical sheets, no loss of light is produced when the light passes through the optical sheets. Thus, it is possible to enhance the efficiency of use of light.

A plurality of first reflective portions that gradually reduce the angle of incidence of the light from the light source with respect to the back surface of the light guide body are provided, and thus the light from the light source is guided while being reflected repeatedly between the side of the front surface and the back surface of the light guide body, with the result that, as the light travels away from the light source, the angle of incidence with respect to the back surface of the light guide body is reduced and the light is more likely to enter the low refractive index layer. In this way, both in a part which is close to the light source and in which a large amount of light (luminous flux) is present and in a part which is distant from the light source and in which a small amount of light (luminous flux) is present, it is possible to make uniform the amount of light entering the low refractive index layer. Consequently, since light can be uniformly emitted from the entire light emitting region of the light guide member, it is possible to make uniform the brightness of the display panel.

As described above, in the planar illumination device of the first aspect, a plurality of second reflective portions that reflect forwardly the light from the light source are formed in substantially the entire back surface of the light guide member over the light emitting region of the light guide plate, and thus the light can be uniformly reflected by the second reflective portions over substantially the entire light emitting region of the light guide plate. In this way, since it is possible to more uniformly emit light from substantially the entire light emitting region of the light guide member, it is possible not only to reduce the production of dot unevenness but also to make more uniform the brightness of the display panel.

As described above, in the planar illumination device of the first aspect, a plurality of second reflective portions have the function of totally reflecting the light from the light source, and thus it is possible to suppress the emission of light that has entered the low refractive index layer through the light guide body from the back surface of the light guide member, with the result that the loss of the light can be reduced. In this way, it is possible to further enhance the efficiency of use of light.

Since the second reflective portions have the function of totally reflecting the light from the light source, unlike the case where the metallic mirror is provided on the back surface of the light guide member and the light is reflected by the metallic mirror, the light is not absorbed by the metallic mirror when the light is reflected. Thus, it is possible to further enhance the efficiency of use of light.

Since it is unnecessary to provide the metallic mirror on the back surface of the light guide member, as compared with the case where the metallic mirror is provided on the back surface of the light guide member, it is possible not only to prevent the manufacturing time of the light guide member from being elongated but also to reduce an increase in the manufacturing cost.

Preferably, in the planar illumination device of the first aspect, the front surface and the back surface of the light guide body are formed to be substantially parallel to each other. With this configuration, it is possible to easily form the low refractive index layer on the back surface of the light guide body as compared with, for example, the case where the wedge-shaped light guide body in which the back surface is inclined with respect to the front surface is used.

Preferably, in the planar illumination device of the first aspect, each of the first reflective portions includes a first inclination surface that is inclined with respect to the front surface or the back surface of the light guide body. With this configuration, it is possible to easily and gradually reduce the angle of incidence of the light from the light source with respect to the back surface of the light guide body.

Preferably, in the planar illumination device of the first aspect, the first inclination surface is inclined at an angle that is equal to or more than 0.1° ° but equal to or less than 5° with respect to the front surface or the back surface of the light guide body. With this configuration, the angle of incidence of the light with respect to the back surface of the light guide body is reduced by 0.2° or more but 10° or less each time the light is reflected by the first reflective portion. In this way, it is possible to more easily and gradually reduce the angle of incidence of the light with respect to the back surface of the light guide body.

In the planar illumination device of the first aspect, in a surface where the first reflective portions are provided, a first flat surface portion that is substantially parallel to the front surface or the back surface of the light guide body may be formed between the first reflective portions adjacent to each other in the direction of a normal to the light entering surface of the light guide body.

Preferably, in the planar illumination device of the first aspect, each of the second reflective portions includes a second inclination surface that is inclined with respect to the back surface of the light guide member. With this configuration, it is possible to easily and forwardly reflect light which enters the low refractive index layer and has a small angle of spread while the small angle of spread is being kept.

Preferably, in the planar illumination device in which the second reflective portion has the second inclination surface, the second inclination surface is inclined at an angle that is equal to or more than 40° but equal to or less than 50° with respect to the back surface of the light guide member. With this configuration, it is possible to totally and forwardly reflect the light from the light source with ease.

Preferably, in the planar illumination device in which the second reflective portion has the second inclination surface, the second inclination surface is curved. With this configuration, as compared with the case where the second inclination surface is flat, it is possible to prevent the angle of spread of the light that is reflected totally and forwardly from being lowered too much. By controlling the inclination angle of the second inclination surface, it is possible to control the angle of spread of the light.

Preferably, in the planar illumination device of the first aspect, the second reflective portions are continuously formed without any space therebetween in the direction of the normal to the light entering surface of the light guide body. With this configuration, the second reflective portions allow the light to be more uniformly reflected, and thus the light can be uniformly emitted from substantially the entire light emitting region of the light guide member. In this way, it is possible to make uniform the brightness of the display panel.

Preferably, in the planar illumination device of the first aspect, the second reflective portions are formed to have substantially the same shape and substantially the same size. With this configuration, the second reflective portions allow the light to be more uniformly reflected, and thus the light can be uniformly emitted from substantially the entire light emitting region of the light guide member. In this way, it is possible to make uniform the brightness of the display panel.

Preferably, in the planar illumination device of the first aspect, in the side of the front surface of the light guide body or in the back surface of the light guide body, a plurality of third reflective portions are formed that diffuse the light from the light source in a first direction in which the light entering surface of the light guide body extends. With this configuration, the light can be diffused in the first direction within the light guide body, it is possible to make uniform the brightness of a part of the display panel opposite the front of the light source and the brightness of parts of the display panel other than the part opposite the front of the light source. In other words, it is possible to make more uniform the brightness of the display panel.

A plurality of third reflective portions that diffuse the light from the light source in the first direction in which the light entering surface of the light guide body extends are formed, and thus, light incident at a large angle of incidence with respect to the back surface of the light guide body, as seen from the side of the light entering surface of the light guide body, is reflected by the third reflective portions, with the result that it is possible to reduce the angle of incidence

with respect to the back surface of the light guide body. In this way, since it is possible to suppress the spread of the light entering the low refractive index layer in the first direction, it is possible to suppress the spread of the light emitted from the light guide member in the first direction. Consequently, it is possible not only to enhance the property of collecting the light in the first direction but also to further enhance the brightness of the display panel.

Preferably, in the planar illumination device in which the third reflective portions are formed in the side of the front surface of the light guide body or in the back surface of the light guide body, each of the third reflective portions includes a pair of inclination surfaces that is inclined with respect to the front surface or the back surface of the light guide body. With this configuration, the light from the light source can be diffused toward both sides of the first direction by the pair of inclination surfaces, it is possible to further enhance the brightness of the display panel.

In the planar illumination device in which each of the third reflective portions includes the pair of inclination surfaces, an angle formed by the pair of inclination surfaces may be equal to or more than 120° but equal to or less than 140°.

Preferably, in the planar illumination device in which the third reflective portions are formed in the side of the front surface of the light guide body or in the back surface of the light guide body, in a surface where the third reflective portions are provided, a second flat surface portion that is substantially parallel to the front surface or the back surface of the light guide body is formed between the third reflective portions adjacent to each other in the first direction, and a width of the second flat surface portion in the first direction is equal to or more than a width of the third reflective portion in the first direction. With this configuration, it is not only possible to suppress the spread of the light entering the low refractive index layer in the first direction but also to enhance the property of collecting the light in the first direction.

Preferably, in the planar illumination device in which the third reflective portions are formed in the side of the front surface of the light guide body or in the back surface of the light guide body, the light source includes a light-emitting element. When, as described above, the light-emitting element are used as the light source, since it is more likely that the brightness of the part of the display panel opposite the front of the light source differs from the brightness of the parts of the display panel other than the part opposite the front of the light source, it is especially effective to provide a plurality of third reflective portions that diffuse the light from the light source in the first direction.

Preferably, in the planar illumination device of the first aspect, the light guide member further includes a first reflective portion formation layer that is provided on a back surface of the low refractive index layer without intervention of an air layer and that has a higher refractive index than the low refractive index layer, and the second reflective portions are formed in the back surface of the first reflective portion formation layer. With this configuration, it is unnecessary to provide the second reflective portions in the low refractive index layer, and thus it is possible to reduce the thickness of the low refractive index layer. Since a transparent material that is used for the low refractive index layer and that has a relatively low refractive index is expensive, when the first reflective portion formation layer is provided and the thickness of the low refractive index layer is reduced, it is possible to reduce an increase in the manufacturing cost of the light guide member.

Preferably, in the planar illumination device of the first aspect, a light shielding member is arranged above a part of the front surface of the light guide body on the side of the light source through a layer that has a lower refractive index than the low refractive index layer. In a part of the light guide member near the light source, light is more likely to be emitted from the light guide member without the intervention of the low refractive index layer, and thus the brightness of a part of the display panel near the light source is more likely to be increased. Hence, when the light shielding member is arranged above the part of the light guide member near the light source, it is possible to shield the part of the light guide member near the light source from light, with the result that it is possible to suppress the uneven brightness of the display panel.

The light shielding member is arranged above the part of the front surface of the light guide member on the side of the light source through the layer (For example, an air layer) having a lower refractive index than the low refractive index layer, and thus, as compared with a case where the light shielding member is arranged above the part of the front surface of the light guide member on the side of the light source without the intervention of the air layer, the light is easily reflected by the front surface of the light guide member. In other words, it is possible to suppress the emission of the light from the front surface of the light guide member and then the absorption of the light by the light shielding member. In this way, it is possible to further reduce a decrease in the efficiency of use of light.

Preferably, the planar illumination device of the first aspect further includes a reflective member that reflects, toward the light guide member, light emitted from the back surface of the light guide member. With this configuration, it is possible to reflect the light emitted from the back surface of the light guide member toward the light guide member, with the result that it is possible to further enhance the efficiency of use of light.

Preferably, in the planar illumination device of the first aspect, in a first region, of the surface where the first reflective portions are provided, that extends a first distance from the light entering surface of the light guide body, a third inclination surface is formed, and an angle formed by the third inclination surface and the light entering surface is more than 90°. With this configuration, it is possible to increase the angle of incidence, with respect to the third inclination surface, of the light that travels from the light entering surface or the back surface of the light guide body to the front surface of the light guide body. Thus, the light can easily be totally reflected by the third inclination surface toward the back surface of the light guide body. In other words, it is possible to suppress the emission of light from the first region. Consequently, it is possible to enhance the efficiency of use of light.

Preferably, in the planar illumination device in which the third inclination surface is formed in the first region, the second reflective portions are not formed in a second region that extends a second distance from the light entering surface of the light guide body within the back surface of the light guide member but the second reflective portions are formed in a region other than the second region. With this configuration, in the second region of the light guide member, the light is not reflected forwardly by the second reflective portions. In this way, it is possible to suppress the emission of the light from the portion of the light guide member near the light source, and thus it is possible to further enhance the efficiency of use of light.

Preferably, in the planar illumination device in which the second reflective portions are not formed in the second region, the first distance is equal to or more than the second distance. With this configuration, the light that has been reflected forwardly by the second reflective portions can easily be totally reflected by the first reflective portions toward the back surface of the light guide member.

Preferably, in the planar illumination device of the first aspect, the surface of the second reflective portion includes a light diffusing surface. With this configuration, it is possible to somewhat increase the angle of spread of the light when the light is transmitted or totally reflected by the second reflective portions. In other words, it is possible to prevent the angle of spread of the light that is reflected totally and forwardly from being lowered too much.

In the planar illumination device of the first aspect, the first reflective portions may be formed with a constant pitch in the direction of the normal to the light entering surface of the light guide body, and the second reflective portions may be formed with a constant pitch in the direction of the normal to the light entering surface of the light guide body. When the first reflective portions are formed with a constant pitch, and the second reflective portions are formed with a constant pitch, the first reflective portions and the second reflective portions are slightly inclined relative to each other as seen from the side of the front surface of the light guide member, moiré fringes are produced. In this case, one of the pitches of the first reflective portions and the second reflective portions is appropriately set for the other of the first reflective portions and the second reflective portions, and thus it is possible not only to reduce the pitch of the moiré fringes but also to suppress the production of the moiré fringes in visual terms.

Preferably, in the planar illumination device in which the first reflective portions are formed with a constant pitch and the second reflective portions are formed with a constant pitch, the first reflective portions are formed at a predetermined angle with respect to the second reflective portions when viewed from the side of the front surface of the light guide member. With this configuration, as in the case where one of the pitches of the first reflective portions and the second reflective portions is appropriately set for the other of the first reflective portions and the second reflective portions, it is possible not only to reduce the pitch of the moiré fringes but also to suppress the production of the moiré fringes in visual terms.

Preferably, in the planar illumination device of the first aspect, the light guide member further includes a second reflective portion formation layer that is arranged on the front surface of the light guide body without intervention of an air layer or is arranged between the light guide body and the low refractive index layer, the first reflective portions are formed in the second reflective portion formation layer, and the second reflective portion formation layer has a higher refractive index than the low refractive index layer. With this configuration, since it is unnecessary to form the first reflective portions in the front surface and the back surface of the light guide body, it is possible to make flat the front surface and the back surface of the light guide body. In this way, it is possible to easily form the light guide body with a flat-plate glass or a thermosetting resin or the like.

Preferably, in the planar illumination device including the second reflective portion formation layer, the second reflective portion formation layer has a refractive index equal to or higher than the light guide body. With this configuration, it is possible to prevent the suppression of the entry of the light from the light source into the second reflective portion formation layer.

Preferably, in the planar illumination device of the first aspect, when the refractive index of the light guide body is n1, and the refractive index of the low refractive index layer is n2, a relationship "$n1/n2 > 1.18$" holds true. In this case, as the light guide body, a polycarbonate or the like may be used, and, as the low refractive index layer, a resin or the like including hollow particles such as a fluorine acrylate or an inorganic filler may be used.

According to the second aspect of the present invention, there is provided a display device including the planar illumination device configured as described above and a display panel that is illuminated by the planar illumination device. With this configuration, it is possible to obtain a display device that enhances the efficiency of use of light and its brightness while suppressing uneven brightness, that reduces an increase in the manufacturing cost and that can reduce the thickness of the display device.

## Advantages of the Invention

As described above, according to the present invention, it is possible to easily obtain: a planar illumination device that enhances the efficiency of use of light and its brightness while suppressing uneven brightness, that reduces an increase in the manufacturing cost and that can reduce the thickness of the planar illumination device; and a display device incorporating such a planar illumination device.

## Brief Description of Drawings

[Fig. 1] A side view showing the structure of a liquid crystal display device incorporating a backlight device according to a first embodiment of the present invention;
[Fig. 2] A schematic diagram showing the structure of the backlight device shown in Fig. 1 and according to the first embodiment of the present invention;
[Fig. 3] A side view showing the structure of the backlight device shown in Fig. 1 and according to the first embodiment of the present invention;
[Fig. 4] An enlarged side view showing the structure of the light emitting surface of a light guide body of the backlight device shown in Fig. 1 and according to the first embodiment of the present invention;
[Fig. 5] A side view showing, when seen from the side of LEDs, the structure of the backlight device shown in Fig. 1 and according to the first embodiment of the present invention;
[Fig. 6] An enlarged side view showing the structure of the side of the back surface of a light guide plate of the backlight device shown in Fig. 1 and according to the first embodiment of the present invention;
[Fig. 7] A schematic diagram illustrating the spread of light entering the light guide body of the backlight device shown in Fig. 1 and according to the first embodiment of the present invention;
[Fig. 8] A diagram showing, when seen from the side of LEDs, the light entering the light guide body of the backlight device shown in Fig. 1 and according to the first embodiment of the present invention;
[Fig. 9] A diagram showing, when seen from the side of LEDs, light entering a low refractive index layer of the light entering the light guide body of the backlight device shown in Fig. 1 and according to the first embodiment of the present invention;
[Fig. 10] A diagram showing light that is reflected by flat surface portions 23h and prisms 23i of the light guide body of the backlight device shown in Fig. 1 and according to the first embodiment of the present invention;
[Fig. 11] A diagram showing light that is reflected by the flat surface portions 23h of the light guide body of the backlight device shown in Fig. 1 and according to the first embodiment of the present invention;
[Fig. 12] A diagram showing light that is reflected by the prisms 23i of the light guide body of the backlight device shown in Fig. 1 and according to the first embodiment of the present invention;
[Fig. 13] A cross-sectional view illustrating a method of manufacturing the light guide plate of the backlight device shown in Fig. 1 and according to the first embodiment of the present invention;
[Fig. 14] A cross-sectional view illustrating the method of manufacturing the light guide plate of the backlight device shown in Fig. 1 and according to the first embodiment of the present invention;
[Fig. 15] A cross-sectional view illustrating the method of manufacturing the light guide plate of the backlight device shown in Fig. 1 and according to the first embodiment of the present invention;
[Fig. 16] A cross-sectional view illustrating the method of manufacturing the light guide plate of the backlight device shown in Fig. 1 and according to the first embodiment of the present invention;
[Fig. 17] A cross-sectional view illustrating the method of manufacturing the light guide plate of the backlight device shown in Fig. 1 and according to the first embodiment of the present invention;
[Fig. 18] A cross-sectional view illustrating the method of manufacturing the light guide plate of the backlight device shown in Fig. 1 and according to the first embodiment of the present invention;
[Fig. 19] A side view showing the structure of a backlight device according to a second embodiment of the present invention;
[Fig. 20] A side view showing, when seen from the side of LEDs, the structure of the backlight device shown in Fig. 19 and according to the second embodiment of the present invention;
[Fig. 21] A schematic diagram showing the structure of a backlight device according to a third embodiment of the present invention;
[Fig. 22] A side view showing the structure of the backlight device shown in Fig. 21 and according to the third embodiment of the present invention;
[Fig. 23] A side view showing, when seen from the side of LEDs, the structure of the backlight device shown in Fig. 21 and according to the third embodiment of the present invention;

[Fig. 24] A cross-sectional view illustrating a method of manufacturing a light guide plate of the backlight device shown in Fig. 21 and according to the third embodiment of the present invention;
[Fig. 25] A cross-sectional view illustrating the method of manufacturing the light guide plate of the backlight device shown in Fig. 21 and according to the third embodiment of the present invention;
[Fig. 26] A cross-sectional view illustrating the method of manufacturing the light guide plate of the backlight device shown in Fig. 21 and according to the third embodiment of the present invention;
[Fig. 27] A side view showing the structure of a backlight device according to a fourth embodiment of the present invention;
[Fig. 28] A side view showing, when seen from the side of LEDs, the structure of the backlight device shown in Fig. 27 and according to the fourth embodiment of the present invention;
[Fig. 29] A side view showing the structure of a backlight device according to a fifth embodiment of the present invention;
[Fig. 30] An enlarged side view showing the structure of the side of the back surface of a light guide plate of the backlight device shown in Fig. 29 and according to the fifth embodiment of the present invention;
[Fig. 31] A side view showing the structure of a liquid crystal display device incorporating a backlight device according to a sixth embodiment of the present invention;
[Fig. 32] A side view showing the structure of a liquid crystal display device incorporating a backlight device according to a seventh embodiment of the present invention;
[Fig. 33] An enlarged side view showing the structure of the side of the back surface of a light guide plate of a backlight device according to an eighth embodiment of the present invention;
[Fig. 34] An enlarged side view showing the structure of the side of the back surface of the light guide plate of the backlight device according to the eighth embodiment of the present invention;
[Fig. 35] An enlarged side view showing the structure of the side of the back surface of a light guide plate of a backlight device according to a ninth embodiment of the present invention;
[Fig. 36] An enlarged side view showing the structure of the side of the back surface of the light guide plate of the backlight device according to the ninth embodiment of the present invention;
[Fig. 37] An enlarged side view showing the structure of Example 1 corresponding to the ninth embodiment of the present invention;
[Fig. 38] An enlarged side view showing the structure of Example 2 corresponding to the ninth embodiment of the present invention;
[Fig. 39] A diagram showing the property of collecting light in Example 1;
[Fig. 40] A diagram showing the property of collecting light in Example 2;
[Fig. 41] A diagram showing the property of collecting light in Example 3;
[Fig. 42] A diagram showing the property of collecting light in Comparative Example 1;
[Fig. 43] A side view showing the structure of a liquid crystal display device incorporating a backlight device according to a tenth embodiment of the present invention;
[Fig. 44] A side view showing the structure of the backlight device shown in Fig. 43 and according to the tenth embodiment of the present invention;
[Fig. 45] A side view showing the structure of a liquid crystal display device incorporating a backlight device according to an eleventh embodiment of the present invention;
[Fig. 46] A side view showing the structure of the backlight device shown in Fig. 45 and according to the eleventh embodiment of the present invention;
[Fig. 47] A diagram showing the distribution of luminous flux in Example 4;
[Fig. 48] A diagram showing the distribution of luminous flux in Example 3;
[Fig. 49] An enlarged side view showing the structure of the side of the back surface of a light guide plate of a backlight device according to a twelfth embodiment of the present invention;
[Fig. 50] An enlarged side view showing the structure of the side of the back surface of a light guide plate of a backlight device according to a thirteenth embodiment of the present invention;
[Fig. 51] A plan view showing moiré fringes produced in a backlight device according to a fourteenth embodiment of the present invention;
[Fig. 52] A plan view illustrating a method of calculating a pitch of the moiré fringes produced in the backlight device according to the fourteenth embodiment of the present invention;
[Fig. 53] A plan view showing moiré fringes produced in a backlight device according to a fifteenth embodiment of the present invention;
[Fig. 54] A side view showing the structure of a backlight device according to a sixteenth embodiment of the present invention;
[Fig. 55] A cross-sectional view illustrating a method of manufacturing a light guide plate of the backlight device shown in Fig. 54 and according to the sixteenth embodiment of the present invention;

[Fig. 56] A cross-sectional view illustrating the method of manufacturing the light guide plate of the backlight device shown in Fig. 54 and according to the sixteenth embodiment of the present invention;
[Fig. 57] A cross-sectional view illustrating the method of manufacturing the light guide plate of the backlight device shown in Fig. 54 and according to the sixteenth embodiment of the present invention;
[Fig. 58] A cross-sectional view illustrating the method of manufacturing the light guide plate of the backlight device shown in Fig. 54 and according to the sixteenth embodiment of the present invention;

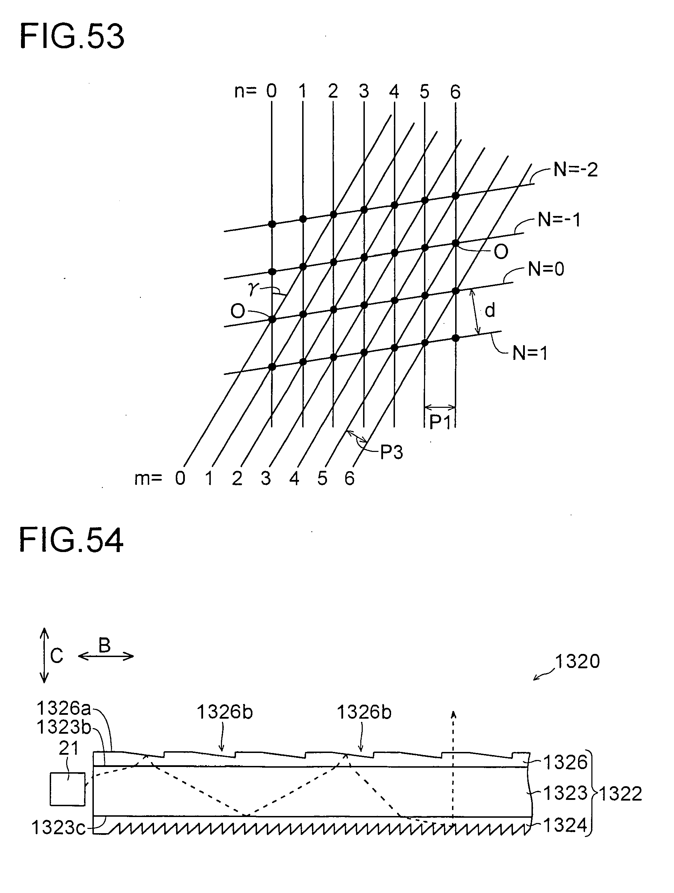

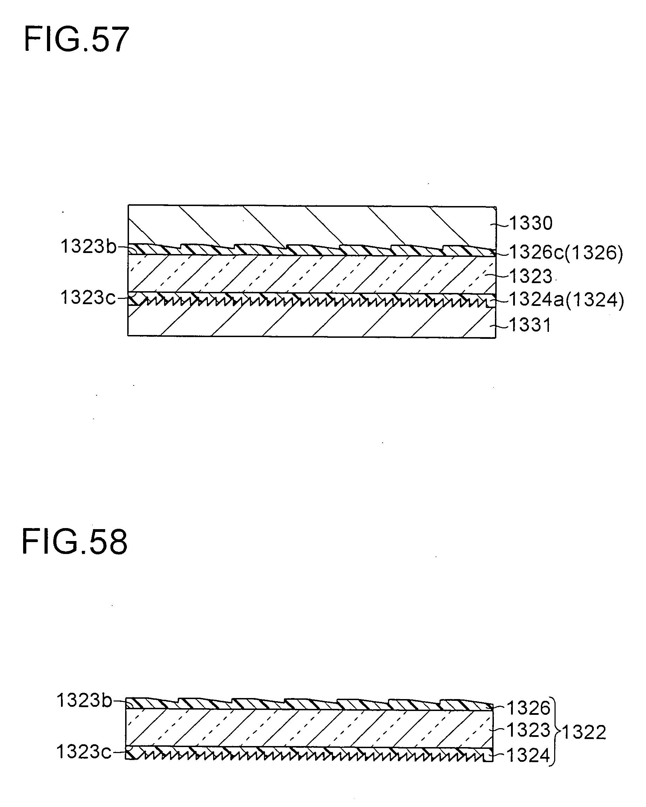

[Fig. 58] A cross-sectional view illustrating the method of manufacturing the light guide plate of the backlight device shown in Fig. 54 and according to the sixteenth embodiment of the present invention;

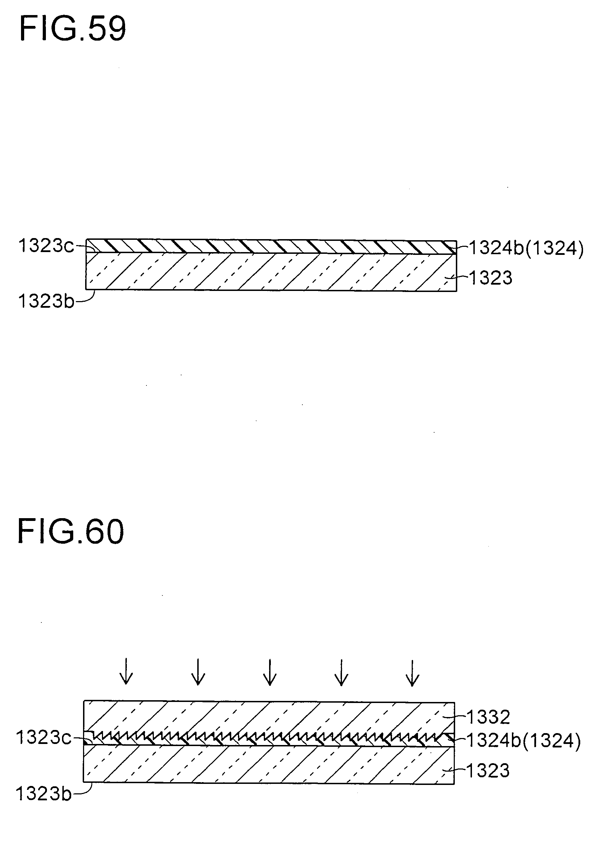

[Fig. 59] A cross-sectional view illustrating the method of manufacturing the light guide plate of the backlight device shown in Fig. 54 and according to the sixteenth embodiment of the present invention;
[Fig. 60] A cross-sectional view illustrating the method of manufacturing the light guide plate of the backlight device shown in Fig. 54 and according to the sixteenth embodiment of the present invention;

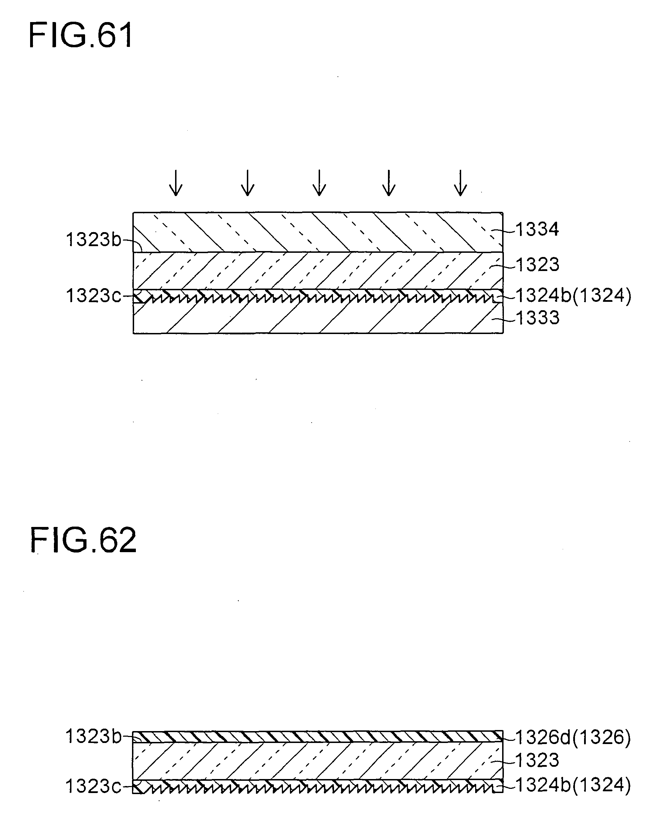

[Fig. 61] A cross-sectional view illustrating the method of manufacturing the light guide plate of the backlight device shown in Fig. 54 and according to the sixteenth embodiment of the present invention;
[Fig. 62] A cross-sectional view illustrating the method of manufacturing the light guide plate of the backlight device shown in Fig. 54 and according to the sixteenth embodiment of the present invention;

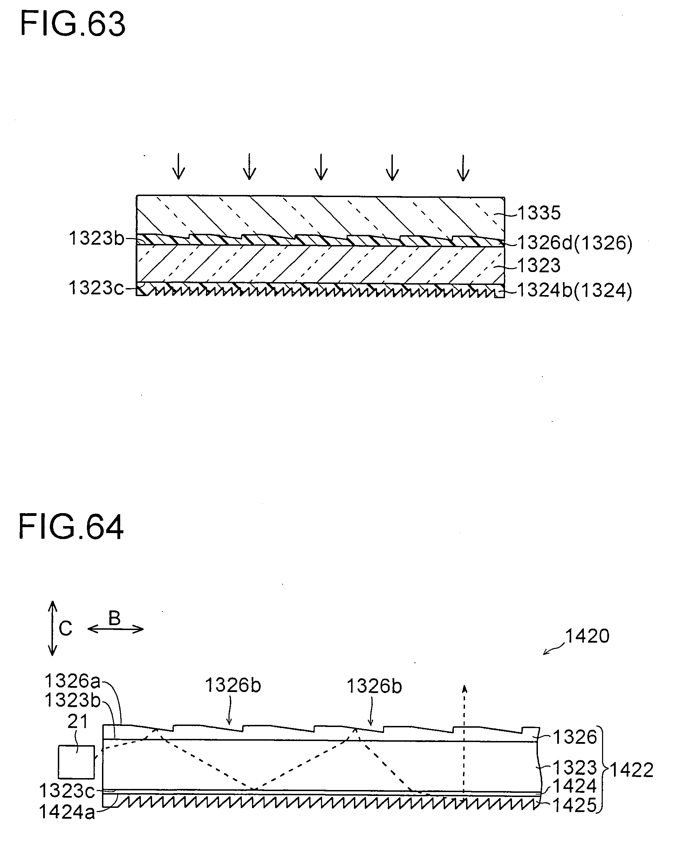

[Fig. 63] A cross-sectional view illustrating the method of manufacturing the light guide plate of the backlight device shown in Fig. 54 and according to the sixteenth embodiment of the present invention;
[Fig. 64] A side view showing the structure of a backlight device according to a seventeenth embodiment of the present invention;

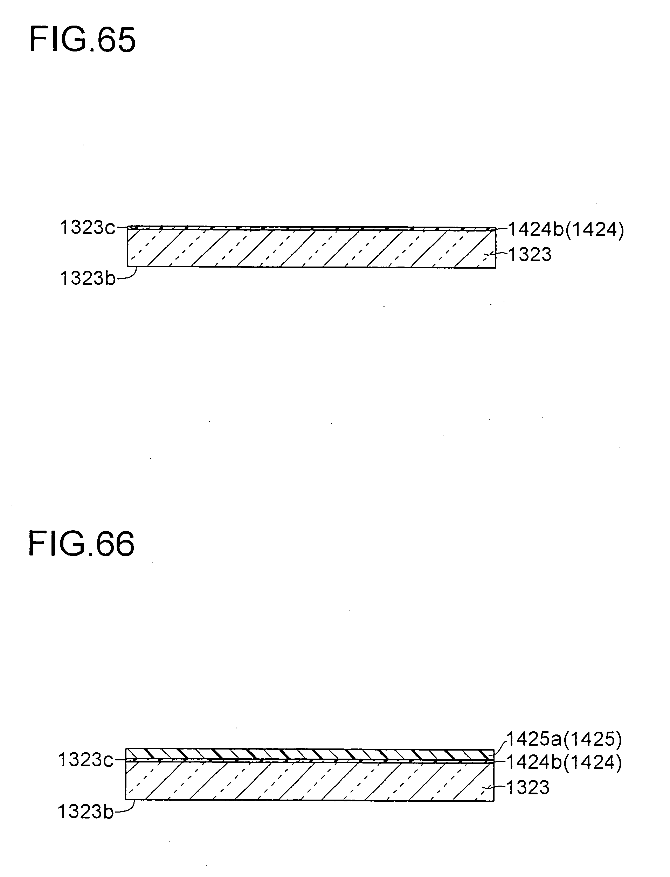

[Fig. 65] A cross-sectional view illustrating a method of manufacturing a light guide plate of the backlight device shown in Fig. 64 and according to the seventeenth embodiment of the present invention;
[Fig. 66] A cross-sectional view illustrating the method of manufacturing the light guide plate of the backlight device shown in Fig. 64 and according to the seventeenth embodiment of the present invention;

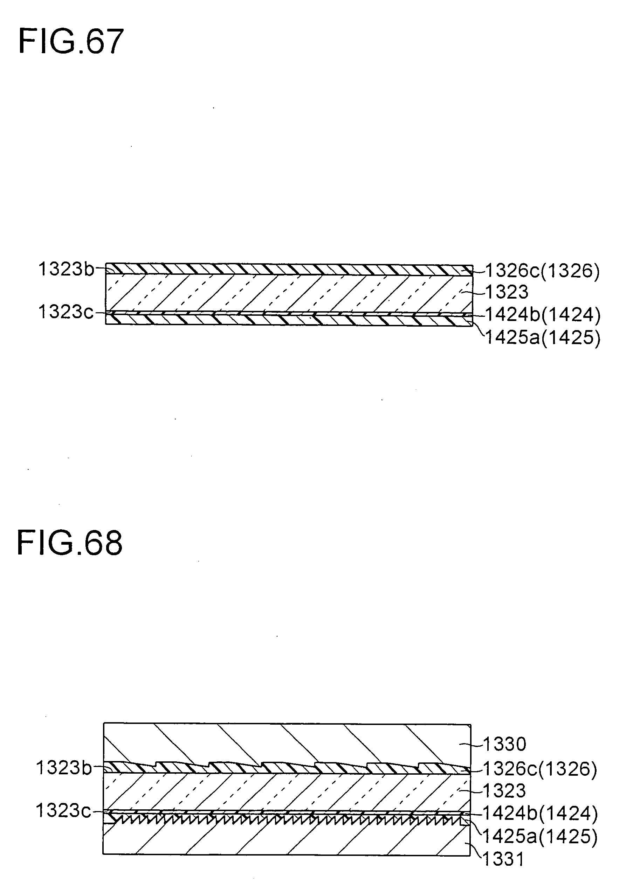

[Fig. 67] A cross-sectional view illustrating the method of manufacturing the light guide plate of the backlight device shown in Fig. 64 and according to the seventeenth embodiment of the present invention;
[Fig. 68] A cross-sectional view illustrating the method of manufacturing the light guide plate of the backlight device shown in Fig. 64 and according to the seventeenth embodiment of the present invention;

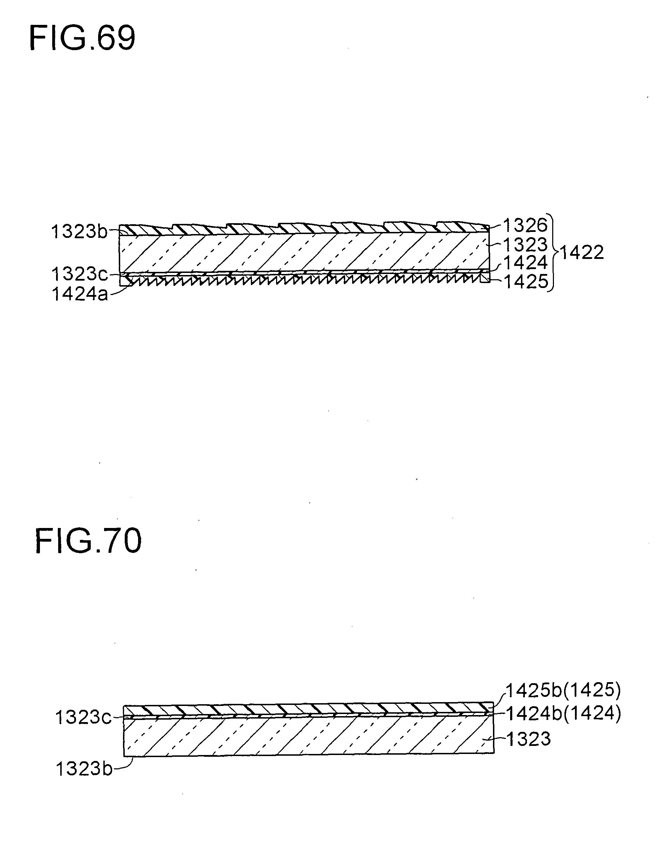

[Fig. 69] A cross-sectional view illustrating the method of manufacturing the light guide plate of the backlight device shown in Fig. 64 and according to the seventeenth embodiment of the present invention;
[Fig. 70] A cross-sectional view illustrating the method of manufacturing the light guide plate of the backlight device shown in Fig. 64 and according to the seventeenth embodiment of the present invention;

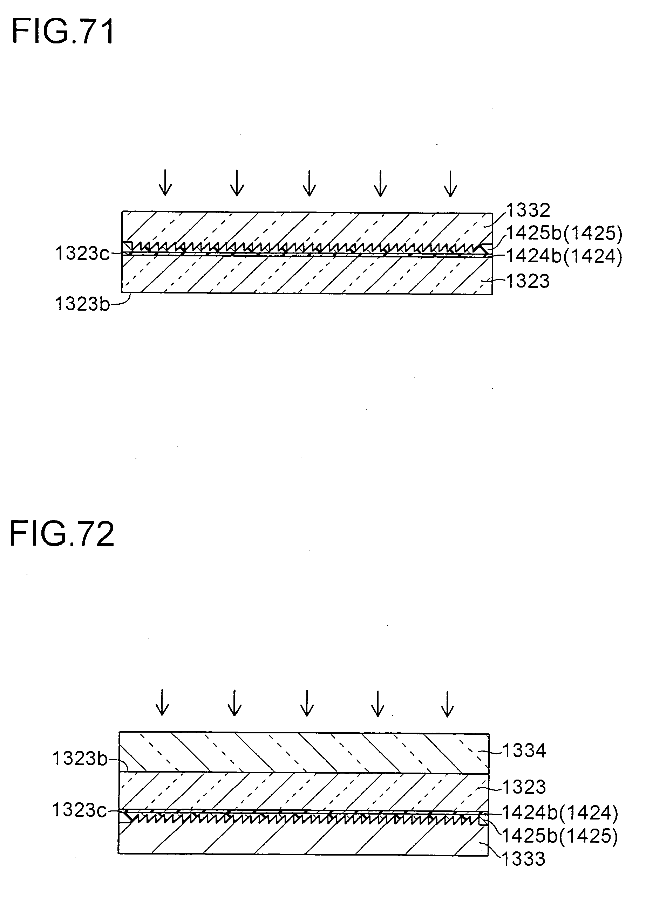

[Fig. 71] A cross-sectional view illustrating the method of manufacturing the light guide plate of the backlight device shown in Fig. 64 and according to the seventeenth embodiment of the present invention;
[Fig. 72] A cross-sectional view illustrating the method of manufacturing the light guide plate of the backlight device shown in Fig. 64 and according to the seventeenth embodiment of the present invention;

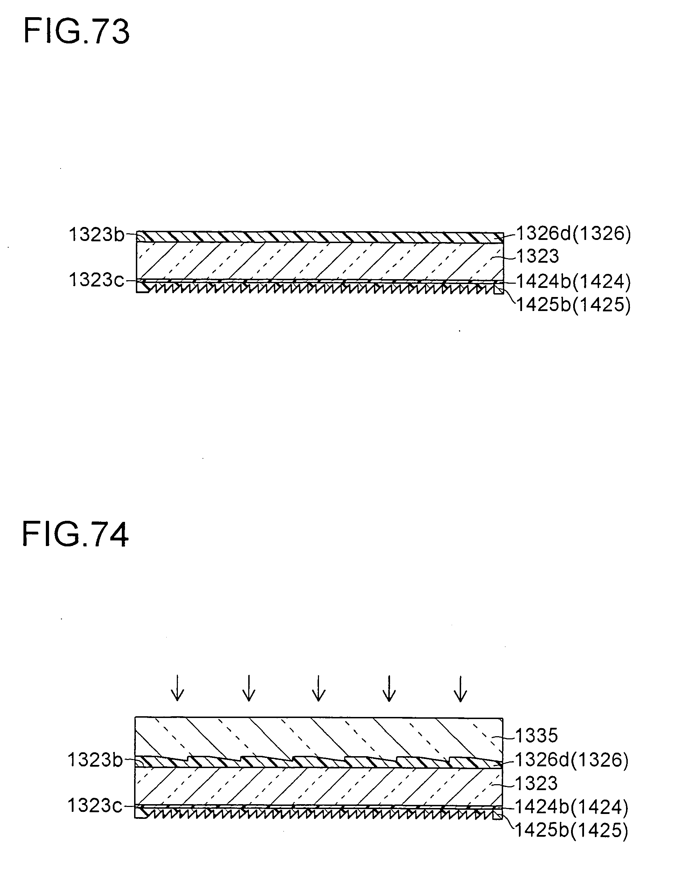

[Fig. 73] A cross-sectional view illustrating the method of manufacturing the light guide plate of the backlight device shown in Fig. 64 and according to the seventeenth embodiment of the present invention;
[Fig. 74] A cross-sectional view illustrating the method of manufacturing the light guide plate of the backlight device shown in Fig. 64 and according to the seventeenth embodiment of the present invention;

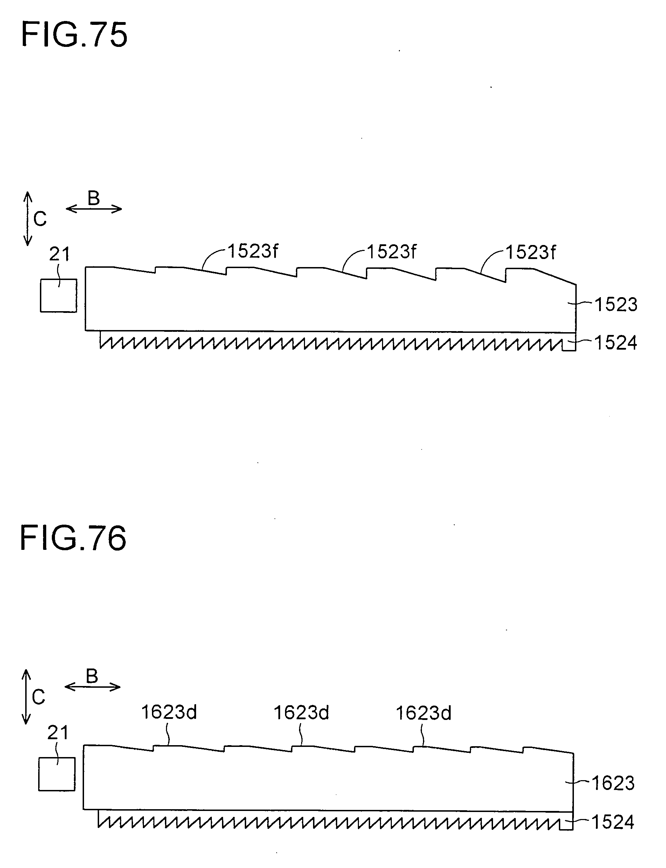

[Fig. 75] A side view showing the structure of a backlight device according to a first variation of the present invention;
[Fig. 76] A side view showing the structure of a backlight device according to a second variation of the present invention;
[Fig. 77] A side view showing the structure of a backlight device according to a third variation of the present invention;
[Fig. 78] A side view showing the structure of a display device of one conventional example;
[Fig. 79] A side view showing the structure of a conventional display device incorporating a planar illumination device including a light guide plate having the function of forwardly collecting light;
[Fig. 80] A side view showing the structure of the conventional display device shown in Fig. 79 when seen from the side of LEDs; and
[Fig. 81] A plan view showing the structure of the conventional display device shown in Fig. 79.

**Best Mode for Carrying Out the Invention**

Embodiments of the present invention will be described below with reference to accompanying drawings.

(First embodiment)

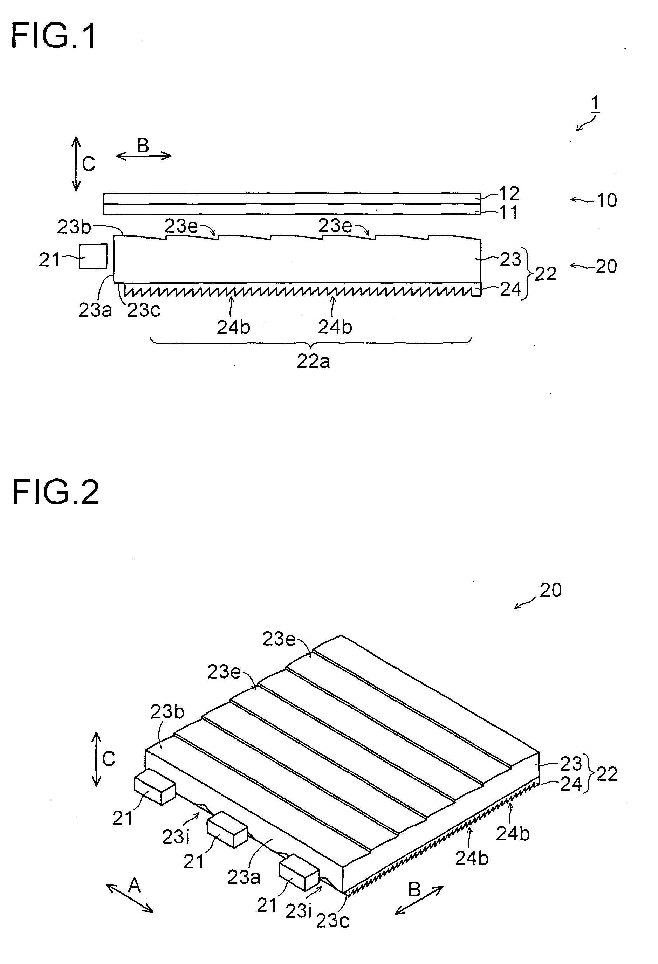

The structure of a liquid crystal display device 1 incorporating a backlight device 20 according to a first embodiment of the present invention will first be described with reference to Figs. 1 to 6.

As shown in Fig. 1, the liquid crystal display device 1 according to the first embodiment of the present invention includes: a liquid crystal display panel 10; the backlight device 20 that is arranged on the side of the back surface of the liquid crystal display panel 10; and a frame (not shown) that accommodates the liquid crystal display panel 10 and the backlight device 20. The liquid crystal display device 1 is one example of a "display device" according to the present invention; the liquid crystal display panel 10 is one example of a "display panel" according to the present invention. The backlight device 20 is one example of a "planar illumination device" according to the present invention.

The liquid crystal display panel 10 includes: an AM substrate (active matrix substrate) 11; an opposite substrate 12 that is arranged opposite the AM substrate 11; and a liquid crystal layer (not shown) that is arranged between the AM substrate 11 and the opposite substrate 12.

As shown in Figs. 1 and 2, the backlight device 20 is an edge light type backlight device. The backlight device 20 includes: a plurality of LEDs 21 that are aligned in an A direction (see Fig. 2); and a light guide plate 22 that guides light from the LEDs 21. The LEDs 21 are one example of a "light source" and a "light-emitting element" according to the present invention; the light guide plate 22 is one example of a "light guide member" according to the present invention. The A-direction is one example of a "first direction" according to the present invention.

In the first embodiment, as shown in Fig. 1, optical sheets such as a diffusion plate and a light collecting lens are not provided between the light guide plate 22 of the backlight device 20 and the liquid crystal display panel 10.

In the first embodiment, the light guide plate 22 is formed with: a light guide body 23 that has a light entering surface 23a which light from the LEDs 21 enters; and a low refractive index layer 24 that has a lower refractive index than the light guide body 23. The refractive index (n1) of the light guide body 23 is equal to or more than about 1.42; the refractive index preferably falls within a range from about 1.59 to about 1.65. The refractive index (n2) of the low refractive index layer 24 is less than about 1.42; the refractive index preferably falls within a range from about 1.10 to about 1.35. The relationship "$n1 / n2 > 1.18$ (= 1.59 / 1.35)" preferably holds true between the refractive index (n1) of the light guide body 23 and the refractive index (n2) of the low refractive index layer 24.

When the light guide body 23 is formed of an acrylic resin or the like, it is possible to acquire a refractive index of about 1.49 as the refractive index of the light guide body 23; when the light guide body 23 is formed of polycarbonate or the like, it is possible to acquire a refractive index of about 1.59 as the refractive index of the light guide body 23. When the light guide body 23 is formed of the acrylic resin, as compared with a case where the light guide body 23 is formed of polycarbonate, it is possible to further enhance translucency. When the low refractive index layer 24 is formed of fluorine acrylate or the like, it is possible to acquire a refractive index of about 1.35 as the refractive index of the low refractive index layer 24. When the low refractive index layer 24 is formed of resin or the like that contains hollow particles such as a nano-sized inorganic filler, it is possible to acquire a refractive index of about 1.30 or less as the refractive index of the low refractive index layer 24.

The light guide body 23 is formed substantially in the shape of a rectangular parallelepiped. Specifically, the light guide body 23 is formed such that the light emitting surface 23b and the back surface 23c of the light guide body 23 are substantially parallel to each other. The light emitting surface 23b is one example of a "front surface of a light guide body", a "surface where a first reflective portion is provided" and a "front surface of a light guide member" according to the present invention. The back surface 23c is one example of a "surface where a third reflective portion is provided" according to the present invention.

The light entering surface 23a of the light guide body 23 is arranged substantially parallel to the light emitting surface of the LEDs 21.

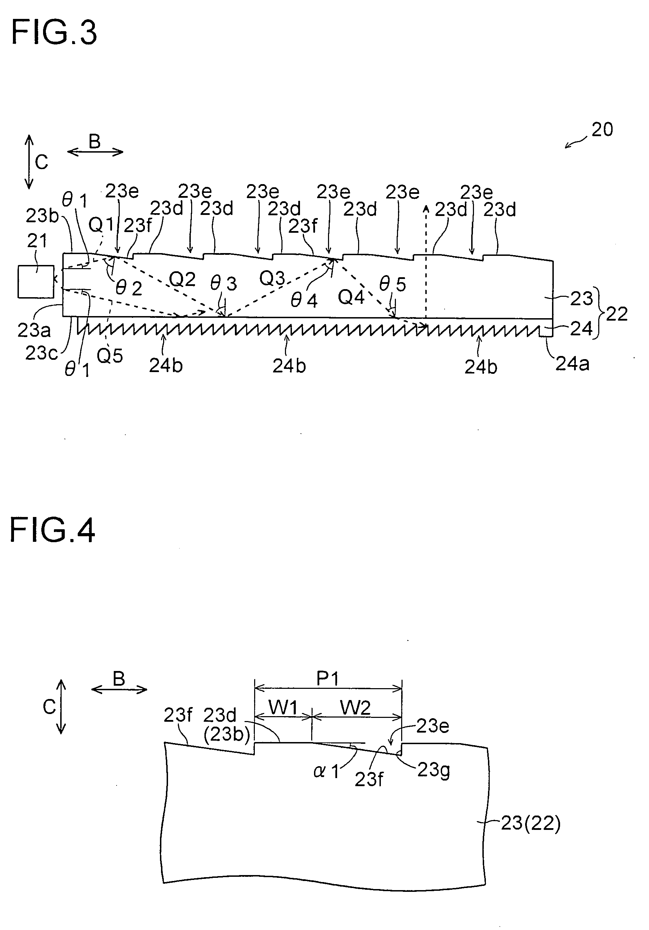

In the first embodiment, as shown in Fig. 3, in the light emitting surface 23b of the light guide body 23, along the direction (B-direction (direction perpendicular to the A-direction) of the normal to the light entering surface 23a of the light guide body 23, a plurality of flat surface portions 23d and a plurality of concave prisms 23e are formed alternately. In other words, the flat surface portion 23d is formed between the concave prisms 23e adjacent to each other in the B-direction. These flat surface portions 23d and the prisms 23e are formed to extend in the A-direction (see Fig. 2). The flat surface portion 23d is one example of a "first flat surface portion" according to the present invention; the prism 23e is one example of a "first reflective portion" according to the present invention.

The flat surface portions 23d are formed within the same surface as the light emitting surface 23b, and are formed substantially parallel to the back surface 23c. As shown in Fig. 4, the flat surface portion 23d is formed to have a predetermined width W1 in the B-direction.

The concave prism 23e is formed with an inclination surface 23f that is inclined with respect to the flat surface portion 23d (the light emitting surface 23b) and a vertical surface 23g that is substantially vertical with respect to the flat surface portion 23d (the light emitting surface 23b). The inclination surface 23f is one example of a "first inclination surface" according to the present invention.

As shown in Fig. 3, the inclination surface 23f is formed such that, as the inclination surface 23f extends away from the LEDs 21, the inclination surface 23f extends closer to the back surface 23c. Hence, as will be described later, light emitted from the LEDs 21 is repeatedly reflected between the inclination surfaces 23 f (the prisms 23e) and the back surface 23c of the light guide body 23, and thus the angle of incidence of the light with respect to the back surface 23c of the light guide body 23 is gradually decreased.

As shown in Fig. 4, an inclination angle $\alpha 1$ at which the inclination surface 23f is inclined with respect to the flat surface portion 23d is equal to or less than about 5°; the inclination angle preferably falls within a range from about 0.1° to about 3.0°.

The inclination surface 23f (the prism 23e) is formed to have a predetermined width W2 in the B-direction. The width W2 of the inclination surface 23f (the prism 23e) in the B-direction is equal to or less than about 0.25 mm; the width W2 preferably falls within a range from about 0.01 mm to about 0.10 mm. The inclination surfaces 23f (the prisms 23e) are arranged in the B-direction with a predetermined pitch P1 (= W1 + W2).

The width W1 of the flat surface portion 23d in the B-direction, the inclination angle $\alpha 1$ of the inclination surface 23f, the width W2 of the inclination surface 23f (the prism 23e) in the B-direction and the pitch P1 of the inclination surfaces 23f (the prisms 23e) in the B-direction may be constant regardless of the distance from the LEDs 21.

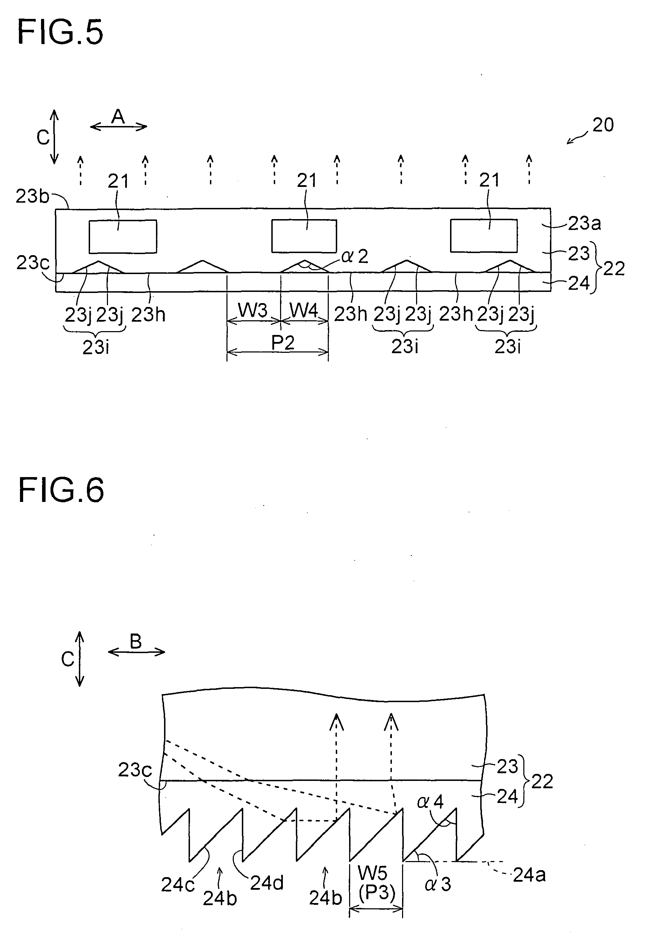

In the first embodiment, as shown in Fig. 5, in the back surface 23c of the light guide body 23, a plurality of flat surface portions 23h and a plurality of concave prisms 23i are alternately formed along the A-direction. In other words, the flat surface portion 23h is formed between the prisms 23i adjacent to each other along the A-direction. The flat surface portions 23h and the prisms 23i are formed to extend in the direction (B-direction) of the normal to the light entering surface 23a of the light guide body 23. The flat surface portion 23h is one example of a "second flat surface portion" according to the present invention; the prism 23i is one example of a "third reflective portion" according to the present invention.

The flat surface portions 23h are formed within the same surface as the back surface 23c. The flat surface portion 23h is formed to have a predetermined width W3 in the A-direction.

The concave prism 23i is formed with a pair of inclination surfaces 23j that is inclined with respect to the flat surface portion 23h (the back surface 23c). The angle (the vertex angle of the prism 23i) $\alpha 2$ formed by the pair of inclination surfaces 23j preferably falls within a range from about 120° to about 140°.

The pair of inclination surfaces 23j (the prism 23i) is formed to have a predetermined width W4 in the A-direction. The width W4 of the pair of inclination surfaces 23j (the prism 23i) in the A-direction is equal to or less than about 0.1 mm; the width W4 preferably falls within a range from about 0.010 mm to about 0.030 mm.

The pitch P2 (= W3 + W4) of the prisms 23i in the A-direction preferably satisfies a formula "$P2 \geq W4 \times 2$." In other words, the width W3 of the flat surface portion 23h in the A-direction is preferably equal to or more than the width W4 of the pair of inclination surfaces 23j in the A-direction.

The prisms 23i are preferably formed to have the same shape, the same size and the same pitch regardless of the position where the prism 23i is formed within the surface of the light guide body 23. In other words, the width W3 of the flat surface portion 23h in the A-direction, the angle (the vertex angle of the prism 23i) $\alpha 2$ formed by the pair of inclination surfaces 23j, the width W4 of the pair of inclination surfaces 23j (the prism 23j) in the A-direction and the pitch P2 of the pairs of inclination surfaces 23j (the prism 23j) in the A-direction are preferably set constant on an individual basis.

As shown in Fig. 3, the low refractive index layer 24 is integrally formed on the back surface 23c of the light guide body 23 without the intervention of an air layer. The low refractive index layer 24 has a thickness of, for example, about 10 $\mu$m to about 50 $\mu$m.

In the back surface 24a (the back surface of the light guide plate 22) of the low refractive index layer 24, a plurality of concave prisms 24b are formed. The prisms 24b are formed in at least the entire light emitting region 22a (see Fig. 1) of the light guide plate 22. The light emitting region 22a of the light guide plate 22 is provided a predetermined distance away from the light entering surface 23a, and is arranged to correspond to the display region of the liquid crystal display panel 10. The prisms 24b (the low refractive index layer 24) are not necessarily needed to be formed a distance away from the light entering surface 23a. The prisms 24b are formed to extend in the A-direction (see Fig. 2). The prism 24b is one example of a "second reflective portion" according to the present invention.

As shown in Fig. 6, the concave prism 24b is formed with: an inclination surface 24c that is inclined with respect to the back surface 24a; and a vertical surface 24d that is vertical with respect to the back surface 24a. The inclination surface 24c is one example of a "second inclination surface" according to the present invention.

In the first embodiment, the inclination surface 24c is formed to be not curved but flat. The inclination surface 24c is formed such that, as the inclination surface 24c extends away from the LEDs 21, the inclination surface 24c extends closer to the light guide body 23. An inclination angle $\alpha 3$ at which the inclination surface 24c is inclined with respect to the back surface 24a preferably falls within a range from about 40° to about 50°. In other words, the angle formed by the inclination surface 24c and the vertical surface 24d preferably falls within a range from about 50° to about 40°.

The inclination surface 24c (the prism 24b) is formed to have a predetermined width W5 in the B-direction. The width W5 of the inclination surface 24c (the prism 24b) in the B-direction is equal to or less than about 0.1 mm; the width W5 preferably falls within a range from about 0.010 mm to about 0.025 mm.

The inclination surfaces 24c (the prisms 24b) are arranged in the B-direction with a pitch P3 equal to the width W5. In other words, a plurality of prisms 24b are formed in the B-direction without any space; no flat surface portion is provided between the prism 24b and the prism 24b.

Regardless of the position where the prism 24b is formed within the surface of the low refractive index layer 24, in substantially the entire back surface 24a of the low refractive index layer 24, the prisms 24b may be formed to have the same shape, the same size and the same pitch. The prisms 24b are formed to have the same shape, the same size and the same pitch in this way, and thus it is possible to reduce a change in the light collecting property within the surface of the low refractive index layer 24. It is therefore possible to make uniform the brightness of the liquid crystal display panel 10.

The optical path of light emitted from the LEDs 21 of the backlight device 20 according to the first embodiment will now be described with reference to Figs. 3 to 6.

The light emitted from the LEDs 21 has high intensity in the forward direction (the B-direction) of the LEDs 21, and spreads at an angle of $\pm$ 90° with respect to the forward direction (the B-direction) both in the A-direction and in the C-direction. As shown in Fig. 3, the light emitted from the LEDs 21 is refracted when entering the light entering surface 23a of the light guide body 23 (the light guide plate 22), and spreads at an angle of $\pm$ θ1 with respect to the forward direction (the B-direction) both in the A-direction and in the C-direction. The angle θ1 is a critical angle between the light guide body 23 and the air layer; a formula "$\theta 1 = \arcsin(1 / n1)$" holds true.

Of the light that has entered the light entering surface 23a of the light guide body 23, light Q1 that travels toward the light emitting surface 23b of the light guide body 23 travels toward the inclination surface 23f of the prism 23e at an angle of incidence that is equal to or more than θ2 (= 90° - θ1 - α1), and much of the light is totally reflected by the prism 23e (the interface between the light emitting surface 23b of the light guide body 23 and the air layer) of the light guide body 23 toward the back surface 23c..

Then, light Q2 that has been totally reflected by the prism 23e travels toward the back surface 23c (the low refractive index layer 24) at an angle of incidence that is equal to or more than θ3 (= 90° - θ1 - α1 $\times$ 2). Here, of the light Q2 that travels toward the back surface 23c, only light incident at an angle of incidence that is less than a critical angle between the light guide body 23 and the low refractive index layer 24 enters the low refractive index layer 24. On the other hand, of the light Q2 that travels toward the back surface 23c, light incident at an angle of incidence that is equal to or more than the critical angle between the light guide body 23 and the low refractive index layer 24 is totally reflected toward the light emitting surface 23b by the back surface 23c (the interface between the light guide body 23 and the low refractive index layer 24) of the light guide body 23.

Light Q3 that has been totally reflected by the back surface 23c travels toward the inclination surface 23f of the prism 23e at an angle of incidence that is equal to or more than θ4 (= 90° - θ1 - α1 $\times$ 3), and is totally reflected by the prism 23e of the light guide body 23 toward the back surface 23c.

Then, light Q4 that has been totally reflected by the prism 23e travels toward the back surface 23c (the low refractive index layer 24) at an angle of incidence that is equal to or more than θ5 (= 90° - θ1 - α1 $\times$ 4). Here, of the light Q4 that travels toward the back surface 23c, only light incident at an angle of incidence that is less than the critical angle between the light guide body 23 and the low refractive index layer 24 enters the low refractive index layer 24. On the other hand, of the light Q4 that travels toward the back surface 23c, light incident at an angle of incidence that is equal to or more than the critical angle between the light guide body 23 and the low refractive index layer 24 is totally reflected toward the light emitting surface 23b by the back surface 23c of the light guide body 23.

As described above, the light emitted from the LEDs 21 is repeatedly reflected between the prism 23e (the light emitting surface 23b) and the back surface 23c of the light guide body 23, and thus the light is guided such that the angle of incidence with respect to the back surface 23c of the light guide body 23 is gradually reduced, and enters the low refractive index layer 24.

The light emitted from the LEDs 21 is repeatedly reflected between the prism 23e and the back surface 23c of the light guide body 23, and thus the angle of incidence with respect to the back surface 23c of the light guide body 23 is reduced by about (α1 $\times$ 2) at a time. Hence, the angle of spread of the light in the B-direction that has entered the low refractive index layer 24 is equal to or less than about (α1 $\times$ 2).

Of the light that has entered the light entering surface 23a of the light guide body 23, light Q5 that travels toward the back surface 23c of the light guide body 23 is likewise repeatedly reflected between the back surface 23c of the light guide body 23 and the prism 23e (the light emitting surface 23b), and enters the low refractive index layer 24.

Thereafter, as shown in Fig. 6, substantially all the light that has entered the low refractive index layer 24 is reflected totally and forwardly (toward the liquid crystal display panel 10) by the inclination surface 24c (the interface between the inclination surface 24c of the prism 24b and the air layer) of the prism 24b, or is transmitted and is then totally reflected. Then, the light that has been totally reflected enters again the light guide body 23, and is emitted forwardly (toward the liquid crystal display panel 10) through the light emitting surface 23b (see Fig. 3).

Since the refractive index (n1) of the light guide body 23 is equal to or more than about 1.42 (from about 1.59 to about 1.65) and the refractive index of the air layer is about 1, the critical angle between the light guide body 23 and the air layer is lower than that between the light guide body 23 and the low refractive index layer 24. Hence, almost no light is emitted from the light emitting surface 23b without passing through the prisms 24b of the low refractive index layer 24.

Since, in the first embodiment, as shown in Fig. 5, the prisms 23i are formed in the back surface 23c of the light guide body 23, part of light that travels toward the back surface 23c of the light guide body 23 is diffused (reflected) toward both sides of the A-direction by the inclination surfaces 23j of the prisms 23i.

Here, as seen from the side of the light entering surface 23a of the light guide body 23, light incident at a large angle of incidence with respect to the back surface 23c of the light guide body 23 is reflected by the inclination surface 23j of the prism 23i, and thus the angle of incidence with respect to the back surface 23c of the light guide body 23 is reduced.

Then, the light from the LEDs 21 enters the low refractive index layer 24 as described above while being diffused in the A-direction.

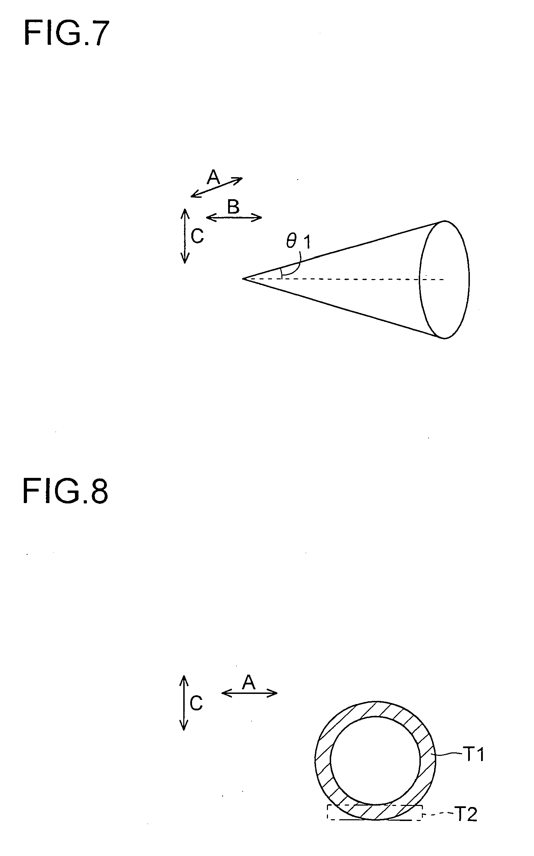

The reason why the spread of the light emitted from the light guide plate 22 in the A-direction is suppressed will now be described in detail with reference to Figs. 7 to 12.

The light emitted from the LEDs 21 spreads at an angle of ± 90° with respect to the forward direction (the B-direction) of the LEDs 21 both in the A-direction and in the C-direction. The light emitted from the LEDs 21 is refracted when entering the light entering surface 23a of the light guide body 23, and spreads at an angle of ± θ1 with respect to the B-direction both in the A-direction and in the C-direction. The angle θ1 is the critical angle between the light guide body 23 and the air layer.

Here, when, within the light guide body 23, the light is present within an angle range θ with respect to the B-direction both in the A-direction and the C-direction, formula (1) below holds true:

$$\theta \leq \theta 1 = \arcsin(1 / n1) \quad (1)$$

When the critical angle between the light guide body 23 and the low refractive index layer 24 is assumed to be ϕ, only light of a region that satisfies formula (2) below may enter the low refractive index layer 24:

$$\pi / 2 - \theta < \phi = \arcsin(n2 / n1) \quad (2)$$

When this region is shown diagrammatically, it is represented by a region T1 (hatched region) of Fig. 8. As will be described later, of light that has just entered the light guide body 23, only light of a region T2 of Fig. 8 can actually enter the low refractive index layer 24. The reason for this will be described below.

When a component of the light entering the light guide body 23 that spreads in the C-direction is assumed to be $\theta_C$, the angle of incidence at which the light enters the low refractive index layer 24 is n / 2 - $\theta_C$. Since the conditions under which the light enters the low refractive index layer 24 are $\pi / 2 - \theta_C < \phi$ and $0 < \pi / 2 - \theta_C < 90$, formula (3) below is given:

$$\cos(\pi / 2 - \theta_C) = \sin \theta_C > \cos \phi \quad (3)$$

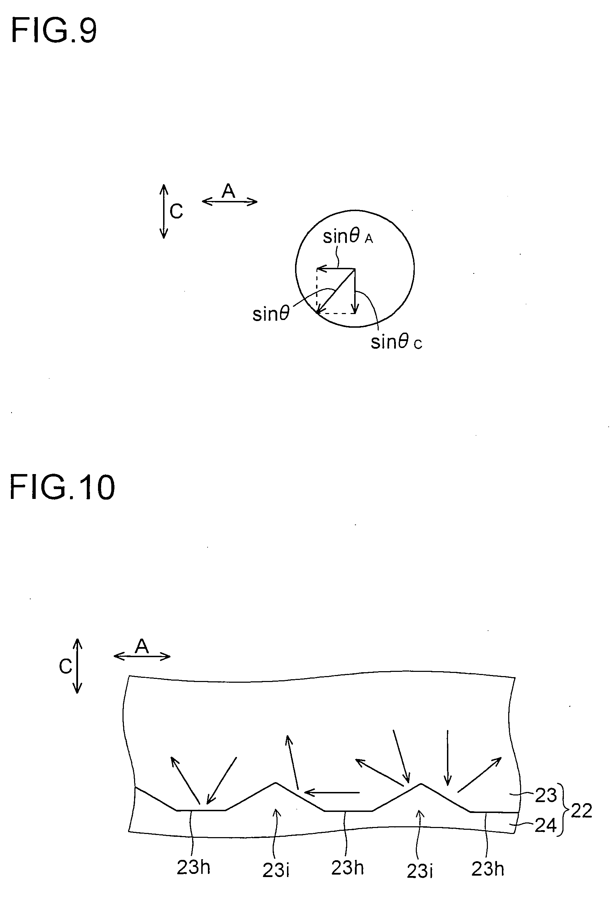

When a component of the light entering the light guide body 23 that spreads in the A-direction is assumed to be $\theta_A$, it follows from Fig. 9 that $\theta_A$ satisfies formula (4) below:

$$\sin^2 \theta_A = \sin^2 \theta - \sin^2 \theta_C \quad (4)$$

Here, since $\sin \theta \leq \sin \theta 1$ and $\cos \phi < \sin \theta_C \leq \sin \theta 1$ are given by formulas (1) and (3) above, formula (5) below is given by formula (4) above:

$$0 \leq \sin^2 \theta_A < \sin^2 \theta 1 - \cos^2 \phi \quad (5)$$

For example, when n1 = 1.59 and n2 = 1.35, the permissible range of $\theta_A$ is expressed by $0 \leq \theta_A < 19.95$, and thus the spread of the light in the A-direction can be suppressed. Although the effect of suppressing the spread of the light in the A-direction is slightly reduced by the prisms 23i, since the width W3 of the flat surface portion 23h in the A-direction is equal to or more than the width W4 of the prism 23i in the A-direction, much of the effect of suppressing the spread of the light in the A-direction can be maintained.

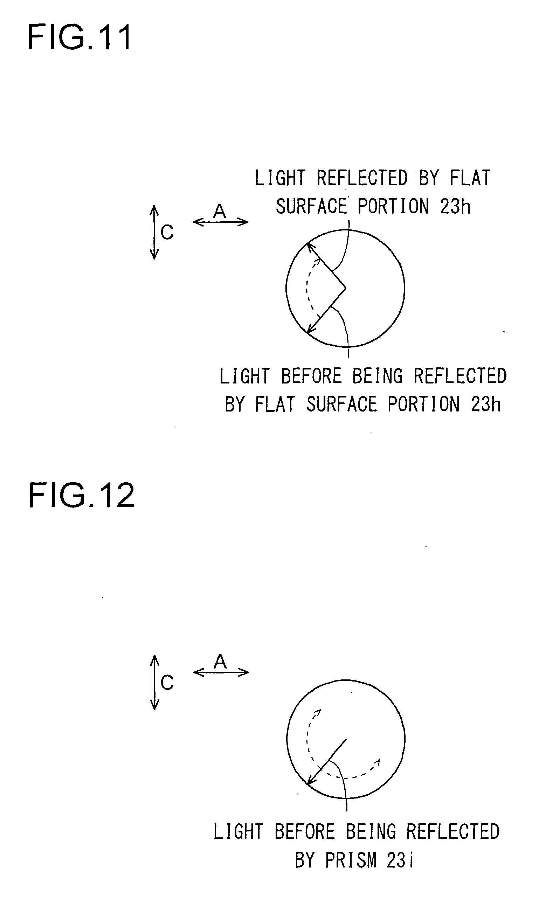

The influences of the flat surface portions 23h and the prisms 23i will be further described. With respect to the light reflected by the flat surface portions 23h of the light guide body 23, as shown in Figs. 10 and 11, the spread of the light both in the B-direction and the A-direction is maintained, and the orientation of the C-direction is reversed. On the other hand, with respect to light that is reflected by the prisms 23i of the light guide body 23, as shown in Figs. 10 and 12, the spread of the light in the B-direction is maintained, and the components of light that spreads both in the C-direction and the A-direction are changed.

Thus, it is possible to suppress uneven spread of the light both in the C-direction and the A-direction within the light guide body 23. In other words, since the prisms 23i change the spread of the light both in the C-direction and the A-direction within the light guide body 23 at any time, it is possible to make the components of the light in the C-direction and the A-direction equivalent to each other.

Hence, with respect to the light of the region T1 satisfying formula (2) above, the components of the light that spreads both in the C-direction and the A-direction are changed by the prisms 23i, and thus, when the light satisfies formula (3) above, the light enters the low refractive index layer 24. Consequently, it is possible to uniformly emit, from the light guide plate 22, the light in which the spread of the light in the A-direction is suppressed.

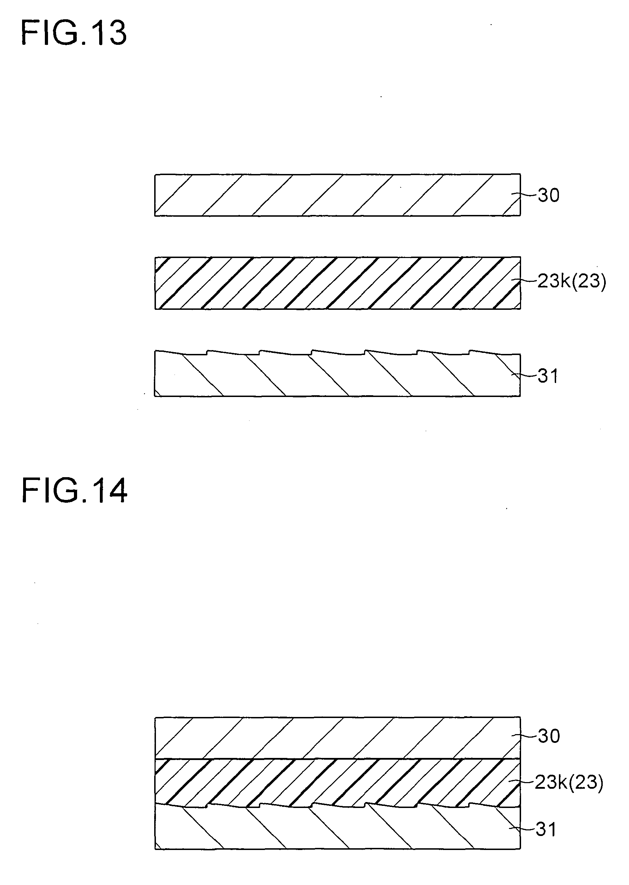

The method of manufacturing the light guide plate 22 of the backlight device 20 according to the first embodiment will now be described with reference to Figs. 13 to 18.

The light guide body 23 is first formed with an imprint method using heat. Specifically, as shown in Fig. 13, a film material 23k made of a transparent resin is arranged between an upper mold 30 and a lower mold 31. Then, as shown in Fig. 14, the film material 23k is heated and pressurized by the upper mold 30 and the lower mold 31. In this way, the film material 23k is formed into the desired shape.

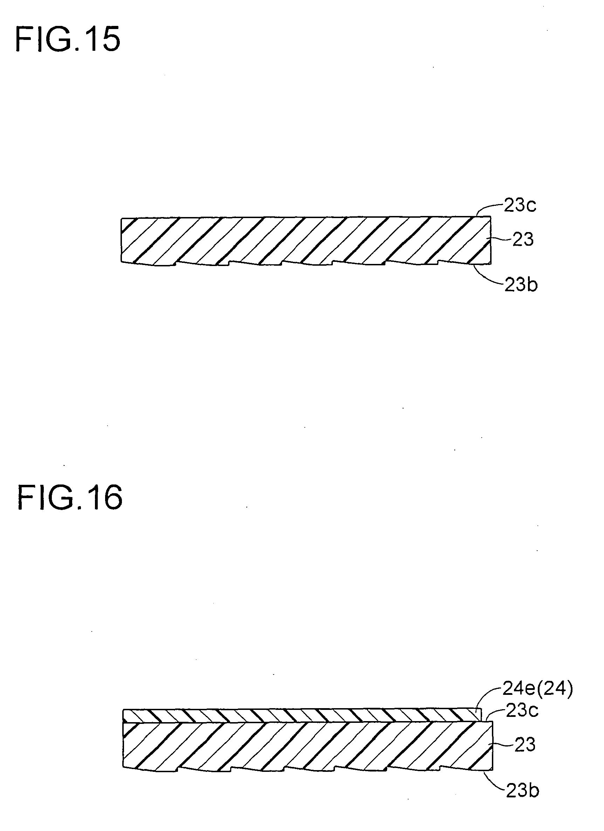

Then, the film material 23k is separated from the upper mold 30 and the lower mold 31 and is cooled, and is divided into individual pieces, with the result that the light guide body 23 can be obtained as shown in Fig. 15.

Although, instead of the imprint method, the light guide body 23 can be formed by injection molding, when the light guide body 23 is formed using the film material 23k with the imprint method, it is possible to manufacture the light guide body 23 with a roll-to-roll method. In this way, it is possible not only to reduce the manufacturing time but also to reduce the manufacturing cost.

Thereafter, with the imprint method using UV light (ultraviolet rays), the low refractive index layer 24 is formed on the back surface 23c of the light guide body 23. Specifically, as shown in Fig. 16, a UV cured resin 24e made of a transparent resin is applied on the back surface 23c of the light guide body 23. Here, since the light emitting surface 23b and the back surface 23c of the light guide body 23 are formed substantially parallel to each other, it is possible to apply the UV cured resin 24e such that its thickness is uniform.

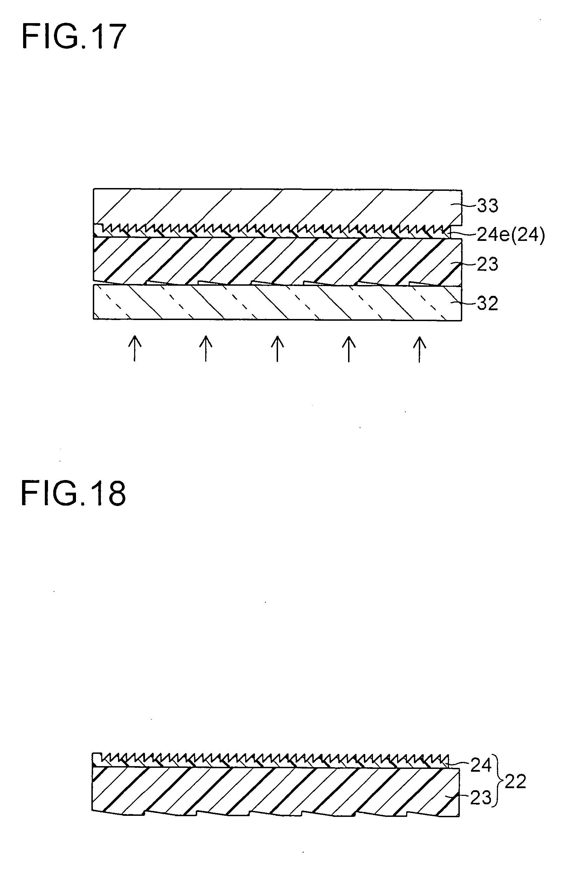

As shown in Fig. 17, the light guide body 23 and the UV cured resin 24e are arranged on a quartz substrate 32, and the light guide body 23 and the UV cured resin 24e are sandwiched between the quartz substrate 32 and a mold 33. Then, the UV light is applied from the side of the quartz substrate 32, and thus the UV cured resin 24e is cured into the low refractive index layer 24.

Then, as shown in Fig. 18, the light guide plate 22 is obtained that is composed of the light guide body 23 and the low refractive index layer 24 which are formed into the desired shapes.

The processes up to the formation of the low refractive index layer 24 may be performed with the roll-to-roll method, and thereafter the light guide plate 22 (the light guide body 23 and the low refractive index layer 24) may be divided into individual pieces.

In the first embodiment, as described above, in the light emitting surface 23b of the light guide body 23, a plurality of prisms 23e that gradually reduce the angle of incidence of the light from the LEDs 21 with respect to the back surface 23c of the light guide body 23 are provided, and thus the light from the LEDs 21 is guided while being reflected repeatedly between the light emitting surface 23b and the back surface 23c of the light guide body 23, with the result that the angle of incidence of the light with respect to the back surface 23c of the light guide body 23 is gradually reduced. Then, when the angle of incidence of the light with respect to the back surface 23c of the light guide body 23 becomes lower than the critical angle between the light guide body 23 and the low refractive index layer 24, the light from the LEDs 21 enters the low refractive index layer 24. Hence, the angle of spread of the light in the B-direction that enters the low refractive index layer 24 is reduced, and the angle of spread of the light in the B-direction that is reflected off the interface between the back surface 24a of the low refractive index layer 24 and the air layer is also reduced. In other words, it is possible not only to enhance the light collecting property but also to enhance the brightness of the liquid crystal display panel 10. Consequently, since it is unnecessary to provide a plurality of optical sheets such as a diffusion plate and a light collecting lens on the light guide plate 22, it is possible not only to reduce the thickness of the backlight device 20 but also to reduce an increase in the manufacturing cost.

Moreover, since it is unnecessary to provide a plurality of optical sheets, no loss of light is produced when the light passes through the optical sheets. Thus, it is possible to enhance the efficiency of use of light.

A plurality of prisms 23e that gradually reduce the angle of incidence of the light with respect to the back surface 23c of the light guide body 23 are provided, and thus the light from the LEDs 21 is guided while being reflected repeatedly between the light emitting surface 23b and the back surface 23c of the light guide body 23, with the result that, as the light travels away from the LEDs 21, the angle of incidence with respect to the back surface 23c of the light guide body 23 is reduced and the light is more likely to enter the low refractive index layer 24. In this way, both in a part which is close to the LEDs 21 and in which a large amount of light (luminous flux) is present and in a part which is distant from the LEDs 21 and in which a small amount of light (luminous flux) is present, it is possible to make uniform the amount of light entering the low refractive index layer 24. Consequently, since light can be uniformly emitted from the entire light emitting region 22a of the light guide plate 22, it is possible to make uniform the brightness of the liquid crystal display panel 10.

As described above, in the first embodiment, a plurality of prisms 24b that reflect forwardly the light from the LEDs 21 are formed in substantially the entire back surface 24a of the low refractive index layer 24 over the light emitting region 22a of the light guide plate 22, and thus the light can be uniformly reflected by the prisms 24b over substantially the entire light emitting region 22a of the light guide plate 22. In this way, since it is possible to more uniformly emit light from the entire light emitting region 22a of the light guide plate 22, it is possible not only to reduce the production of dot unevenness but also to make more uniform the brightness of the liquid crystal display panel 10.

As described above, in the first embodiment, a plurality of prisms 24b have the function of totally reflecting the light from the LEDs 21, and thus it is possible to suppress the emission of light that has entered the low refractive index layer 24 through the light guide body 23 from the back surface 24a of the low refractive index layer 24. In this way, since the loss of the light is reduced, it is possible to further enhance the efficiency of use of light.

Since the prisms 24b have the function of totally reflecting the light from the LEDs 21, unlike the case where the metallic mirror is provided on the back surface 24a of the low refractive index layer 24 and the light is reflected by the metallic mirror, the light is not absorbed by the metallic mirror when the light is reflected. Thus, it is possible to further enhance the efficiency of use of light.

Since it is unnecessary to provide the metallic mirror on the back surface 24a of the low refractive index layer 24, as compared with the case where the metallic mirror is provided on the back surface 24a of the low refractive index layer 24, it is possible not only to prevent the manufacturing time of the light guide plate 22 from being elongated but also to reduce an increase in the manufacturing cost.

In the first embodiment, as described above, the light emitting surface 23b and the back surface 23c of the light guide body 23 are formed substantially parallel to each other, and thus it is possible to easily form the low refractive index layer 24 on the back surface 23c of the light guide body 23 as compared with, for example, the case where the wedge-shaped light guide body in which the back surface is inclined with respect to the light emitting surface is used.

In the first embodiment, as described above, the inclination surface 23f that is inclined with respect to the light emitting surface 23b of the light guide body 23 is provided in the prism 23e, and thus it is possible to easily and gradually reduce the angle of incidence of the light from the LEDs 21 with respect to the back surface 23c of the light guide body 23.

Since, in the first embodiment, as described above, the inclination surface 23f is inclined at an angle of 5° or less (0.1° or more but 3° or less) with respect to the light emitting surface 23b of the light guide body 23, the light is repeatedly reflected between the prisms 23e and the back surface 23c, and thus the angle of incidence of the light with respect to the back surface 23c of the light guide body 23 is reduced by 10° or less (0.2° or more but 6° or less) at a time. In this way, it is possible to more easily and gradually reduce the angle of incidence of the light with respect to the back surface 23c of the light guide body 23.

In the first embodiment, as described above, the flat surface portion 23d is formed between the prisms 23e adjacent to each other in the B-direction, and thus it is possible to suppress the dispersion of the light emitted from the light guide body 23.

Since, in the first embodiment, as described above, a plurality of prisms 24b are continuously formed in the B-direction without any space, and thus the light can be more uniformly reflected by the prisms 24b, it is possible to more uniformly emit the light from the entire light emitting region 22a of the light guide plate 22. In this way, it is possible to make more uniform the brightness of the liquid crystal display panel 10.

Since, in the first embodiment, as described above, a plurality of prisms 24b are formed to have the same shape and the same size, and thus the light can be more uniformly reflected by the prisms 24b, it is possible to more uniformly emit the light from the entire light emitting region 22a of the light guide plate 22.

Since, in the first embodiment, as described above, a plurality of prisms 23i that diffuse the light from the LEDs 21 in the A-direction are formed on the back surface 23c of the light guide body 23, and thus the light can be diffused in the A-direction within the light guide body 23, it is possible to make uniform the brightness of a part of the liquid crystal display panel 10 opposite the front of the LEDs 21 and the brightness of parts of the liquid crystal display panel 10 other than the part opposite the front of the LEDs 21. In other words, it is possible to make more uniform the brightness of the liquid crystal display panel 10.

A plurality of prisms 23i that diffuse the light from the LEDs 21 in the A-direction are formed, and thus, light incident at a large angle of incidence with respect to the back surface 23c of the light guide body 23, as seen from the side of the light entering surface 23a of the light guide body 23, is reflected by the prisms 23i, with the result that it is possible to reduce the angle of incidence with respect to the back surface 23c of the light guide body 23. In this way, since it is possible to suppress the spread of the light entering the low refractive index layer 24 in the A-direction, it is possible to suppress the spread of the light emitted from the light guide plate 22 in the A-direction. Consequently, it is possible not only to enhance the property of collecting the light in the A-direction but also to further enhance the brightness of the liquid crystal display panel 10.

Since, in the first embodiment, as described above, the prism 23i is formed by the pair of inclination surfaces 23j, and thus the light from the LEDs 21 can be diffused toward both sides of the A-direction by the pair of inclination surfaces 23j, it is possible to further enhance the brightness of the liquid crystal display panel 10.

In the first embodiment, as described above, the width W3 of the flat surface portion 23h in the A-direction is equal to or more than the width W4 of the prism 23i in the A-direction, and thus the amount of light that passes through the flat surface portions 23h and then enters the low refractive index layer 24 can be increased as compared with the amount of light that passes through the prisms 23i and then enters the low refractive index layer 24. The light that passes through the flat surface portions 23h and then enters the low refractive index layer 24 is less inclined with respect to the C-direction than the light that passes through the prisms 23i and then enters the low refractive index layer 24. Hence, the width W3 of the flat surface portion 23h in the A-direction is made equal to or more than the width W4 of the prism 23i in the A-direction, and thus it is possible not only to suppress the spread of the light entering the low refractive index layer 24 in the A-direction but also to further enhance the property of collecting the light in the A-direction.

When the LEDs 21 are used as the light source, since it is more likely that the brightness of the part of the liquid crystal display panel 10 opposite the front of the LEDs 21 differs from the brightness of the parts of the liquid crystal display panel 10 other than the part opposite the front of the LEDs 21, it is especially effective to provide, as described above, a plurality of prisms 23i that diffuse the light from the LEDs 21 in the A-direction.

(Second embodiment)

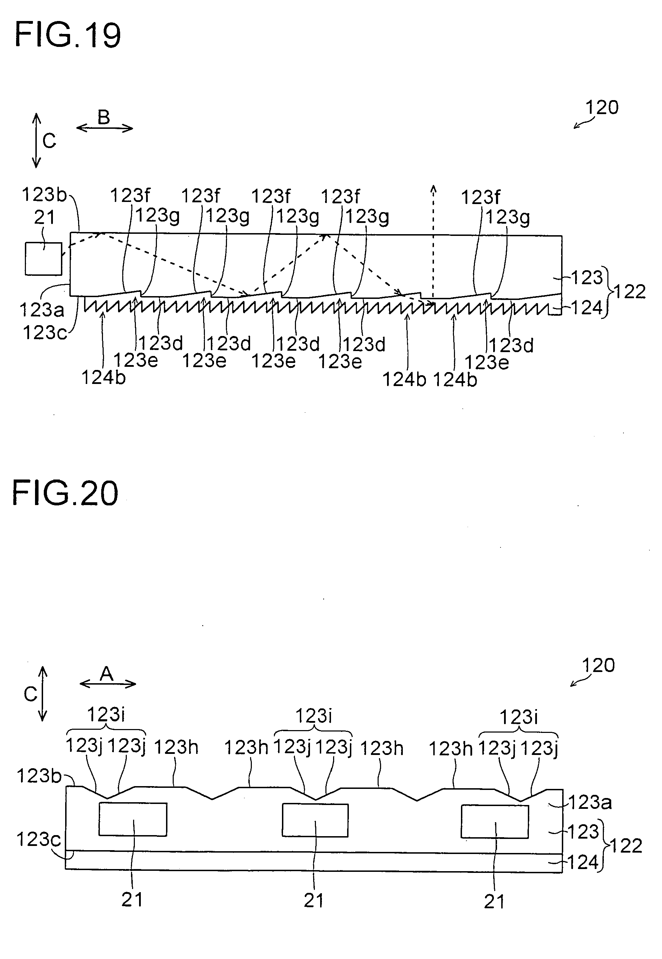

In the second embodiment, with reference to Fig. 19 and 20, a description will be given of a case where, unlike the first embodiment, prisms 123e are formed on the back surface 123c of a light guide body 123.

In a backlight device 120 of the second embodiment of the present invention, as shown in Fig. 19, a light guide plate 122 is formed with: the light guide body 123 that has a light entering surface 123a which the light from the LEDs 21 enters; and a low refractive index layer 124 that has a lower refractive index than the light guide body 123. The backlight device 120 is one example of a "planar illumination device" according to the present invention; the light guide plate 122 is one example of a "light guide member" according to the present invention.

The light guide body 123 of the second embodiment is formed into the shape of a light guide body that is obtained by reversing the light guide body 23 of the first embodiment with respect to the C-direction.

Specifically, in the second embodiment, in the back surface 123c of the light guide body 123, along the direction (B-direction) of the normal to the light entering surface 123a of the light guide body 123, a plurality of flat surface portions 123d and a plurality of concave prisms 123e are formed alternately. The back surface 123c is one example of a "surface where a first reflective portion is provided" according to the present invention; the flat surface portion 123d is one example of a "first flat surface portion" according to the present invention. Moreover, the prism 123e is one example of a "first reflective portion" according to the present invention.

The concave prism 123e is formed with an inclination surface 123f that is inclined with respect to the flat surface portion 123d (the back surface 123c) and a vertical surface 123g that is substantially vertical with respect to the flat surface portion 123d (the back surface 123c). The inclination surface 123f is formed such that, as the inclination surface 123f extends away from the LEDs 21, the inclination surface 123f extends closer to a light emitting surface 123b. The light emitting surface 123b is one example of a "front surface of a light guide body", a "front surface of a light guide member" and a "surface where a third reflective portion is formed" according to the present invention; the inclination surface 123f is one example of a "first inclination surface" according to the present invention.

In the second embodiment, as shown in Fig. 20, in the light emitting surface 123b of the light guide body 123, a plurality of flat surface portions 123h and a plurality of concave prisms 123i are alternately formed along the A-direction. The flat surface portion 123h is one example of a "second flat surface portion" according to the present invention; the prism 123i is one example of a "third reflective portion" according to the present invention.

The concave prism 123i is formed by a pair of inclination surfaces 123j that are inclined with respect to the flat surface portions 123h.

The other portions of the structure of the backlight device 120 according to the second embodiment are the same as in the first embodiment.

In the backlight device 120 of the second embodiment, as shown in Fig. 19 and described in the first embodiment, the light emitted from the LEDs 21 is repeatedly reflected between the light emitting surface 123b of the light guide body 123 and the prism 123e (the back surface 123c), and thus the light is guided such that the angle of incidence with respect to the back surface 123c of the light guide body 123 is gradually reduced.

Then, the light from the LEDs 21 enters the low refractive index layer 124. Thereafter, substantially all the light that has entered the low refractive index layer 124 is totally reflected by prisms 124b, and is emitted forwardly from the light emitting surface 123b. The prism 124b is one example of a "second reflective portion" according to the present invention.

The method of manufacturing the light guide plate 122 of the backlight device 120 according to the second embodiment is the same as in the first embodiment.

The effects of the second embodiment are the same as the first embodiment.

(Third embodiment)

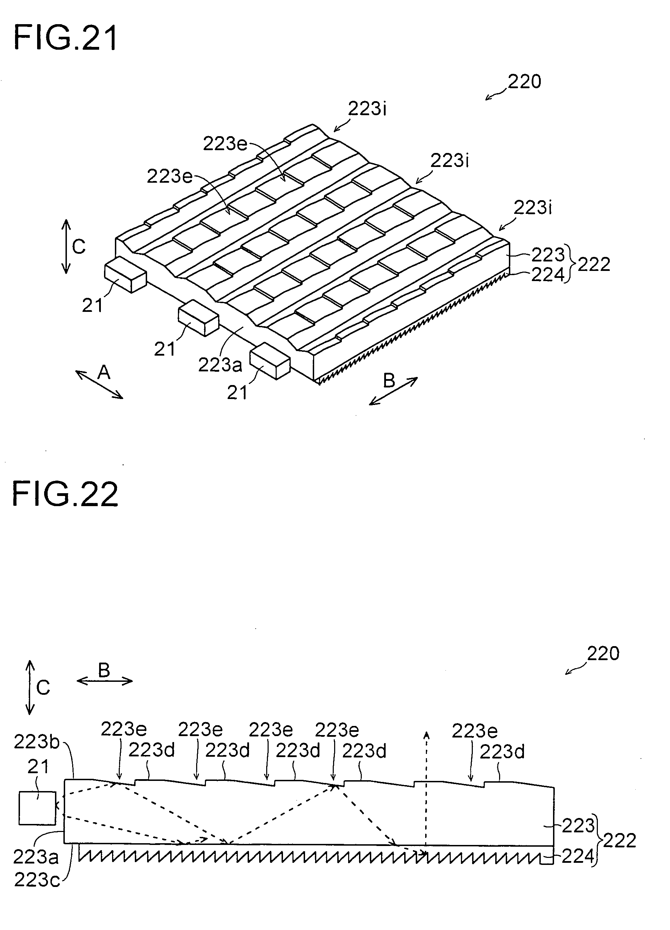

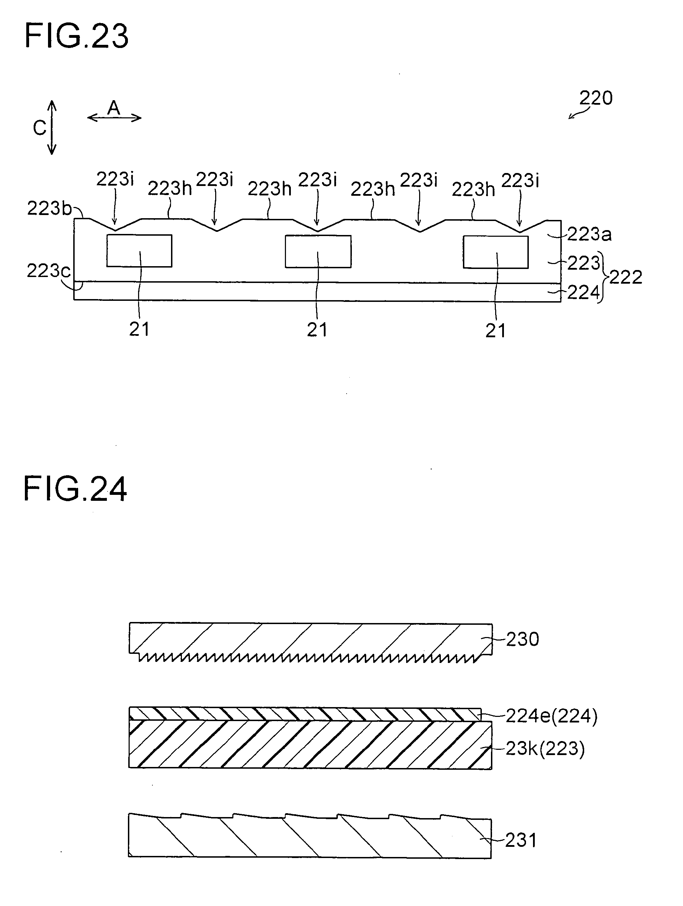

In the third embodiment, with reference to Fig. 21 and 23, a description will be given of a case where, unlike the first and second embodiments, prisms 223e and 223i are formed on the light emitting surface 223b of a light guide body 223.

In a backlight device 220 of the third embodiment of the present invention, as shown in Figs. 21 and 22, a light guide plate 222 is formed with: the light guide body 223 that has a light entering surface 223a which the light from the LEDs 21 enters; and a low refractive index layer 224 that has a lower refractive index than the light guide body 223. The backlight device 220 is one example of a "planar illumination device" according to the present invention; the light guide plate 222 is one example of a "light guide member" according to the present invention.

In the third embodiment, as shown in Fig. 22, in the light emitting surface 223b of the light guide body 223, along the direction (B-direction) of the normal to the light entering surface 223a of the light guide body 223, a plurality of flat surface portions 223d and a plurality of concave prisms 223e are formed alternately. The light emitting surface 223b is one example of a "front surface of a light guide body", a "surface where a first reflective portion is provided", a "front surface of a light guide member" and a "surface where a third reflective portion is formed" according to the present invention. The flat surface portion 223d is one example of a "first flat surface portion" according to the present invention; the prism 223e is one example of a "first reflective portion" according to the present invention.

In the third embodiment, as shown in Fig. 23, in the light emitting surface 223b of the light guide body 223, a plurality of flat surface portions 223h and a plurality of concave prisms 223i are alternately formed along the A-direction. The flat surface portion 223h is one example of a "second flat surface portion" according to the present invention; the prism 223i is one example of a "third reflective portion" according to the present invention.

The back surface 223c of the light guide body 223 (the interface between the light guide body 223 and the low refractive index layer 224) is formed to be flat.

The other portions of the structure of the backlight device 220 according to the third embodiment and the optical path of the light emitted from the LEDs 21 are the same as in the first and second embodiments.

The method of manufacturing the light guide plate 222 of the backlight device 220 according to the third embodiment will now be described with reference to Figs. 24 to 26.

As shown in Fig. 24, on the film material 23k that is formed as the light guide body 223, a film material 224e that is formed as the low refractive index layer 224 is placed. Then, the film materials 23k and 224e are arranged between an upper mold 230 and a lower mold 231.

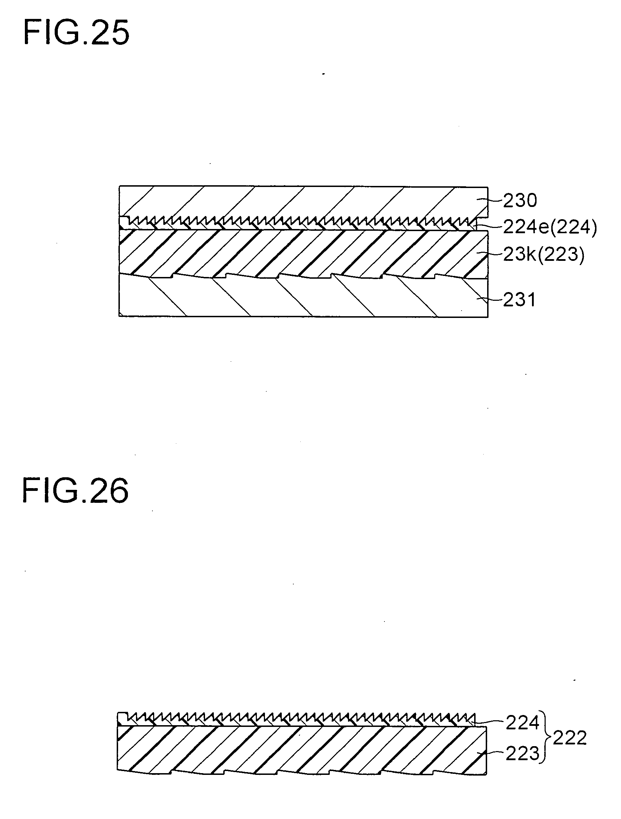

Then, as shown in Fig. 25, the film materials 23k and 224e are heated and pressurized by the upper mold 230 and the lower mold 231. In this way, the film materials 23k and 224e are formed into the desired shapes.

Then, the film materials 23k and 224e are separated from the upper mold 230 and the lower mold 231 and are cooled, and are divided into individual pieces, with the result that the light guide plate 222 composed of the light guide body 223 and the low refractive index layer 224 can be obtained as shown in Fig. 26.

Since, in the third embodiment, as described above, the light guide body 223 and the low refractive index layer 224 can be formed simultaneously, it is possible not only to prevent the manufacturing time of the light guide plate 222 from being elongated but also to reduce an increase in the manufacturing cost.

The other effects of the third embodiment are the same as the first and second embodiments.

(Fourth embodiment)

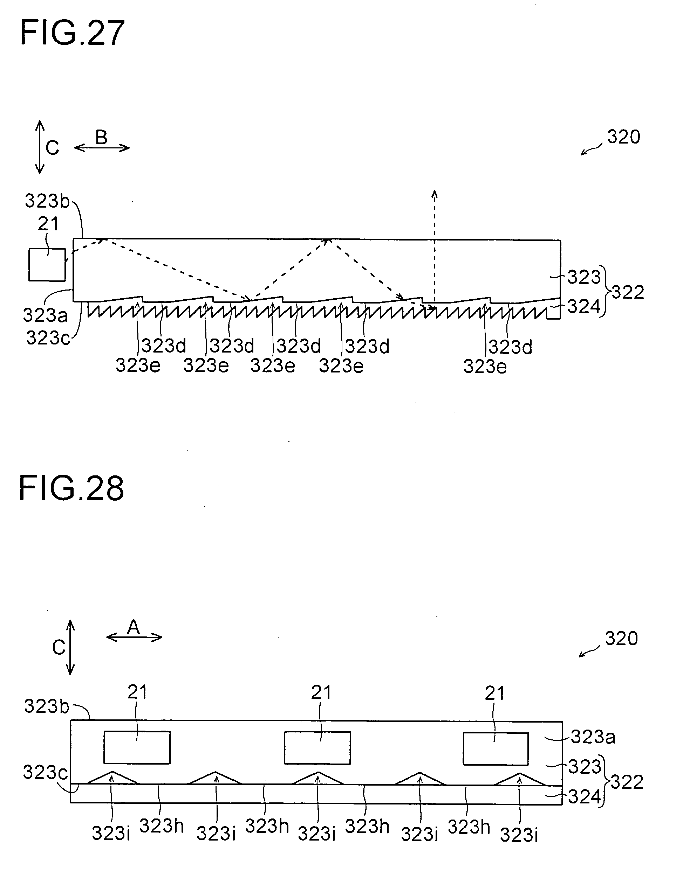

In the fourth embodiment, with reference to Fig. 27 and 28, a description will be given of a case where, unlike the first to third embodiments, prisms 323e and 323i are formed on the back surface 323c of a light guide body 323.

In a backlight device 320 of the fourth embodiment of the present invention, as shown in Figs. 27 and 28, a light guide plate 322 is formed with: the light guide body 323 that has a light entering surface 323a which the light from the LEDs 21 enters; and a low refractive index layer 324 that has a lower refractive index than the light guide body 323. The backlight device 320 is one example of a "planar illumination device" according to the present invention; the light guide plate 322 is one example of a "light guide member" according to the present invention.

In the fourth embodiment, the light emitting surface 323b of the light guide body 323 is formed to be flat. The light emitting surface 323b is one example of a "front surface of a light guide body" and a "front surface of a light guide member" according to the present invention.

In the fourth embodiment, as shown in Fig. 27, in the back surface 323c of the light guide body 323, along the direction (B-direction) of the normal to the light entering surface 323a of the light guide body 323, a plurality of flat surface portions 323d and a plurality of concave prisms 323e are formed alternately. The back surface 323c is one example of a "surface where a first reflective portion is provided" and a "surface where a third reflective portion is formed" according to the present invention; the flat surface portion 323d is one example of a "first flat surface portion" according to the present invention. The prism 323e is one example of a "first reflective portion" according to the present invention.

In the fourth embodiment, as shown in Fig. 28, in the back surface 323c of the light guide body 323, a plurality of flat surface portions 323h and a plurality of concave prisms 323i are alternately formed along the A-direction. The flat surface portion 323h is one example of a "second flat surface portion" according to the present invention; the prism 323i is one example of a "third reflective portion" according to the present invention.

The other portions of the structure of the backlight device 320 according to the fourth embodiment, the optical path of the light emitted from the LEDs 21, the method of manufacturing the light guide plate 322 and the effects of the fourth embodiment are the same as the first and second embodiments.

(Fifth embodiment)

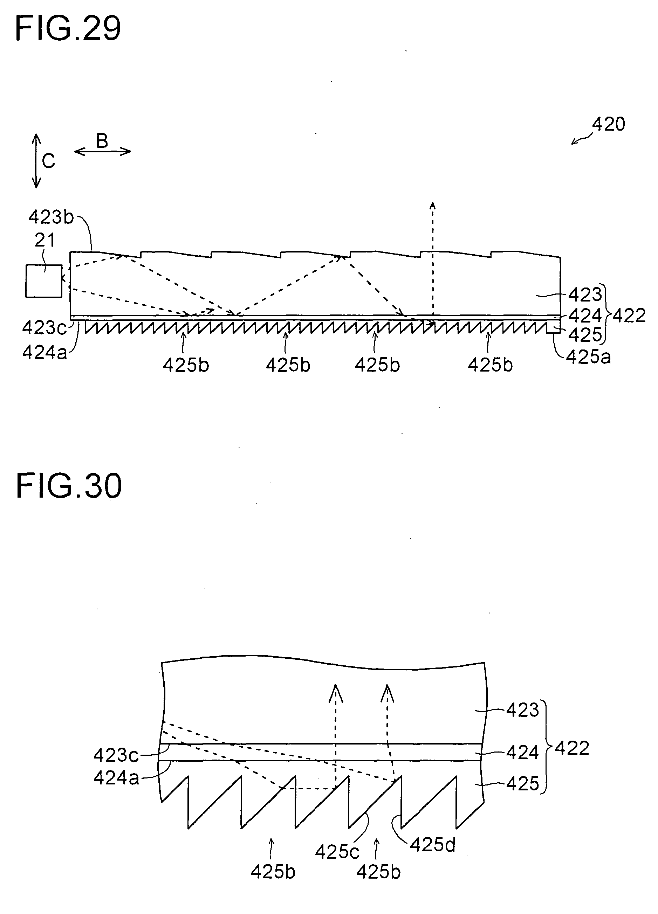

In the fifth embodiment, with reference to Figs. 29 and 30, a description will be given of a case where, unlike the first to fourth embodiments, a prism layer 425 is formed on the back surface 424a of a low refractive index layer 424 of a light guide plate 422.

In a backlight device 420 of the fifth embodiment of the present invention, as shown in Fig. 29, the light guide plate 422 is formed with: the light guide body 423; the low refractive index layer 424 that has a lower refractive index than the light guide body 423; and the prism layer 425 that has a higher refractive index than the low refractive index layer 424. The backlight device 420 is one example of a "planar illumination device" according to the present invention; the light guide plate 422 is one example of a "light guide member" according to the present invention. The prism layer 425 is one example of a "first reflective portion formation layer" according to the present invention.

Although, in Fig. 29, the light guide body 423 has the same structure as in the first or third embodiment, the light guide body 423 may have the structure of any one of the first to fourth embodiments.

As shown in Figs. 29 and 30, the prism layer 425 is integrally formed on the back surface 424a of the low refractive index layer 424 without the intervention of an air layer.

In the fifth embodiment, a plurality of concave prisms 425b are formed on the back surface 425a (see Fig. 29) of the prism layer 425. The prism 425b is one example of a "second reflective portion" according to the present invention.

As shown in Fig. 30, the concave prism 425b is formed with: an inclination surface 425c that is inclined with respect to the back surface 425a (see Fig. 29); and a vertical surface 425d that is vertical with respect to the back surface 425a. The inclination surface 425c is one example of a "second inclination surface" according to the present invention.

The other portions of the structure in the fifth embodiment are the same as in the first to fourth embodiments.

In the backlight device 420 of the fifth embodiment, as shown in Fig. 29 and described in the first to fourth embodiments, the light emitted from the LEDs 21 is repeatedly reflected between the light emitting surface 423b and the back surface 423c of the light guide body 423, and thus the light is guided such that the angle of incidence with respect to the back surface 423c of the light guide body 423 is gradually reduced, and enters the low refractive index layer 424. The light emitting surface 423b is one example of a "front surface of a light guide body", a "surface where a first reflective portion is provided" and a "front surface of a light guide member" according to the present invention.

Since the prism layer 425 has a higher refractive index than the low refractive index layer 424, the light that has entered the low refractive index layer 424 enters the prism layer 425 without being totally reflected by the back surface 424a (the interface between the low refractive index layer 424 and the prism layer 425) of the low refractive index layer 424.

Thereafter, as shown in Fig. 30, substantially all the light that has entered the prism layer 425 is reflected totally and forwardly by the prisms 425b, or is transmitted and then totally reflected. Then, the light that has been collected enters again the low refractive index layer 424 and the light guide body 423, and is emitted forwardly through the light emitting surface 423b (see Fig. 29).

The method of manufacturing the light guide plate 422 of the backlight device 420 according to the fifth embodiment is the same as in the first to fourth embodiments.

In the fifth embodiment, as described above, the prism layer 425 is formed on the back surface 424a of the low refractive index layer 424 without the intervention of an air layer, and the prisms 425b are formed on the back surface 425a of the prism layer 425. In this way, it is unnecessary to provide prisms in the low refractive index layer 424, and thus it is possible to reduce the thickness of the low refractive index layer 424. Since a transparent material that is used for the low refractive index layer 424 and that has a relatively low refractive index is expensive, when the prism layer 425 is provided and the thickness of the low refractive index layer 424 is reduced, it is possible to reduce an increase in the manufacturing cost of the light guide plate 422.

The other effects of the fifth embodiment are the same as the first to fourth embodiments.

(Sixth embodiment)

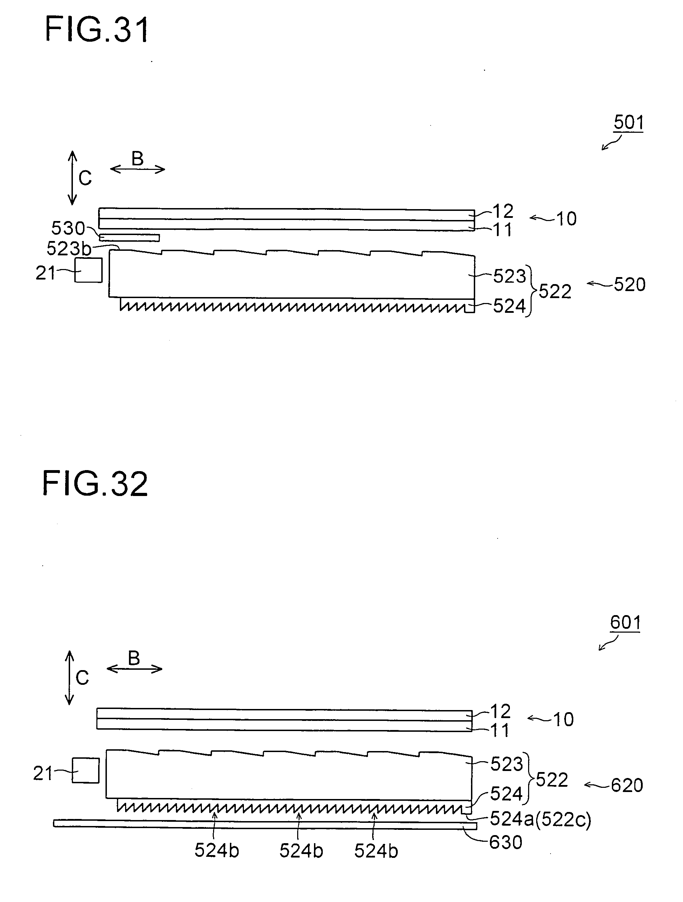

In the sixth embodiment, with reference to Fig. 31, a description will be given of a case where, unlike the first to fifth embodiments, a light shielding member 530 is arranged between a light guide plate 522 and the liquid crystal display panel 10.

In a backlight device 520 of a liquid crystal display device 501 according to the sixth embodiment of the present invention, as shown in Fig. 31, the light guide plate 522 is formed with: a light guide body 523; and a low refractive index layer 524 that has a lower refractive index than the light guide body 523. The liquid crystal display device 501 is one example of a "display device" according to the present invention; the backlight device 520 is one example of a "planar illumination device" according to the present invention. The light guide plate 522 is one example of a "light guide member" according to the present invention.

Although, in Fig. 31, the light guide plate 522 (the light guide body 523 and the low refractive index layer 524) has the same structure as in the first or third embodiment, the light guide plate 522 may have the structure of any one of the first to fifth embodiments.

In the sixth embodiment, the light shielding member 530 is arranged between the light guide plate 522 and the liquid crystal display panel 10.

Specifically, the light shielding member 530 is arranged above a part of the light emitting surface 523b of the light guide body 523 on the side of the LEDs 21 through a layer that has a lower refractive index than the low refractive index layer 524. The light emitting surface 523b is one example of a "front surface of a light guide body", a "surface where a first reflective portion is provided" and a "front surface of a light guide member" according to the present invention.

Although, in Fig. 31, an air layer that is formed as the layer having a lower refractive index than the low refractive index layer 524 is arranged between the light guide body 523 (the light guide plate 522) and the liquid crystal display panel 10, any other layer may be arranged as long as such a layer has a lower refractive index than the low refractive index layer 524. In this case, an adhesive layer (not shown) that has a lower refractive index than the low refractive index layer 524 may be used to fix the light shielding member 530 to the light guide body 523 (the light guide plate 522).

The other portions of the structure of the backlight device 520 according to the sixth embodiment, the optical path of the light emitted from the LEDs 21, and the method of manufacturing the light guide plate 522 are the same as in the first to fifth embodiments.

In the sixth embodiment, as described above, the light shielding member 530 is arranged above the part of the light emitting surface 523b of the light guide body 523 on the side of the LEDs 21. In a part of the light guide plate 522 near the LEDs 21, light is more likely to be emitted from the light guide plate 522 without the intervention of the low refractive index layer 524, and thus the brightness of a part of the liquid crystal display panel 10 near the LEDs 21 is more likely to be increased. Hence, when the light shielding member 530 is arranged above the part of the light guide body 523 (the light guide plate 522) near the LEDs 21, it is possible to shield the part of the light guide plate 522 near the LEDs 21 from light, with the result that it is possible to suppress the uneven brightness of the liquid crystal display panel 10.

The light shielding member 530 is arranged above the part of the light emitting surface 523b of the light guide body 523 on the side of the LEDs 21 through the layer (air layer) having a lower refractive index than the low refractive index layer 524, and thus, as compared with a case where the light shielding member 530 is arranged above the part of the light emitting surface 523b of the light guide body 523 on the side of the LEDs 21 without the intervention of the air layer, the light is easily reflected by the light emitting surface 523b of the light guide body 523. In other words, it is possible to suppress the emission of the light from light emitting surface 523b of the light guide body 523 and then the absorption of the light by the light shielding member 530. In this way, it is possible to further reduce a decrease in the efficiency of use of light.

The other effects of the sixth embodiment are the same as the first to fifth embodiments.

(Seventh embodiment)

In the seventh embodiment, with reference to Fig. 32, a description will be given of a case where, unlike the first to sixth embodiments, a reflective member 630 is arranged on the side of the back surface 522c of the light guide plate 522.

A backlight device 620 of a liquid crystal display device 601 according to the seventh embodiment of the present invention, as shown in Fig. 32, includes: a plurality of LEDs 21; the light guide plate 522 that guides the light from the LEDs 21; and the reflective member 630 that is arranged on the side of the back surface 522c (the back surface 524a of the low refractive index layer 524) of the light guide plate 522. The light guide plate 522 has the same configuration as in the sixth embodiment. The liquid crystal display device 601 is one example of a "display device" according to the present invention; the backlight device 620 is one example of a "planar illumination device" according to the present invention.

In the seventh embodiment, the reflective member 630 is not embedded within prisms 524b of the low refractive index layer 524 in the light guide plate 522. The prism 524b is one example of a "second reflective portion" according to the present invention.

The reflective member 630 is formed with, for example, a dielectric multilayer mirror, a silver-coated reflective plate or a white PET resin; the reflective member 630 has the function of reflecting forwardly (toward the light guide plate 522) light emitted from the back surface 522c of the light guide plate 522.

Since, in the backlight device 620 of the present invention, much of light is not emitted from the back surface 524a of the low refractive index layer 524, a white PET resin that has a relatively low reflectivity and is inexpensive is preferably used as the reflective member 630.

The other portions of the structure of the backlight device 620 according to the seventh embodiment and the optical path of the light emitted from the LEDs 21 are the same as in the first to sixth embodiments.

Since, in the seventh embodiment, as described above, the provision of the reflective member 630 allows the light emitted from the back surface 524a of the low refractive index layer 524 to be reflected toward the light guide plate 522, it is possible to further enhance the efficiency of use of light.

The other effects of the seventh embodiment are the same as the first to sixth embodiments.

(Eighth embodiment)

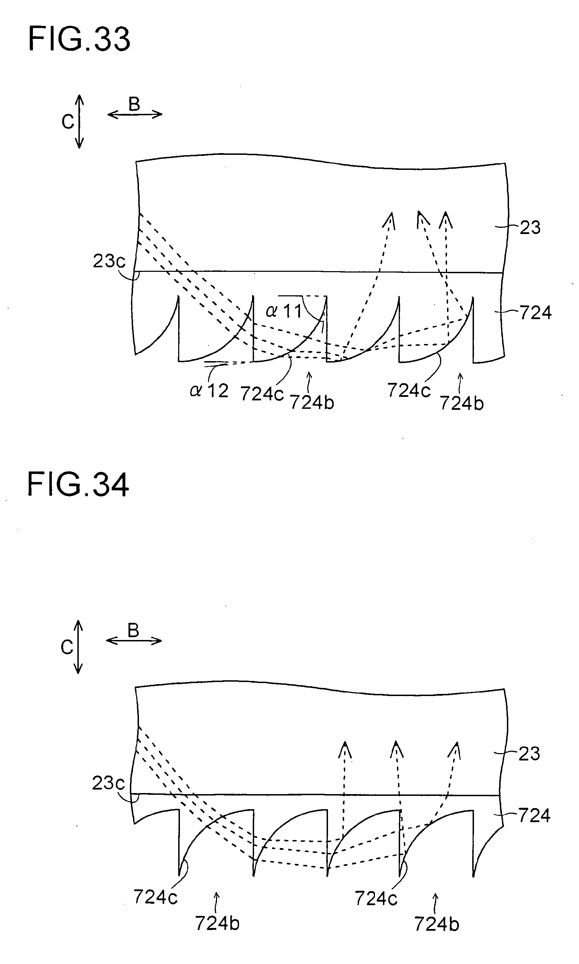

In the eighth embodiment, with reference to Fig. 33 and 34, a description will be given of a case where, unlike the first to seventh embodiments, inclination surfaces 724c of prisms 724b provided in a low refractive index layer 724 are curved. Although, in the eighth embodiment, a description is given based on the structure of the first embodiment, the structure of the eighth embodiment can be applied to the structure of any one of the first to fourth, the sixth and the seventh embodiments.

In the backlight device of the eighth embodiment of the present invention, as shown in Figs. 33 and 34, the inclination surface 724c of the prism 724b of the low refractive index layer 724 is curved. The inclination surface 724c may be either convexly curved as shown in Fig. 33 or concavely curved as shown in Fig. 34. Since, as compared with the concavely curved surface, the convexly curved surface can be formed with few variations and high accuracy, the inclination surface 724c is preferably convexly curved. The prism 724b is one example of a "second reflective portion" according to the present invention; the inclination surface 724c is one example of a "second inclination surface" according to the present invention.

For example, the inclination surface 724c may be arc-shaped. When, as shown in Fig. 33, the inclination surface 724c is convexly curved, an angle $\alpha 11$ formed by an upper end portion of the inclination surface 724c and a plane parallel to the back surface 23c of the light guide body 23 may be formed to be greater than an angle $\alpha 12$ formed by a lower end portion of the inclination surface 724c and a plane parallel to the back surface 23c of the light guide body 23. The inclination angle (the angles $\alpha 11$ and $\alpha 12$ formed with a plane parallel to the back surface 23c of the light guide body 23) of the inclination surface 724c is controlled, and thus it is possible to control the angle of spread of the light.

In the eighth embodiment, as shown in Figs. 33 and 34, even when the angle of incidence with respect to the low refractive index layer 724 is the same but the position where the light enters the low refractive index layer 724 is different, the light is refracted by the prisms 724b in different directions. Hence, the light that has entered the low refractive index layer 724 is reflected totally and forwardly by the inclination surfaces 724c of the prisms 724b while the light spreads in the B-direction.

The other portions of the structure in the eighth embodiment are the same as in the first to fourth, the sixth and the seventh embodiments.

In the eighth embodiment, as described above, the inclination surfaces 724c of the prisms 724b are curved, and thus the light can be reflected totally and forwardly by the inclination surfaces 724c (the interface between the inclination surface 724c of the prism 724b and an air layer) of the prisms 724b while the light spreads in the B-direction. In other words, for example, as compared with the case where the inclination surface 24b shown in Fig. 6 is flat, it is possible to prevent the angle of spread of the light that is reflected totally and forwardly from being lowered too much. In this way, it is possible not only to prevent the angle of spread of the light that is emitted form the light guide body 23 from being lowered too much but also to prevent the wide viewing angle of the liquid crystal display panel 10 from being lowered too much. Consequently, it is possible to prevent the dim liquid crystal display panel 10 from being viewed when seen in any position other than a position (a position of the liquid crystal display panel 10 in the C-direction) directly in front of the liquid crystal display panel 10.

The other effects of the eighth embodiment are the same as the first to fourth, the sixth and the seventh embodiments.

(Ninth embodiment)

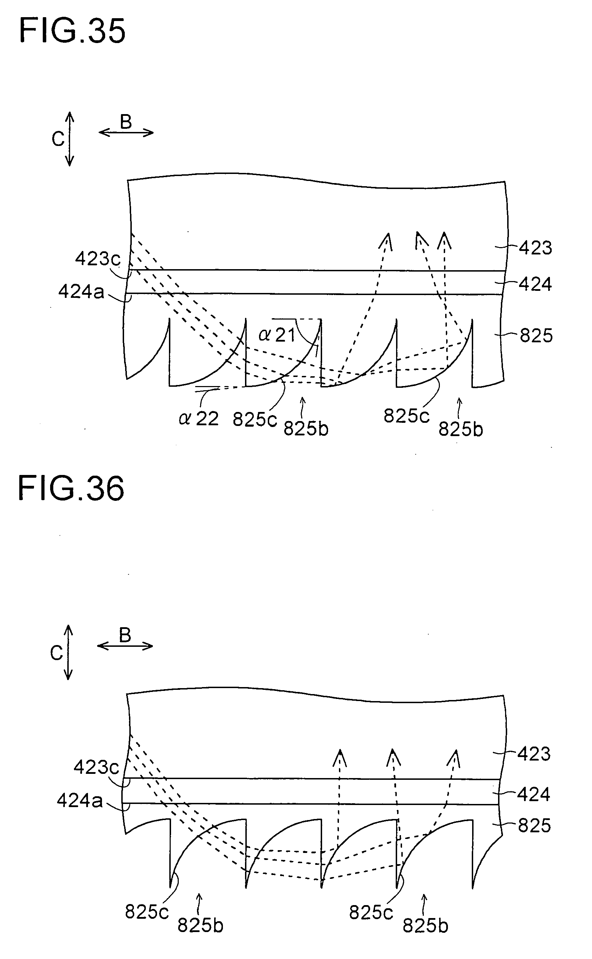

In the ninth embodiment, with reference to Fig. 35 and 36, a description will be given of a case where, unlike the eighth embodiment, a prism layer 825 is formed on the back surface 424a of the low refractive index layer 424.

In the backlight device of the ninth embodiment of the present invention, as shown in Figs. 35 and 36, the prism layer 825 is formed on the back surface 424a of the low refractive index layer 424. The inclination surfaces 825c of the prisms 825b in the prism layer 825 are curved. The inclination surface 825c may be either convexly curved as shown in Fig. 35 or concavely curved as shown in Fig. 36. The prism layer 825 is one example of a "first reflective portion formation layer" according to the present invention; the prism 825b is one example of a "second reflective portion" according to the present invention. The inclination surface 825c is one example of a "second inclination surface" according to the present invention.

When, as shown in Fig. 35, the inclination surface 825c is convexly curved, an angle $\alpha 21$ formed by an upper end portion of the inclination surface 825c and a plane parallel to the back surface 423c of the light guide body 423 may be formed to be greater than an angle $\alpha 22$ formed by a lower end portion of the inclination surface 825c and a plane parallel to the back surface 423c of the light guide body 423.

In the ninth embodiment, as shown in Figs. 35 and 36 and described in the eighth embodiment, the light that has entered the prism layer 825 is reflected totally and forwardly by the inclination surfaces 825c while the light spreads in the B-direction.

The other portions of the structure in the ninth embodiment are the same as in the eighth embodiment.

The other effects of the ninth embodiment are the same as the fifth and eighth embodiments.

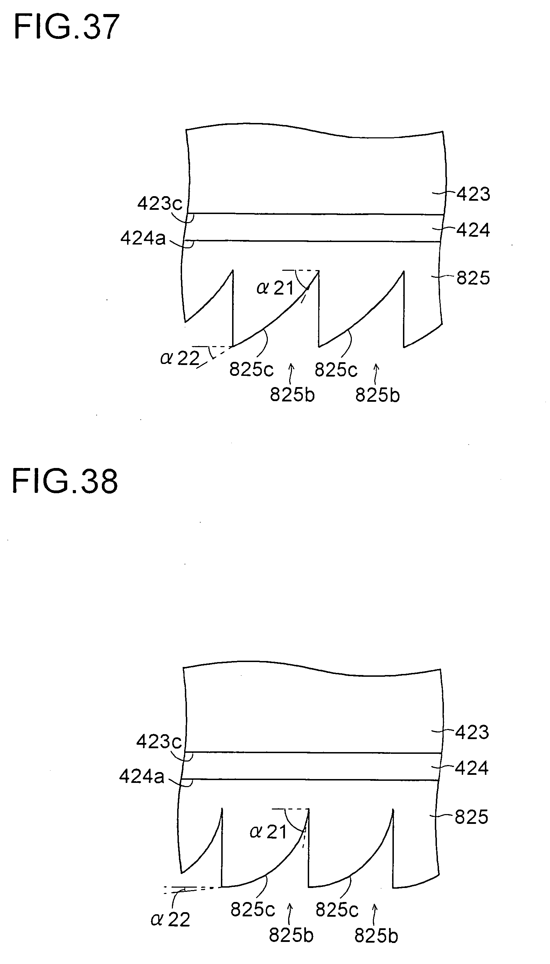

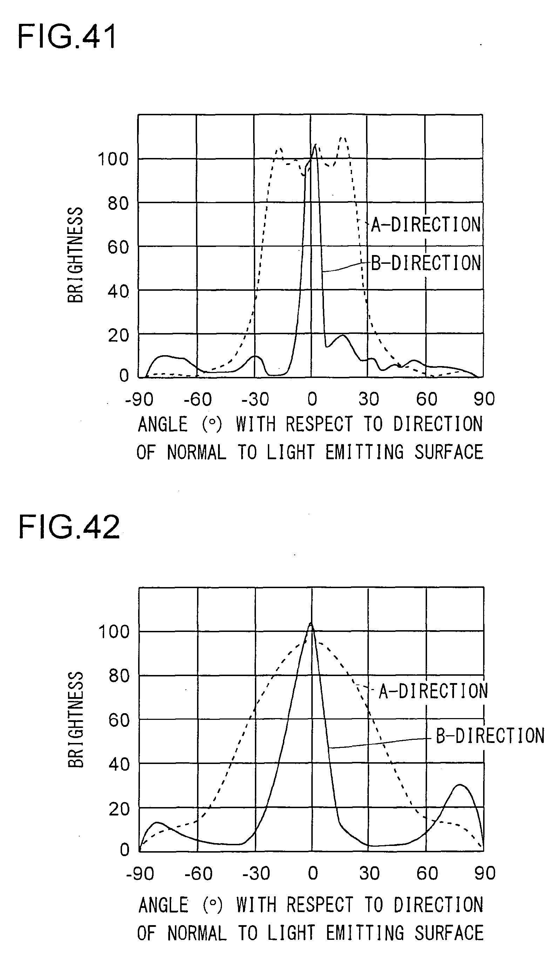

A confirmatory experiment that was conducted to confirm the effects described above will now be described with reference to Figs. 37 to 42.

In this confirmatory experiment, on Examples 1 and 2 corresponding to the ninth embodiment, Example 3 corresponding to the fifth embodiment and Comparative Example 1 corresponding to the planar illumination device shown in Fig. 79, the property of collecting light both in the A-direction and in the B-direction was determined by simulation.

In Example 1, as shown in Fig. 37, the angle $\alpha 21$ formed by the upper end portion of the inclination surface 825c and a plane parallel to the back surface 423c of the light guide body 423 was increased by about 16° as compared with the angle $\alpha 22$ formed by the lower end portion of the inclination surface 825c and a plane parallel to the back surface 423c of the light guide body 423. In Example 1, the refractive index of the light guide body 423 was set at 1.59, and the refractive index of the low refractive index layer 424 was set at 1.26.

In Example 2, as shown in Fig. 38, the angle $\alpha 21$ formed by the upper end portion of the inclination surface 825c and a plane parallel to the back surface 423c of the light guide body 423 was increased by about 24° as compared with the angle $\alpha 22$ formed by the lower end portion of the inclination surface 825c and a plane parallel to the back surface 423c of the light guide body 423. The other portions of the structure in Example 2 were set the same as in Example 1.

In Example 3, as shown in Fig. 30, the inclination surface 425c was formed to be not curved but flat. The other portions of the structure in Example 3 were set the same as in Examples 1 and 2.

In Comparative Example 1, as shown in Fig. 79, a plurality of prisms were formed in the back surface of a light guide plate, and the prisms were arranged such that, as the prisms were closer to LEDs, the distance between the adjacent prisms was increased. The refractive index of the light guide plate was set at 1.59.

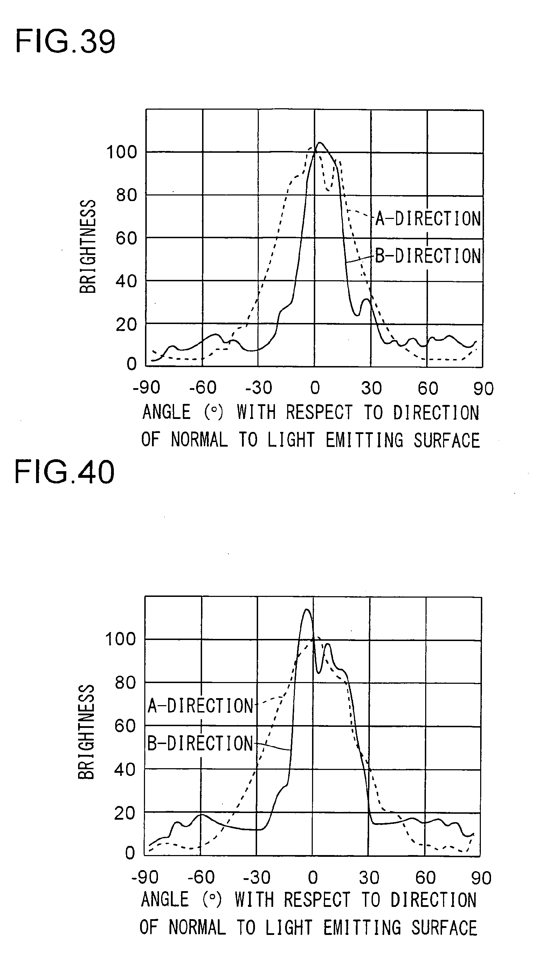

On Examples 1 to 3 and Comparative Example 1, the property of collecting light both in the A-direction and in the B-direction (distribution of light) was determined. The results of the simulation were shown in Figs. 39 to 42. In Figs. 39 to 42, the brightness in the direction of the normal to the light emitting surface was standardized to be 100.

Figs. 39 to 42 show that, in Examples 1 and 2, as compared with Example 3, the decrease in the angle of spread of the light in the B-direction can be suppressed, and that, in Example 2, as compared with Example 1, the decrease in the angle of spread of the light in the B-direction can be much suppressed. Specifically, in Example 1, the full width at half maximum of the light in the B-direction was about 26°, and, in Example 2, the full width at half maximum of the light in the B-direction was about 36°. In Example 3, the full width at half maximum of the light in the B-direction was about 11°.

Therefore, it is shown that, by controlling the inclination angle of the inclination surface 825c, it is possible to control the angle of spread of the light in the B-direction. Since, as described above, the angle of spread of the light in the B-direction can be controlled, it is possible to control the wide viewing angle according to the application of the liquid crystal display device.

It is also shown that the following effects were produced. In other words, it is shown that, in Examples 1 to 3, as compared with Comparative Example 1, the increase in the angle of spread of the light in the A-direction can be suppressed. Specifically, in Examples 1 and 2, the full width at half maximum of the light in the A-direction was about 49°, and, in Example 3, the full width at half maximum of the light in the A-direction was about 55°. On the other hand, in Comparative Example 1, the full width at half maximum of the light in the A-direction was about 76°. As described above, by this experiment, it is also possible to confirm the effect of suppressing the spread of the light emitted from the light guide plate in the A-direction, as described in the first embodiment.

(Tenth embodiment)

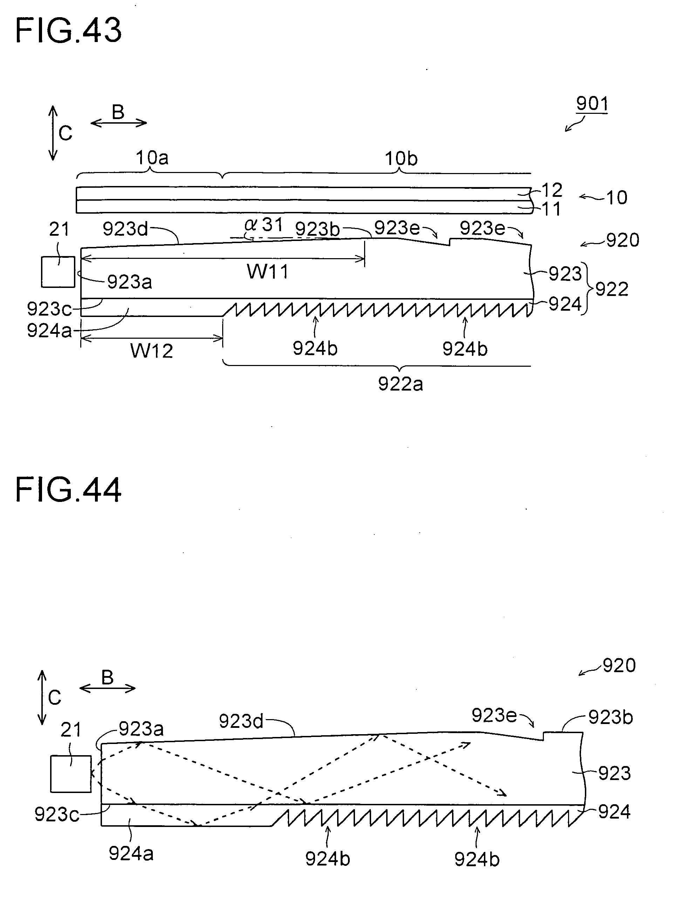

In the tenth embodiment, with reference to Figs. 43 and 44, a description will be given of a case where, unlike the first to ninth embodiments, an inclination surface 923d is provided in part of the light emitting surface 923b of a light guide body 923 on the side of the LEDs 21. Although, in the tenth embodiment, a description is given based on the structure of the first embodiment, the structure of the tenth embodiment can be applied to the structure of any one of the first to fourth and the sixth to eighth embodiments.

In a liquid crystal display device 901 incorporating a backlight device 920 according to the tenth embodiment of the present invention, as shown in Fig. 43, the liquid crystal display panel 10 is provided with a non-display region 10a extending a predetermined distance from the end surface on the side of the LEDs 21 and a display region 10b the predetermined distance away from the end surface on the side of the LEDs 21. The liquid crystal display device 901 is one example of a "display device" according to the present invention; the backlight device 920 is one example of a "planar illumination device" according to the present invention.

In the tenth embodiment, the inclination surface 923d is formed in a region (first region) of the light emitting surface 923b of the light guide body 923 on the side of the LEDs 21. The inclination surface 923d is formed such that, as the inclination surface 923d extends away from the LEDs 21, it extends away from a back surface 923c. In other words, the inclination surface 923d is formed such that an angle formed by the inclination surface 923d and a light entering surface 923a is greater than 90°. The light emitting surface 923b is one example of a "front surface of a light guide body", a "surface where a first reflective portion is provided" and a "front surface of a light guide member" according to the present invention. The inclination surface 923d is one example of a "third reflective surface" according to the present invention.

The inclination surface 923d is formed such that an angle $\alpha 31$ formed by the inclination surface 923d and the light emitting surface 923b falls within a range of about 1° to about 8°.

As described above and shown in Fig. 44, the inclination surface 923d is formed in the region of the light emitting surface 923b of the light guide body 923 on the side of the LEDs 21, and thus it is possible to increase the angle of incidence, with respect to the inclination surface 923d, of the light that travels from the light entering surface 923a or the back surface 923c of the light guide body 923 to the light emitting surface 923b of the light guide body 923.

As shown in Fig. 43, the inclination surface 923d is formed such that a length W11 of the inclination surface 923d in the B-direction is equal to or more than a length W 12 of a flat portion 924a of a low refractive index layer 924, which will be described later, in the B-direction. The inclination surface 923d is preferably formed such that the length W11 of the inclination surface 923d in the B-direction is about twice as long as the length W12 of the flat portion 924a of the low refractive index layer 924 in the B-direction. The length W11 is one example of a "first distance" according to the present invention; the length W12 is one example of a "second distance" according to the present invention.

In the region of the light guide body 923 other than the region where the inclination surface 923d is formed, as in the first embodiment, a plurality of prisms 923e are formed. The prism 923e is one example of a "first reflective portion" according to the present invention.

In the tenth embodiment, in a region (second region) of the low refractive index layer 924 that extends a predetermined distance W12 from the light entering surface 923a of the light guide body 923, the flat portion 924a where prisms 924b are not formed is provided. The region that extends the predetermined distance W12 from the light entering surface 923a of the light guide body 923 is arranged to correspond to the non-display region 10a of the liquid crystal display panel 10. In the region of the low refractive index layer 924 other than the region extending the predetermined distance W12 from the light entering surface 923a of the light guide body 923, the prisms 924b are formed. The region (the region other than the region extending the predetermined distance W12 from the light entering surface 923a) where the prisms 924b are formed is arranged to correspond to the display region 10b of the liquid crystal display panel 10. The prism 924b is one example of a "second reflective portion" according to the present invention.

The region 922a of a light guide plate 922 where the prisms 924b are provided in the low refractive index layer 924 functions as a light emitting region. The light guide plate 922 is one example of a "light guide member" according to the present invention.

The other portions of the structure in the tenth embodiment are the same as in the first to fifth and the sixth to eighth embodiments.

In the tenth embodiment, as described above, the inclination surface 923d is formed in the region of the light emitting surface 923b of the light guide body 923 on the side of the LEDs 21, and thus it is possible to increase the angle of incidence, with respect to the inclination surface 923d, of the light that travels from the light entering surface 923a or the back surface 923c of the light guide body 923 to the light emitting surface 923b of the light guide body 923. Thus, the light can easily be totally reflected by the inclination surface 923d toward the back surface 923c of the light guide body 923. In other words, it is possible to suppress the emission of light from the portion of the light guide body 923 near the LEDs 21. Consequently, it is possible to enhance the efficiency of use of light.

Since light that has been reflected by the inclination surface 923d toward the back surface 923c is more likely to be totally reflected by an interface between the back surface 923c of the light guide body 923 and the low refractive index layer 924, in the portion near the LEDs 21, it is possible to suppress the entry of the light into the low refractive index layer 924,.

Since, in the tenth embodiment, as described above, in the region (the flat portion 924a) of the low refractive index layer 924 that corresponds to the non-display region 10a of the liquid crystal display panel 10, the prisms 924b are not formed, in the portion of the low refractive index layer 924 near the LEDs 21, the light is not reflected forwardly by the prisms 924b. In this way, it is possible to suppress the emission of the light from the portion of the light guide body 923 near the LEDs 21, and thus it is possible to further enhance the efficiency of use of light.

Since, in the tenth embodiment, as described above, the inclination surface 923d is formed such that the length W11 of the inclination surface 923d in the B-direction is about twice as long as the length W12 of the flat portion 924a of the low refractive index layer 924 in the B-direction, the light that has been reflected forwardly by the flat portion 924a of the low refractive index layer 924 can easily be totally reflected by the inclination surface 923d toward the back surface 923c.

The other effects of the tenth embodiment are the same as the first to fourth and the sixth to eighth embodiments.

(Eleventh embodiment)

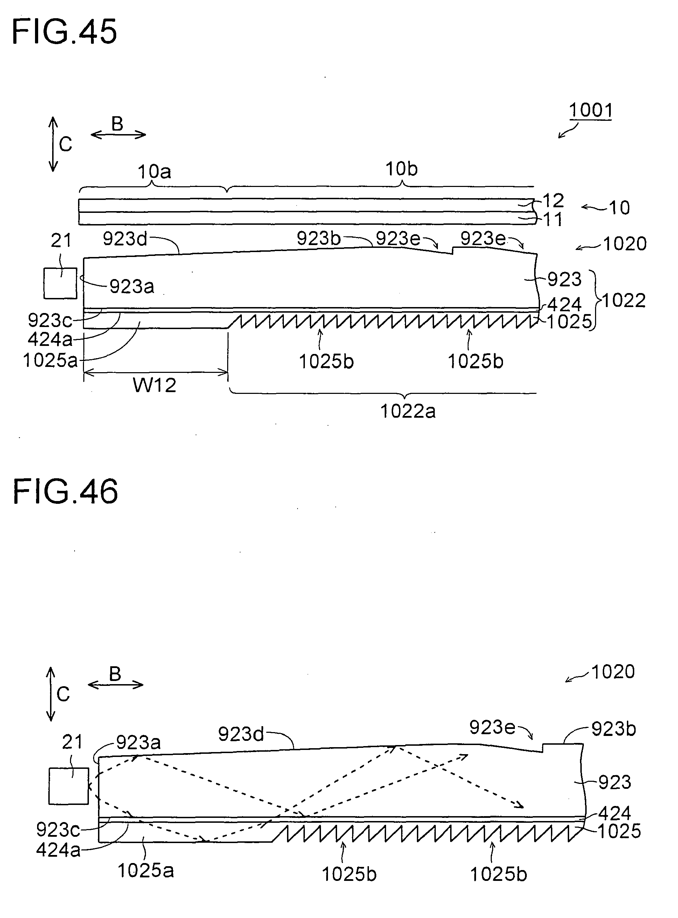

In the eleventh embodiment, with reference to Fig. 45 and 46, a description will be given of a case where, unlike the tenth embodiment, a prism layer 1025 is formed on the back surface 424a of the low refractive index layer 424.

In a liquid crystal display device 1001 incorporating a backlight device 1020 according to the eleventh embodiment of the present invention, as shown in Figs. 45 and 46, the low refractive index layer 424 is provided on the back surface 923c of the light guide body 923, and the prism layer 1025 is formed on the back surface 424a of the low refractive index layer 424. The liquid crystal display device 1001 is one example of a "display device" according to the present invention; the backlight device 1020 is one example of a "planar illumination device" according to the present invention. The prism layer 1025 is one example of a "first reflective portion formation layer" according to the present invention.

In the eleventh embodiment, in a region (second region) of the prism layer 1025 that extends a predetermined distance W12 from the light entering surface 923a of the light guide body 923, a flat portion 1025a where prisms 1025b are not formed is provided. In the region of the prism layer 1025 other than the region extending the predetermined distance W12 from the light entering surface 923a of the light guide body 923, the prisms 1025b are formed. The region 1022a of a light guide plate 1022 where the prisms 1025b are provided in the prism layer 1025 functions as a light emitting region. The prism 1025b is one example of a "second reflective portion" according to the present invention.

The other portions of the structure and the other effects in the eleventh embodiment are the same as in the tenth embodiment.

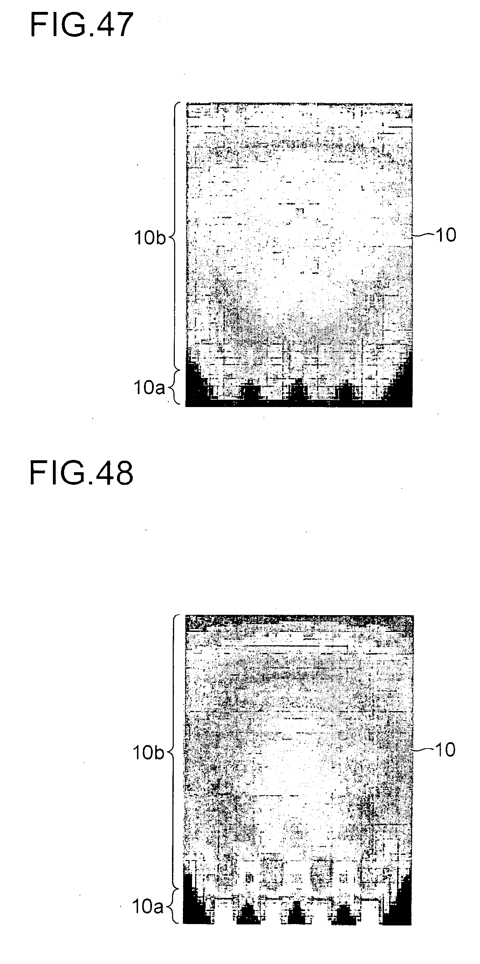

A confirmatory experiment that was conducted to confirm the effects of the inclination surface 923d of the light guide body 923 and the flat portion 1025a of the prism layer 1025 will now be described with reference to Figs. 47 to 48.

In this confirmatory experiment, on Example 4 corresponding to the eleventh embodiment and Example 3 corresponding to the fifth embodiment, the luminous flux of light emitted from the liquid crystal display panel 10 was determined by simulation.

In Example 4, an angle $\alpha 31$ formed by the inclination surface 923d and the light emitting surface 923b was set at about 4°. In Example 4, as in Example 3, the refractive index of the light guide body 923 was set at 1.59, and the refractive index of the low refractive index layer 424 was set at 1.26.

Then, on Examples 3 and 4, the distribution of the luminous flux of the light emitted from the liquid crystal display panel 10 was determined, and the luminous flux of the light emitted from the non-display region 10a of the liquid crystal display panel 10 was determined. The distribution of the luminous flux of the light determined by simulation on Example 4 and the distribution of the luminous flux of the light determined by simulation on Example 3 are shown in Figs. 47 and 48, respectively.

Figs. 47 and 48 show that, in Example, 4, as compared with Example 3, the luminous flux of the light emitted from the non-display region 10a of the liquid crystal display panel 10 is reduced, and that it is possible to further enhance the brightness of the liquid crystal display panel 10. In Figs. 47 and 48, as the luminous flux of the light emitted from the liquid crystal display panel 10 is increased, the liquid crystal display panel 10 is painted more whitish.

When the luminous flux of the light emitted from the LEDs 21 was assumed to be 100, in Example 4, the luminous flux of the light emitted from the non-display region 10a of the liquid crystal display panel 10 was about 1. On the other hand, in Example 3, the luminous flux of the light emitted from the non-display region 10a of the liquid crystal display panel 10 was about 8. In other words, it is shown that, in Example 4, as compared with Example 3, the luminous flux of the light emitted from the non-display region 10a of the liquid crystal display panel 10 can be reduced to about one-eighth

(Twelfth embodiment)

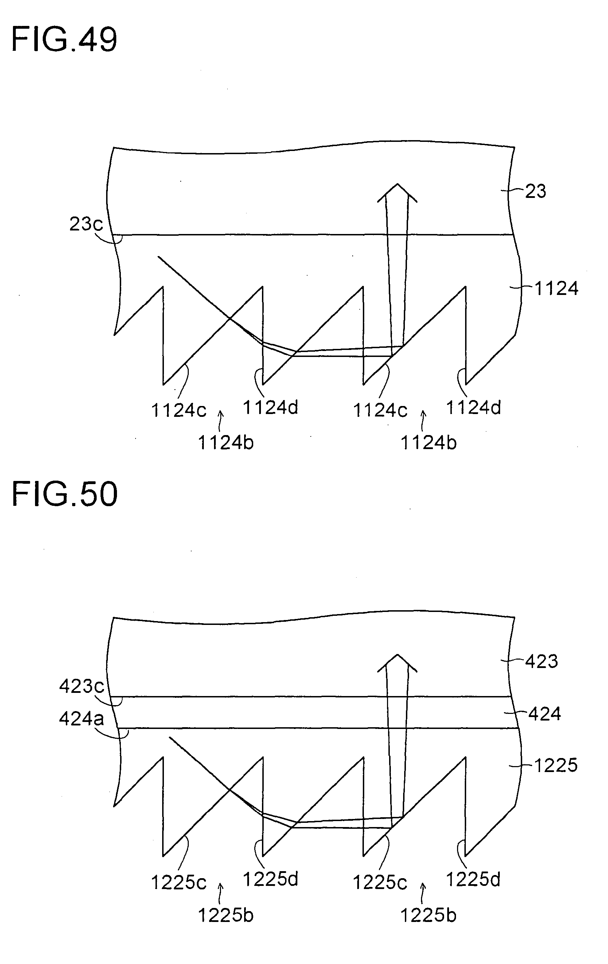

In the twelfth embodiment, with reference to Fig. 49, a description will be given of a case where, unlike the first to eleventh embodiments, an inclination surface 1124c and a vertical surface 1124d of a prism 1124b provided in a low refractive index layer 1124 are light diffusing surfaces. Although, in the twelfth embodiment, a description is given based on the structure of the first embodiment, the structure of the twelfth embodiment can be applied to the structure of any one of the first to fourth, the sixth to eighth and the tenth embodiments.

In a backlight device according to the twelfth embodiment of the present invention, as shown in Fig. 49, the low refractive index layer 1124 is provided on the back surface 23c of the light guide body 23. The inclination surface 1124c and the vertical surface 1124d of the prism 1124b in the low refractive index layer 1124 are the light diffusing surfaces that have the function of diffusing light. The prism 1124b is one example of a "second reflective portion" according to the present invention; the inclination surface 1124c is one example of a "second inclination surface" according to the present invention.

Specifically, minute projections and recesses (not shown) are formed in the inclination surface 1124c and the vertical surface 1124d, and the minute projections and recesses have the function of increasing the angle of spread of light when the light is transmitted or reflected. The projections and recesses (not shown) may be formed either in the inclination surface 1124c or in the vertical surface 1124d.

The projections and recesses in the inclination surface 1124c and the vertical surface 1124d may be formed either chemically or mechanically. The projections and recesses may be formed by forming minute projections and recesses in the surface of a mold and then performing an imprint method with this mold. In this case, it is possible to simultaneously perform the formation of the prism 1124b and the formation of the projections and recesses.

The size and shape of the projections and recesses in the inclination surface 1124c and the vertical surface 1124d are controlled, and thus it is possible to control the angle of spread of light. The size and shape of the projections and recesses in the inclination surface 1124c and the vertical surface 1124d may be set such that they have desired haze values (= a value obtained by expressing in percentage a value obtained by dividing a scattered light transmittance by a total light transmittance).

In the twelfth embodiment, light that has entered the low refractive index layer 1124 is transmitted by the inclination surfaces 1124c and the vertical surfaces 1124d of the prisms 1124b while being diffused, and thereafter the light is reflected totally and forwardly by the inclination surfaces 1124c while being diffused in the B-direction. The light that has entered the low refractive index layer 1124 is diffused, for example, three to five times (five times in Fig. 49) by the inclination surfaces 1124c and the vertical surfaces 1124d.

The other portions of the structure in the twelfth embodiment are the same as in the first to fourth, the sixth to eighth and the tenth embodiments.

In the twelfth embodiment, as described above, the inclination surface 1124c and the vertical surface 1124d of the prism 1124b are formed as the light diffusing surfaces in which the minute projections and recesses are formed, and thus light can be transmitted or totally reflected by the inclination surfaces 1124c and the vertical surfaces 1124d of the prisms 1124b while being diffused. In other words, it is possible to prevent the angle of spread of the light that is reflected totally and forwardly from being lowered too much. In this way, it is possible not only to prevent the angle of spread of the light that is emitted from the light guide body 23 from being lowered too much but also to prevent the wide viewing angle of the liquid crystal display panel 10 from being lowered too much. Consequently, it is possible to prevent the dim liquid crystal display panel 10 from being viewed when seen in any position other than a position (a position of the liquid crystal display panel 10 in the C-direction) directly in front of the liquid crystal display panel 10.

Since, in the twelfth embodiment, as described above, the inclination surface 1124c and the vertical surface 1124d of the prism 1124b are formed as the light diffusing surfaces in which the minute projections and recesses are formed, and thus the light that is emitted from the light guide body 23 can be diffused, the light guide body 23 can emit light that is easy on the eyes

Since the light that is emitted from the light guide body 23 can also be diffused, it is also possible to reduce moiré fringes, which will be described in a fourteenth embodiment.

The other effects in the twelfth embodiment are the same as in the first to fourth, the sixth to eighth and the tenth embodiments.

(Thirteenth embodiment)

In the thirteenth embodiment, with reference to Fig. 50, a description will be given of a case where, unlike the twelfth embodiment, a prism layer 1225 is formed on the back surface 424a of the low refractive index layer 424.

In a backlight device according to the thirteenth embodiment of the present invention, as shown in Fig. 50, the prism layer 1225 is formed on the back surface 424a of the low refractive index layer 424. As in the twelfth embodiment, the inclination surface 1225c and the vertical surface 1225d of a prism 1225b in the prism layer 1225 are the light diffusing surfaces that have the function of diffusing light. The prism layer 1225 is one example of a "first reflective portion formation layer" according to the present invention; the prism 1225b is one example of a "second reflective portion" according to the present invention. The inclination surface 1225c is one example of a "second inclination surface" according to the present invention.

In the thirteenth embodiment, as in the twelfth embodiment, light that has entered the prism layer 1225 is transmitted by the inclination surfaces 1225c and the vertical surfaces 1225d of the prisms 1225b while being diffused, and thereafter the light is reflected totally and forwardly (toward the light guide body 423) by the inclination surfaces 1225c while being diffused in the B-direction.

The other portions of the structure and the other effects in the thirteenth embodiment are the same as in the twelfth embodiment.

(Fourteenth embodiment)

In the fourteenth embodiment, with reference to Figs. 1, 4, 6, 51 and 52, a description will be given of a case where, unlike the first to thirteenth embodiments, the pitch P1 of the prisms 23e of the light guide body 23 and the pitch P3 of the prisms 24b of the low refractive index layer 24 are set at optimum values, and thus the occurrence of moiré fringes is suppressed. Although, in the fourteenth embodiment, a description is given based on the structure of the first embodiment, the structure of the fourteenth embodiment can be applied to the structure of any one of the first to thirteenth embodiments.

In the fourteenth embodiment of the present invention, as shown in Fig. 1, the prisms 23e of the light guide body 23 are formed with the constant pitch P1 (see Fig. 4). The prisms 24b of the low refractive index layer 24 are formed with the constant pitch P3 (see fig. 6).

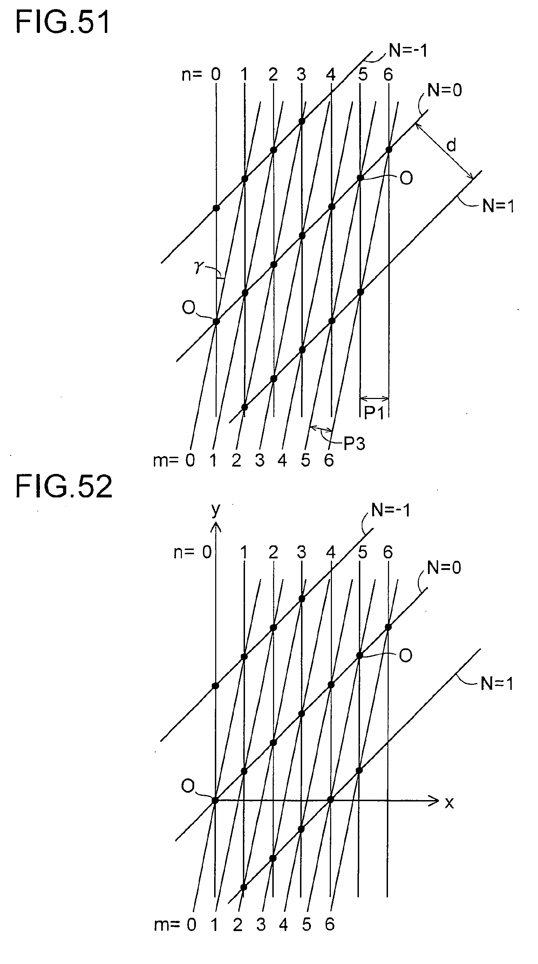

When, as described above, regular groove lines (the prisms 23e and the prisms 24b) overlap each other, moiré fringes are more likely to occur. Specifically, when, as shown in Fig. 51, the groove lines of the prisms 24b of the low refractive index layer 24 and the groove lines of the prisms 23e of the light guide body 23 are arranged at a small angle (bias angle $\gamma$) relative to each other, the intersections O of the groove lines of the prisms 24b in the low refractive index layer and the groove lines of the prisms 23e in the light guide body 23 appear connected to each other due to interference. Since the intersections O appear connected to each other, moiré fringes are seen. In Figs. 51 and 52, m represents the line number of the groove line of the prisms 24b in the low refractive index layer 24, and n represents the line number of the groove line of the prism 23e in the light guide body 23. N represents the line number of the moiré fringe.

The moiré fringes occur even when the groove lines of the prisms 24b in the low refractive index layer and the groove lines of the prisms 23e in the light guide body 23 are arranged at an angle of, for example, a few tenths of a degree. The moiré fringes occur in such a direction that the distance between the intersections O is minimized.

By reducing the pitch d of the moiré fringes, it is possible to suppress the occurrence of the moiré fringes. It is clear that the pitch d of the moiré fringes changes as the pitch P1 of the prisms 23e (groove line n) and the pitch P3 of the prisms 24b (groove line m) are changed.

Hence, in the fourteenth embodiment, the pitch P1 of the prisms 23e and the pitch P3 of the prisms 24b are set at optimum values, and thus the pitch d is reduced and the occurrence of the moiré fringes in visual terms is suppressed.

Specifically, when the distance between the intersections O assumed to be w, and k is a natural value, the pitch P1 of the prisms 23e and the pitch P3 of the prisms 24b are set such that the pitch d expressed by formula (11) below is minimized. When the pitch d is minimized, it is preferable to fix one of the pitch P 1 and the pitch P3 and then determine the other of the pitch P1 and the pitch P3 when the pitch d reaches the smallest.

$$d = P3 \times \cos R / \sin \gamma \qquad (11)$$

Here, R satisfies formula (12) below:

$$\tan R = 1 / \tan\gamma - k \times P3 / (P1 \times \sin\gamma) \quad (12)$$

"k" is such a value that the distance w between the intersections O is minimized. Here, w is given by formula (13) below:

$$w = \{P1^2 + (P1 / \tan\gamma - k \times P3 / \sin\gamma)^2\}^{1/2} \quad (13)$$

Although, in the fourteenth embodiment, the bias angle $\gamma$ is not set, regardless of the value of the bias angle $\gamma$, the values P1 and P3 are not changed when the pitch d of the moiré fringes is minimized, and thus it is possible to conduct the calculation.

The method of writing formulas (11) to (13) will be described in detail below with reference to Fig. 52.

As shown in Fig. 52, the groove line of the prism 23e in the light guide body 23 is expressed by formula (14) below:

$$x = P1 \times n \quad (14)$$

The groove line of the prism 24b in the low refractive index layer 24 is expressed by formula (15) below:

$$y = x / \tan\gamma - P3 \times m / \sin\gamma \quad (15)$$

Formulas (14) and (15) above give formula (16) below:

$$y = P1 \times n / \tan\gamma - P3 \times m / \sin\gamma \quad (16)$$

Since the pitch P1 of the groove lines of the prisms 23e is greater than the pitch P3 of the groove lines of the prisms 24b, for the intersections O on the moiré fringes, the relationship "m = k $\times$ n + N" is established between m, n and N. When the pitch P1 of the groove lines of the prisms 23e is less than the pitch P3 of the groove lines of the prisms 24b, the relationship "n = k $\times$ m + N" is established.

Substitution of the relationship "m = k $\times$ n + N" into formula (16) above yields the formula of the moiré fringes that is expressed by formula (17) below:

$$y = (P1 / \tan\gamma - P3 \times k / \sin\gamma) / n - P3 \times N / \sin\gamma \quad (17)$$

The moiré fringes are expressed by formula (18) below in (x, y) coordinates:

$$y = \{1 / \tan\gamma - P3 \times k / (P1 \times \sin\gamma)\}x - P3 \times N / \sin\gamma \quad (18)$$

Since, in formulas (14) and (17) above, the distance between n = 0 and n = 1 is the distance w between the intersections O, formula (13) above is given.

As shown in formula (12) above, since $1 / \tan\gamma - k \times P3 / (P1 \times \sin\gamma)$ is assumed to be tan R, formula (11) that is the formula of the pitch d of the moiré fringes is given by formula (18) above.

In the fourteenth embodiment, as described above, the pitch P1 of the prisms 23e and the pitch P3 of the prisms 24b are set such that the pitch d of the moiré fringes is minimized, and thus it is possible to reduce the pitch d of the moiré fringes, with the result that the occurrence of the moiré fringes in visual terms can be suppressed.

The other effects of the fourteenth embodiment are the same as the first to thirteenth embodiments.

(Fifteenth embodiment)

In the fifteenth embodiment, with reference to Figs. 1, 2, 4, 6 and 53, a description will be given of a case where, unlike the fourteenth embodiment, the prisms 23e of the light guide body 23 and the prisms 24b of the low refractive index layer 24 are inclined relative to each other, and thus the occurrence of moiré fringes is suppressed.
In the fifteenth embodiment of the present invention, as in the fourteenth embodiment, the prisms 23e of the light guide body 23 are formed with the constant pitch P1 (see Fig. 4). The prisms 24b of the low refractive index layer 24 are formed with the constant pitch P3 (see Fig. 6).
In the fifteenth embodiment, as shown in Fig. 53, the groove lines of the prisms 23e in the light guide body 23 and the groove lines of the prisms 24b in the low refractive index layer 24 are arranged to be inclined relative to each other when seen horizontally (when seen from the front of the light guide body 23). In other words, in the fifteenth embodiment, unlike the fifteenth embodiment, the bias angle $\gamma$ of about a few degrees is previously provided. Thus, it is possible to reduce the pitch d of the moiré fringes. The bias angle $\gamma$ that is previously provided in the fifteenth embodiment is more than a few times as great as the bias angle $\gamma$ described in the fourteenth embodiment.
The groove lines of the prisms 23e in the light guide body 23 may be formed obliquely to the light entering surface 23a (see Fig. 1) of the light guide body 23; the groove lines of the prisms 24b in the low refractive index layer 24 may be formed parallel to the light entering surface 23a of the light guide body 23. The groove lines of the prisms 23e in the light guide body 23 may be formed parallel to the light entering surface 23a of the light guide body 23; the groove lines of the prisms 24b in the low refractive index layer 24 may be formed obliquely to the light entering surface 23a of the light guide body 23.
When the groove lines of the prisms 23e in the light guide body 23 and the groove lines of the prisms 24b in the low refractive index layer 24 are formed obliquely to the light entering surface 23a of the light guide body 23, and the light is reflected or transmitted by the prisms 23e of the light guide body 23 and the prisms 24b of the low refractive index layer 24, the light is refracted in the A-direction (see Fig. 2). Hence, when seen from a position in front of the liquid crystal display panel 10 (a position of the liquid crystal display panel 10 in the C-direction), the brightness is more likely to be reduced. Since, as compared with the prisms 23e of the light guide body 23, the refraction of the light in the A-direction is more likely to be affected by the prisms 24b of the low refractive index layer 24, it is preferable that the groove lines of the prisms 23e in the light guide body 23 be formed obliquely to the light entering surface 23a of the light guide body 23, and the groove lines of the prisms 24b in the low refractive index layer 24 be formed parallel to the light entering surface 23a of the light guide body 23.
Both the groove lines of the prisms 23e in the light guide body 23 and the groove lines of the prisms 24b in the low refractive index layer 24 may be formed obliquely to the light entering surface 23a of the light guide body 23.
Since, as the bias angle $\gamma$ is increased, the light is more likely to be refracted in the A-direction, the bias angle $\gamma$ is preferably equal to or less than 10 degrees.
In the fifteenth embodiment, as described above, the groove lines of the prisms 23e in the light guide body 23 and the groove lines of the prisms 24b in the low refractive index layer 24 are arranged to be inclined relative to each other when seen horizontally, and thus it is possible to reduce the pitch d of the moiré fringes. In this way, it is possible to suppress the occurrence of the moiré fringes in visual terms.
The other effects in the fifteenth embodiment are the same as in the first to fourteenth embodiments.

(Sixteenth embodiment)

In the sixteenth embodiment, with reference to Figs. 54 to 63, a description will be given of a case where, unlike the first to fifteenth embodiments, a prism layer 1326 is formed on the front surface of the light guide body 1323 of a light guide plate 1322. Although, in the sixteenth embodiment, a description is given based on the structure of the third embodiment, the structure of the sixteenth embodiment can be applied to the structure of any one of the first to fifteenth embodiments.
In a backlight device 1320 of the sixteenth embodiment of the present invention, as shown in Fig. 54, the light guide plate 1322 is formed with: the light guide body 1323; a low refractive index layer 1324 that is arranged on the back surface 1323c of the light guide body 1323 and that has a lower refractive index than the light guide body 1323; and the prism layer 1326 arranged on the front surface 1323b of the light guide body 1323. The backlight device 1320 is one example of a "planar illumination device" according to the present invention; the light guide plate 1322 is one example of a "light guide member" according to the present invention. The prism layer 1326 is one example of a "first reflective portion formation layer" according to the present invention.
In the sixteenth embodiment, the front surface 1323b and the back surface 1323c of the light guide body 1323 are formed with flat surfaces, and no prism is formed therein.

The prism layer 1326 is formed integrally on the front surface 1323b of the light guide body 1323 without the intervention of an air layer.

In the sixteenth embodiment, the prism layer 1326 has a higher refractive index than the low refractive index layer 1324; the prism layer 1326 preferably has a higher refractive index than the light guide body 1323.

In the light emitting surface 1326a of the prism layer 1326, a plurality of concave prisms 1326b for reducing an angle of incidence with respect to the low refractive index layer 1324 and a plurality of prisms (for example, the prisms 23e in the first embodiment) for diffusing the light in the A-direction are formed. The light emitting surface 1326a is one example of a "surface where a first reflective portion is provided" and a "front surface of a light guide member" according to the present invention; the prism 1326b is one example of a "first reflective portion" according to the present invention.

In the sixteenth embodiment, the light that has entered the light guide body 1323 is repeatedly reflected between the prisms 1326b of the prism layer 1326 and the back surface 1323c of the light guide body 1323, and thus the light is guided such that the angle of incidence with respect to the back surface 1323c of the light guide body 1323 is gradually reduced, and enters the low refractive index layer 1324. Then, the light is reflected totally and forwardly by the low refractive index layer 1324, and is emitted forwardly from the light emitting surface 1326a.

The light guide body 1323 may be formed with, for example, a glass substrate or a thermosetting resin. The low refractive index layer 1324 may be formed of, for example, a thermoplastic resin or a UV cured resin. The prism layer 1326 may be formed of, for example, a thermoplastic resin or a UV cured resin.

Although, in the sixteenth embodiment, a description is given of a case where the prism layer 1326 in which the prisms 1326b and the prisms (not shown) that diffuse light in the A-direction is formed on the front surface 1323b of the light guide body 1323, the prism layer 1326 in which the prisms 1326b and the prisms (not shown) that diffuse light in the A-direction may be formed on the back surface 1323c (between the light guide body 1323 and the low refractive index layer 1324) of the light guide body 1323. The prism layer 1326 in which the prisms 1326b are provided and the prism layer that diffuses the light in the A-direction may be separately formed on the front surface 1323b and the back surface 1323c of the light guide body 1323.

The other portions of the structure in the sixteenth embodiment are the same as in the first to fifteenth embodiments.

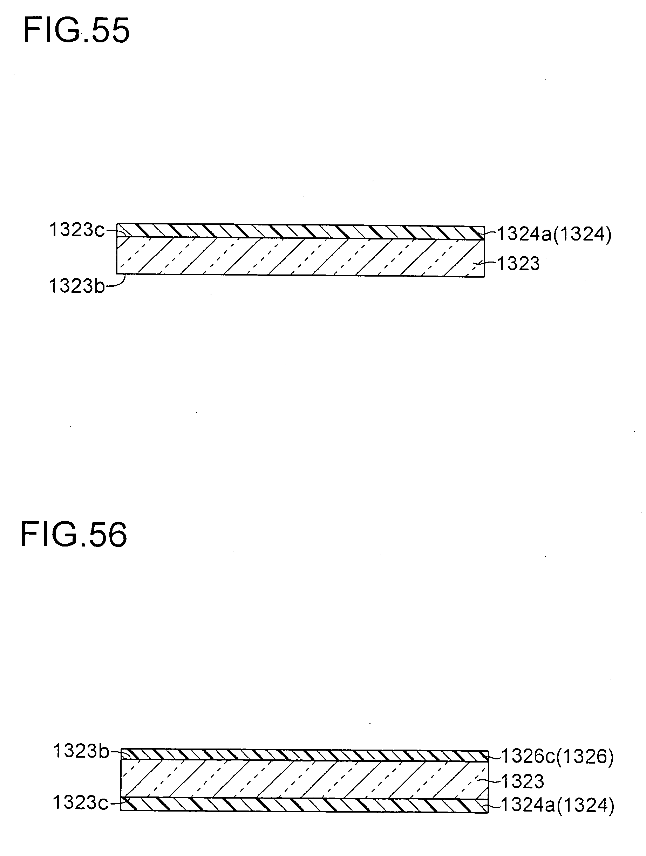

The method of manufacturing the light guide plate 1322 of the backlight device 1320 according to the sixteenth embodiment will now be described. With reference to Figs. 55 to 58, a case where the low refractive index layer 1324 and the prism layer 1326 are formed of a thermosetting resin will be described.

As shown in Fig. 55, a film material 1324a made of a thermosetting resin is arranged on the back surface 1323c of the light guide body 1323. As shown in Fig. 56, a film material 1326c made of a thermosetting resin is arranged on the front surface 1323b of the light guide body 1323.

Then, as shown in Fig. 57, the film material 1324a, the light guide body 1323 and the film material 1326c are sandwiched, heated and pressurized by an upper mold 1330 and a lower mold 1331. In this way, the film materials 1324a and 1326c are formed into the desired shapes.

Then, the film material 1324a, the light guide body 1323 and the film material 1326c are separated from the upper mold 1330 and the lower mold 1331 and are cooled, and are divided into individual pieces, with the result that the light guide plate 1322 can be obtained as shown in Fig. 58.

For example, when the prism layer 1326 is formed on the back surface 1323c of the light guide body 1323 (between the light guide body 1323 and the low refractive index layer 1324), the low refractive index layer 1324 is preferably formed after the formation of the prism layer 1326.

With reference to Figs. 58 to 63, a case where the low refractive index layer 1324 and the prism layer 1326 are formed with a UV cured resin will now be described.

As shown in Fig. 59, the UV cured resin 1324b is applied on the back surface 1323c of the light guide body 1323.

As shown in Fig. 60, a quartz substrate 1332 is arranged on the UV cured resin 1324b. Thereafter, the UV light is applied from the side of the quartz substrate 1332, and thus the UV cured resin 1324b is cured and formed into the desired shape.

When the light guide body 1323 is formed with a transparent member such as glass, the UV light may be applied from the side of the light guide body 1323. Specifically, as shown in Fig. 61, the light guide body 1323 and the UV cured resin 1324b are arranged on a mold 1333, and the light guide body 1323 and the UV cured resin 1324b are sandwiched between the mold 1333 and the quartz substrate 1334. Thereafter, the UV light may be applied from the side of the quartz substrate 1334 (the side of the light guide body 1323).

Then, as shown in Fig. 62, a UV cured resin 1326d is applied on the front surface 1323b of the light guide body 1323.

As shown in Fig. 63, a quartz substrate 1335 is arranged on the UV cured resin 1326d. Thereafter, the UV light is applied from the side of the quartz substrate 1335, and thus the UV cured resin 1326d is cured and formed into the desired shape.

Then, the UV cured resin 1324b, the light guide body 1323 and the UV cured resin 1326d are separated from the quartz substrate 1335 and are divided into individual pieces, with the result that the light guide plate 1322 can be obtained as shown in Fig. 58.

When the prism layer 1326 is formed on the back surface 1323c of the light guide body 1323 (between the light guide body 1323 and the low refractive index layer 1324), the low refractive index layer 1324 is preferably formed after the formation of the prism layer 1326.

Although, in the sixteenth embodiment, the prism layer 1326 is formed after the formation of the low refractive index layer 1324, the low refractive index layer 1324 may be formed after the formation of the prism layer 1326.

Although, in the sixteenth embodiment, the UV cured resin 1324b is cured and thereafter the UV cured resin 1326d is cured, for example, after application of the UV cured resin 1324b, the UV cured resin 1326d may be applied with the UV cured resin 1324b being semi-cured through a prebake. Both the UV cured resins 1324b and 1326d may be cured simultaneously by application of the UV light.

The method of manufacturing the other portions of the light guide plate 1322 in the sixteenth embodiment is the same as in the first embodiment.

Since, in the sixteenth embodiment, as described above, no prism is formed in the light guide body 1323, the front surface 1323b and the back surface 1323c of the light guide body 1323 can be formed as flat surfaces. In this way, it is possible to easily form the light guide body 1323 with a flat-plate glass or a thermosetting resin or the like.

The other effects in the sixteenth embodiment are the same as in the first to fifteenth embodiments.

(Seventeenth embodiment)

In the seventeenth embodiment, with reference to Fig. 64, a description will be given of a case where, unlike the sixteenth embodiment, a prism layer 1425 is formed on the back surface 1424a of a low refractive index layer 1424 in a light guide plate 1422.

In a backlight device 1420 of the seventeenth embodiment of the present invention, as shown in Fig. 64, the light guide plate 1422 is formed with: the light guide body 1323; the low refractive index layer 1424 that is arranged on the back surface 1323c of the light guide body 1323 and that has a lower refractive index than the light guide body 1323; the prism layer 1425 that has a higher refractive index than the low refractive index layer 1424; and the prism layer 1326 arranged on the front surface 1323b of the light guide body 1323. The backlight device 1420 is one example of a "planar illumination device" according to the present invention; the light guide plate 1422 is one example of a "light guide member" according to the present invention. The prism layer 1425 is one example of a "first reflective portion formation layer" according to the present invention.

The prism layer 1425 is formed integrally on the back surface 1424a of the low refractive index layer 1424 without the intervention of an air layer.

The low refractive index layer 1424 may be formed of, for example, a thermoplastic resin or a UV cured resin. The prism layer 1425 may be formed of, for example, a thermoplastic resin or a UV cured resin.

The other portions of the structure in the seventeenth embodiment are the same as the sixteenth embodiment.

The method of manufacturing the light guide plate 1422 of the backlight device 1420 according to the seventeenth embodiment will now be described. With reference to Figs. 65 to 69, a case where the prism layers 1326 and 1425 are formed of a thermosetting resin will be described.

As shown in Fig. 65, a film material 1424b made of a thermosetting resin is arranged on the back surface 1323c of the light guide body 1323. Then, as shown in Fig. 66, a film material 1425a made of a thermosetting resin is arranged on the film material 1424b. When the low refractive index layer 1424 is formed of a UV cured resin, the UV cured resin is applied on the back surface of the light guide body 1323 and is cured by the UV light, and thereafter a film material 1425a made of a thermosetting resin may be arranged on the low refractive index layer 1424.

Then, as shown in Fig. 67, the film material 1326c made of a thermosetting resin is arranged on the front surface 1323b of the light guide body 1323.

Then, as shown in Fig. 68, the film materials 1425a and 1424b, the light guide body 1323 and the film material 1326c are sandwiched, heated and pressurized by the upper mold 1330 and the lower mold 1331. In this way, the film materials 1425a and 1326c are formed into the desired shapes.

Then, the film materials 1425a and 1424b, the light guide body 1323 and the film material 1326c are separated from the upper mold 1330 and the lower mold 1331 and are cooled, and are divided into individual pieces, with the result that the light guide body 1422 can be obtained as shown in Fig. 69.

With reference to Figs. 65 and 69 to 74, a case where the prism layers 1326 and 1425 are formed of a UV cured resin will now be described.

As shown in Fig. 65, the film material 1424b made of the thermosetting resin is arranged on the back surface 1323c of the light guide body 1323. The film material 1424b may be formed of a transparent resin. A UV cured resin may be applied on the back surface 1323c of the light guide body 1323.

Then, as shown in Fig. 70, a UV cured resin 1425b is applied on the film material 1424b.

Then, as shown in Fig. 71, the quartz substrate 1332 is arranged on the UV cured resin 1425b. Thereafter, the UV light is applied from the side of the quartz substrate 1332, and thus the UV cured resin 1425b is cured and formed into the desired shape.

When the light guide body 1323 is formed with a transparent member such as glass, and the film material 1424b is formed of a transparent resin or a UV cured resin, the UV light may be applied from the side of the light guide body 1323. Specifically, as shown in Fig. 72, the light guide body 1323, the film material 1424b and the UV cured resin 1425b are arranged on the mold 1333, and the light guide body 1323, the film material 1424b and the UV cured resin 1425b are sandwiched between the mold 1333 and the quartz substrate 1334. Thereafter, the UV light may be applied from the side of the quartz substrate 1334 (the side of the light guide body 1323).

Then, as shown in Fig. 73, the UV cured resin 1326d is applied on the front surface 1323b of the light guide body 1323.

As shown in Fig. 74, the quartz substrate 1335 is arranged on the UV cured resin 1326d. Thereafter, the UV light is applied from the side of the quartz substrate 1335, and thus the UV cured resin 1326d is cured and formed into the desired shape.

Then, the light guide body 1323, the film material 1424b, the UV cured resin 1425b and the UV cured resin 1326d are separated from the quartz substrate 1335 and are divided into individual pieces, with the result that the light guide plate 1422 can be obtained as shown in Fig. 69.

The method of manufacturing the other portions of the light guide plate 1422 in the seventeenth embodiment is the same as in the first embodiment.

The effects of the seventeenth embodiment are the same as the sixteenth embodiment.

It should be noted that the embodiments disclosed herein are illustrative in all respects and not restrictive. The scope of the present invention is indicated not by the description of the above embodiments but by the scope of claims, and further includes all modifications that are equivalent in meaning to the scope of claims and that fall within the scope of claims.

For example, although, in the above embodiments, the planar illumination device is applied to the backlight device, the present invention is not limited to this application. The planar illumination device may be applied to a planar illumination device other than the backlight device.

Although, in the above embodiments, the display panel and the display device are applied to the liquid crystal display panel and the liquid crystal display device, respectively, the present invention is not limited to this application. The display panel and the display device may be applied to a display panel and a display device other than the liquid crystal display panel and the liquid crystal display device.

Although, in the above embodiments, the LEDs are used as the light source, the present invention is not limited to this application. A light-emitting element other than the LED, such as a semiconductor laser element, may be used; a light source other than a light-emitting element may be used.

Although, in the above embodiments, the first to third reflective portions are formed with the prisms, the present invention is not limited to this configuration. The first to third reflective portions may be formed to have a structure other than prisms, such as cylinders.

Although, in the above embodiments, the prisms are formed to be concave, the present invention is not limited to this configuration. The prisms may be formed to be convex.

A layer such as an adhesive layer may be formed between the light guide body and the low refractive index layer. The refractive index of the layer, such as an adhesive layer, arranged between the light guide body and the low refractive index layer is not particularly limited. The refractive index is preferably higher than that of the low refractive index layer.

Although, in the above embodiments, the inclination angle ($\alpha 1$) of the first inclination surface (for example, the inclination surface 23f) is formed regardless of the distance from the LEDs 21 such that the inclination angle is constant, the present invention is not limited to this configuration. As in a first variation of the present invention shown in Fig. 75, the inclination angle of an inclination surface 1523f may be formed such that, as the inclination surface 1523f extends away form the LEDs 21, the inclination angle is increased.

Although, in the above embodiments, the width (W1) of the first flat surface portion (for example, the flat surface portion 23d) in the B-direction is set regardless of the distance from the LEDs 21 such that the width is constant, the present invention is not limited to this configuration. As in a second variation of the present invention shown in Fig. 76, the width of a flat surface portion 1623d in the B-direction may be set such that, as the flat surface portion 1623d extends away form the LEDs 21, the width is decreased.

Although, in the above embodiments, the width (W2) of the first inclination surface (for example, the inclination surface 23f) in the B-direction is set regardless of the distance from the LEDs 21 such that the width is constant, the present invention is not limited to this configuration. As in a third variation of the present invention shown in Fig. 77, the width of an inclination surface 1723f in the B-direction may be set such that, as the inclination surface 1723f extends away form the LEDs 21, the width is increased.

Since, in the configuration of the first to third variations, light that is guided through a light guide body 1523, 1623 or 1723 is more likely to enter a low refractive index layer 1524 as the light guide body extends away from the LEDs 21, both in a part which is close to the LEDs 21 and in which a large amount of light (luminous flux) is present and in a part which is distant from the LEDs 21 and in which a small amount of light (luminous flux) is present, it is possible to make uniform the amount of light entering the low refractive index layer 1524. Consequently, it is possible to more uniformly emit light from the light guide body 1523, 1623 or 1723.

Although, in the above embodiments, the first flat surface portion (for example, the flat surface portion 23d) is formed between the first reflective portions (for example, the prisms 23e) adjacent to each other in the B-direction, the present invention is not limited to this configuration. A plurality of first reflective portions may be continuously formed in the B-direction without formation of the first flat surface portion and any space between the first reflective portions.

Although, in the above embodiments, the second reflective portions (for example, the prisms 24b) are continuously formed in the B-direction without any space therebetween, the present invention is not limited to this configuration. The flat surface portion may be formed between the second reflective portions adjacent to each other in the B-direction. In this case, the width of the flat surface portion in the B-direction is preferably minimized.

The values of the angles, the widths and the like described in the above embodiments are one example; values of the angles, the widths and the like that are different from those of the angles, the widths and the like described in the above embodiments may be employed.

Although, in the above embodiments, a layer other than the air layer is not provided on the front surface (light emitting surface) of the light guide member, the present invention is not limited to this configuration. A layer that has a lower refractive index than the low refractive index layer may be provided on the front surface of the light guide body.

Although, in the above embodiments, the second reflective portion (for example, the prism 24b) is formed with the inclination surface that is inclined with respect to the back surface of the light guide member and the vertical surface that is vertical with respect to the back surface, the present invention is not limited to this configuration. The vertical surface may be inclined, by a smaller amount than the inclination surface, with respect to the back surface of the light guide member.

Although, in the fourteenth and fifteen embodiments, the projections and recesses are formed in the inclination surfaces and the vertical surfaces of the prisms so as to diffuse the light that has entered the low refractive index layer and the prism layer, the present invention is not limited to this configuration. In order to diffuse the light that has entered the low refractive index layer and the prism layer, diffusing particles for diffusing the light may be contained in the low refractive index layer and the prism layer.

Although, in the above embodiments, when the light guide plate is formed, the prisms are formed using the flat plate-shaped mold and the quartz substrate, the present invention is not limited to this configuration. When the light guide plate is formed, the prisms may be formed using a roll-shaped mold and the quartz substrate.

Although, in the sixteenth and seventeenth embodiments, the second reflective portion formation layer (the prism layer 1326) and the first reflective portion formation layer (for example, the low refractive index layer 1324) are formed of the thermosetting resin or the UV cured resin, the present invention is not limited to this configuration. The second reflective portion formation layer (the prism layer 1326) and the first reflective portion formation layer (for example, the low refractive index layer 1324) may be formed of a thermoplastic resin.

Although, in the above embodiments, as one example of the method of forming the light guide plate, the method using the UV cured resin is employed, the present invention is not limited to this method. A light cured resin that is cured by light other than UV light may be used.

**List of Reference Symbols**

| | |
|---|---|
| 1, 501, 601, 901 and 1001: | Liquid crystal display device (display device) |
| 10: | Liquid crystal display panel (display panel) |
| 20, 120, 220, 320, 420, 520, 620, 920, 1020, 1320 and 1420: | Backlight device (planar illumination device) |
| 21: | LED (light source, light-emitting element) |
| 22, 122, 222, 322, 422, 522, 922, 1322 and 1422: | Light guide plate (light guide member) |
| 22a: | Light emitting region |

| | |
|---|---|
| 23, 123, 223, 323, 423, 523, 923, 1323, 1723, 1823 and 1923: | Light guide body |
| 23a, 123a, 223a, 323a and 923a: | Light entering surface |
| 23b, 423b, 523b and 923b: | Light emitting surface (a front surface of a light guide body, a surface where a first reflective portion is provided, a front surface of a light guide member) |
| 23c: | Back surface (a back surface of a light guide body, a surface where a third reflective portion is provided) |
| 23d, 123d, 223d, 323d and 1823d: | Flat surface portion (first flat surface portion) |
| 23e, 123e, 223e, 323e, 923e and 1326b: | Prism (first reflective portion) |
| 23f, 123f, 1723f and 1923f: | Inclination surface (first inclination surface) |
| 23h, 123h, 223h and 323h: | flat surface portion (second flat surface portion) |
| 23i. 123i. 223i and 323i: | Prism (third reflective portion) |
| 23j and 123j: | Pair of inclination surfaces |
| 24a and 522c: | Back surface (a back surface of a light guide member) |
| 24, 124, 224, 324, 424, 524, 724, 924, 1124, 1324, 1424 and 1724: | Low refractive index layer |
| 24b, 124b, 425b, 524b, 724b, 825b, 924b, 1025b, 1124b and 1225b: | Prism (second reflective portion) |
| 24c, 425c, 724c, 825c, 1224c and 1225c: | Inclination surface (second inclination surface) |
| 123b: | Light emitting surface (a front surface of a light guide body, a front surface of a light guide member, a surface where a third reflective portion is provided) |
| 123c: | Back surface (a back surface of a light guide body, a surface where a first reflective portion is provided) |
| 223b: | Light emitting surface (a front surface of a light guide body, a surface where a first reflective portion is provided, a front surface of a light guide member, a surface where a third reflective portion is provided) |
| 223c, 423c, 923c and 1323c: | Back surface (a back surface of a light guide body) |
| 323b: | Light emitting surface (a front surface of a light guide body, a front surface of a light guide member) |
| 323c: | Back surface (a back surface of a light guide body, a surface where a first reflective portion |

| | |
|---|---|
| | is provided, a surface where a third reflective portion is provided) |
| 424a and 1424a: | Back surface (a back surface of a low refractive index layer) |
| 425, 825, 1025, 1225 and 1425: | Prism layer (first reflective portion formation layer) |
| 425a: | Back surface (a back surface of a first reflective portion formation layer) |
| 530: | Light shielding member |
| 630: | Reflective member |
| 922a and 1022a: | Region (light emitting region) |
| 923d: | Inclination surface (third inclination surface) |
| 1323b: | Front surface (a front surface of a light guide body) |
| 1326: | Prism layer (second reflective portion formation layer) |
| 1326a: | Light emitting surface (a surface where a first reflective portion is provided, a front surface of a light guide member) |
| W3 and W4: | Width |
| W11: | Length (first distance) |
| W12: | Length (second distance) |
| $\alpha 2$: | Angle formed by a pair of inclination surfaces |
| $\theta 3$ and $\theta 5$: | Angle of incidence |

## Claims

**1.** A planar illumination device comprising:

a light source; and
a light guide member that guides light from the light source,
wherein the light guide member includes:

a light guide body that the light from the light source enters; and
a low refractive index layer that is provided on a back surface of the light guide body without intervention of an air layer and that has a lower refractive index than the light guide body,

in a side of a front surface of the light guide body or in the back surface of the light guide body, a plurality of first reflective portions are provided that gradually reduce an angle of incidence of the light from the light source with respect to the back surface of the light guide body, and
in a light emitting region of the light guide member, a plurality of second reflective portions that have a function of totally and forwardly reflecting the light from the light source in an interface between a back surface of the light guide member and an air layer are formed over substantially the entire back surface of the light guide member.

2. The planar illumination device of claim 1,
wherein the front surface and the back surface of the light guide body are formed to be substantially parallel to each other.

3. The planar illumination device of claim 1 or 2,
wherein each of the first reflective portions includes a first inclination surface that is inclined with respect to the front surface or the back surface of the light guide body.

4. The planar illumination device of claim 3,
wherein the first inclination surface is inclined at an angle that is equal to or more than 0.1° but equal to or less than 5° with respect to the front surface or the back surface of the light guide body.

5. The planar illumination device of any one of claims 1 to 4,
wherein, in a surface where the first reflective portions are provided, a first flat surface portion that is substantially parallel to the front surface or the back surface of the light guide body is formed between the first reflective portions adjacent to each other in a direction of a normal to a light entering surface of the light guide body.

6. The planar illumination device of any one of claims 1 to 5,
wherein each of the second reflective portions includes a second inclination surface that is inclined with respect to the back surface of the light guide member.

7. The planar illumination device of claim 6,
wherein the second inclination surface is inclined at an angle that is equal to or more than 40° but equal to or less than 50° with respect to the back surface of the light guide member.

8. The planar illumination device of claim 6,
wherein the second inclination surface is curved.

9. The planar illumination device of any one of claims 1 to 8,
wherein the second reflective portions are continuously formed without any space therebetween in the direction of the normal to a light entering surface of the light guide body.

10. The planar illumination device of any one of claims 1 to 9,
wherein the second reflective portions are formed to have substantially the same shape and substantially the same size.

11. The planar illumination device of any one of claims 1 to 10,
wherein, in the side of the front surface of the light guide body or in the back surface of the light guide body, a plurality of third reflective portions are formed that diffuse the light from the light source in a first direction in which a light entering surface of the light guide body extends.

12. The planar illumination device of claim 11,
wherein each of the third reflective portions includes a pair of inclination surfaces that is inclined with respect to the front surface or the back surface of the light guide body.

13. The planar illumination device of claim 12,
wherein an angle formed by the pair of inclination surfaces is equal to or more than 120° but equal to or less than 140°.

14. The planar illumination device of any one of claims 11 to 13,
wherein, in a surface where the third reflective portions are provided, a second flat surface portion that is substantially parallel to the front surface or the back surface of the light guide body is formed between the third reflective portions adjacent to each other in the first direction, and
a width of the second flat surface portion in the first direction is equal to or more than a width of the third reflective portion in the first direction.

**15.** The planar illumination device of any one of claims 11 to 14,
wherein the light source includes a light-emitting element.

**16.** The planar illumination device of any one of claims 1 to 15,
wherein the light guide member further includes a first reflective portion formation layer that is provided on a back surface of the low refractive index layer without intervention of an air layer and that has a higher refractive index than the low refractive index layer, and
the second reflective portions are formed in the back surface of the first reflective portion formation layer.

**17.** The planar illumination device of any one of claims 1 to 16,
wherein a light shielding member is arranged above a part of the front surface of the light guide body on a side of the light source through a layer that has a lower refractive index than the low refractive index layer.

**18.** The planar illumination device of any one of claims 1 to 17, further comprising:

a reflective member that reflects, toward the light guide member, light emitted from the back surface of the light guide member.

**19.** The planar illumination device of any one of claims 1 to 18,
wherein, in a first region, of the surface where the first reflective portions are provided, that extends a first distance from the light entering surface of the light guide body, a third inclination surface is formed, and
an angle formed by the third inclination surface and the light entering surface is more than 90°.

**20.** The planar illumination device of claim 19,
wherein the second reflective portions are not formed in a second region that extends a second distance from the light entering surface of the light guide body within the back surface of the light guide member but the second reflective portions are formed in a region other than the second region.

**21.** The planar illumination device of claim 20,
wherein the first distance is equal to or more than the second distance.

**22.** The planar illumination device of any one of claims 1 to 21,
wherein a surface of the second reflective portion includes a light diffusing surface.

**23.** The planar illumination device of any one of claims 1 to 22,
wherein the first reflective portions are formed with a constant pitch in the direction of the normal to the light entering surface of the light guide body, and
the second reflective portions are formed with a constant pitch in the direction of the normal to a light entering surface of the light guide body.

**24.** The planar illumination device of claim 23,
wherein the first reflective portions are formed at a predetermined angle with respect to the second reflective portions when viewed from a side of the front surface of the light guide member.

**25.** The planar illumination device of any one of claims 1 to 24,
wherein the light guide member further includes a second reflective portion formation layer that is arranged on the front surface of the light guide body without intervention of an air layer or is arranged between the light guide body and the low refractive index layer,
the first reflective portions are formed in the second reflective portion formation layer, and
the second reflective portion formation layer has a higher refractive index than the low refractive index layer.

**26.** The planar illumination device of claim 25,
wherein the second reflective portion formation layer has a refractive index equal to or higher than the light guide body.

**27.** The planar illumination device of any one of claims 1 to 26,
wherein, when the refractive index of the light guide body is n1, and the refractive index of the low refractive index layer is n2, a relationship "$n1 / n2 > 1.18$" holds true.

**28.** A display device comprising:

the planar illumination device of any one of claims 1 to 27; and
a display panel that is illuminated by the planar illumination device.

FIG.1

1
C
B
12
11
10
23b
23e
23e
21
23
22
20
24
23a
23c
24b
24b
22a

FIG.2

20
23e
23e
23b
C
23
22
24
21
23i
24b
24b
21
23a
A
B
21
23i
23c

FIG.3

20
B
C
θ1
23e
23e
23e
23e
23e
23e
23b
23d
23d
23d
23d
23d
23d
Q1
23f
23f
21
Q2
θ3
Q3
θ2
θ4
Q4
θ5
23
22
23a
24
23c
Q5
24b
24b
24b
24a


FIG.4

B
P1
C
W1
W2
23f
23d
(23b)
23e
α1
23f
23g
23(22)

FIG.5

C
A
20
21
21
21
23b
23a
23
22
24
23c
α2
23j 23j 23h
W3
W4
23h 23j 23j 23h 23j 23j
P2
23i
23i
23i

FIG.6

C
B
23c
23
22
24
α4
24c
24b
24d
24b
W5
(P3)
α3
24a

FIG.7

A
B
C
θ1

FIG.8

C
A
T1
T2

# FIG.9

C
A
sinθ A
sinθ
sinθ C

# FIG.10

C
A
23
24
22
23h
23i
23h
23i
23h

FIG.11

LIGHT REFLECTED BY FLAT SURFACE PORTION 23h
A
C
LIGHT BEFORE BEING REFLECTED BY FLAT SURFACE PORTION 23h

FIG.12

A
C
LIGHT BEFORE BEING REFLECTED BY PRISM 23i

FIG.13

30
23k(23)
31

FIG.14

30
23k(23)
31

FIG.15

23c
23
23b

FIG.16

24e(24)
23c
23
23b

FIG.17

33
24e(24)
23
32

FIG.18

24
22
23

# FIG.19

120
B
C
123b
21
123f
123g
123f
123g
123f
123g
123f
123g
123f
123g
123
122
124
123a
123c
123d
123e
123d
123e
123d
123e
123d
123e
123d
123e
124b
124b 124b

# FIG.20

120
A
C
123i
123j 123j
123h
123h
123i
123j 123j
123h
123h
123i
123j 123j
123b
123a
123
122
123c
124
21
21
21

# FIG.21

220
223i
223e
223e
223i
223i
C
223
224
222
21
21
223a
21
A
B

# FIG.22

220
C
B
223e
223e
223e
223e
223e
223b
223d
223d
223d
223d
223d
21
223
222
224
223a
223c

# FIG.23

220
C
A
223i
223h
223i
223h
223i
223h
223i
223h
223i
223b
223a
223
222
223c
224
21
21
21

# FIG.24

230
224e(224)
23k(223)
231

FIG.25

230
224e(224)
23k(223)
231

FIG.26

224
222
223

FIG.27

C
B
320
323b
21
323
322
324
323a
323c
323d
323d
323d
323d
323d
323e
323e
323e
323e
323e

FIG.28

C
A
320
21
21
21
323b
323a
323
322
323c
324
323i
323h
323i
323h
323i
323h
323i
323h
323i

FIG.29

420
C
B
423b
21
423
424
422
425
423c
424a
425b
425b
425b
425b
425a

FIG.30

423
423c
424
422
424a
425
425c
425d
425b
425b

# FIG.31

501
C
B
12
10
11
530
523b
21
523
522
520
524

# FIG.32

601
C
B
12
10
11
21
523
522
620
524
524a(522c)
630
524b
524b
524b

# FIG.33

C
B
23
23c
724
α11
α12
724c
724b
724c
724b


# FIG.34

C
B
23
23c
724
724c
724b
724c
724b

# FIG.35

C
B
423c
424a
423
424
825
α21
α22
825c
825b
825c
825b

# FIG.36

C
B
423c
424a
423
424
825
825c
825b
825c
825b

FIG.37

423c
424a
423
424
825
α21
α22
825c
825c
825b
825b

FIG.38

423c
424a
423
424
825
α21
α22
825c
825c
825b
825b

# FIG.39

BRIGHTNESS
100
80
60
40
20
0
A-DIRECTION
B-DIRECTION
-90 -60 -30 0 30 60 90
ANGLE (°) WITH RESPECT TO DIRECTION OF NORMAL TO LIGHT EMITTING SURFACE

# FIG.40

BRIGHTNESS
100
80
60
40
20
0
A-DIRECTION
B-DIRECTION
-90 -60 -30 0 30 60 90
ANGLE (°) WITH RESPECT TO DIRECTION OF NORMAL TO LIGHT EMITTING SURFACE

FIG.41

BRIGHTNESS
100
80
60
40
20
0
-90 -60 -30 0 30 60 90
A-DIRECTION
B-DIRECTION
ANGLE (°) WITH RESPECT TO DIRECTION
OF NORMAL TO LIGHT EMITTING SURFACE

FIG.42

BRIGHTNESS
100
80
60
40
20
0
-90 -60 -30 0 30 60 90
A-DIRECTION
B-DIRECTION
ANGLE (°) WITH RESPECT TO DIRECTION
OF NORMAL TO LIGHT EMITTING SURFACE

# FIG.43

901
B
C
10a
10b
12
11
10
21
923d
α31
923b
923e
923e
920
W11
923a
923
922
924
923c
924a
W12
924b
924b
922a


# FIG.44

920
B
C
21
923a
923d
923e
923b
923
923c
924
924a
924b
924b

# FIG.45

1001
C
B
10a
10b
12
11
10
21
923d
923b
923e
923e
1020
923a
923
424
1022
923c
1025
424a
1025a
1025b
1025b
W12
1022a

# FIG.46

1020
C
B
21
923a
923d
923e
923b
923
923c
424
1025
424a
1025a
1025b
1025b

FIG.47

10b
10
10a

FIG.48

10b
10
10a

FIG.49

23
23c
1124
1124c
1124d
1124c
1124d
1124b
1124b

FIG.50

423
423c
424
424a
1225
1225c
1225d
1225c
1225d
1225b
1225b

FIG.51

N=-1
n= 0 1 2 3 4 5 6
N=0
d
O
N=1
γ
O
P1
P3
m= 0 1 2 3 4 5 6

FIG.52

y
N=-1
n= 0 1 2 3 4 5 6
N=0
O
N=1
O
x
m= 0 1 2 3 4 5 6

FIG.53

n= 0 1 2 3 4 5 6
N=-2
N=-1
O
N=0
γ
O
d
N=1
P1
P3
m= 0 1 2 3 4 5 6

FIG.54

C
B
1320
1326a
1323b
21
1326b
1326b
1326
1323
1322
1324
1323c

FIG.55

1323c
1324a(1324)
1323
1323b

FIG.56

1323b
1326c(1326)
1323
1323c
1324a(1324)

FIG.57

1330
1323b
1326c(1326)
1323
1323c
1324a(1324)
1331

FIG.58

1323b
1326
1323
1322
1323c
1324

FIG.59

1323c
1324b(1324)
1323
1323b

FIG.60

1332
1323c
1324b(1324)
1323
1323b

FIG.61

1323b
1334
1323
1323c
1324b(1324)
1333

FIG.62

1323b
1326d(1326)
1323
1323c
1324b(1324)

FIG.63

1335
1323b
1326d(1326)
1323
1323c
1324b(1324)

FIG.64

C
B
1420
1326a
1323b
1326b
1326b
21
1326
1323
1422
1323c
1424
1424a
1425

FIG.65

1323c
1424b(1424)
1323
1323b

FIG.66

1425a(1425)
1323c
1424b(1424)
1323
1323b

FIG.67

1323b
1323c
1326c(1326)
1323
1424b(1424)
1425a(1425)

FIG.68

1323b
1323c
1330
1326c(1326)
1323
1424b(1424)
1425a(1425)
1331

FIG.69

1323b
1323c
1424a
1326
1323
1424
1425
1422

FIG.70

1323c
1323b
1425b(1425)
1424b(1424)
1323

FIG.71

1332
1425b(1425)
1323c
1424b(1424)
1323
1323b

FIG.72

1323b
1334
1323
1323c
1424b(1424)
1425b(1425)
1333

FIG.73

1323b
1326d(1326)
1323
1323c
1424b(1424)
1425b(1425)

FIG.74

1335
1323b
1326d(1326)
1323
1323c
1424b(1424)
1425b(1425)

FIG.75

B
C
21
1523f
1523f
1523f
1523
1524

FIG.76

B
C
21
1623d
1623d
1623d
1623
1524

FIG.77

B
C
21
1723f
1723f
1723f
1723
1524

FIG.78

2001
2010
2023
2023
2023
2023
2022a
2020
2021
2022
2022b
2024

FIG.79

2101
B
2110
2121
2122
2120
2122a
2123
2122c
2122b
2122b
2122b

FIG.80

2101
A
2110
2122c
2122
2120
2122a
2123
2121
2121
2121

FIG.81

2101
A
2110
2121
2121
2121
S2002
S2001
S2002
S2001
S2002
S2001
S2002

## INTERNATIONAL SEARCH REPORT

International application No.
PCT/JP2009/067465

A. CLASSIFICATION OF SUBJECT MATTER
*F21S2/00*(2006.01)i, *G02F1/13357*(2006.01)i, *F21Y101/02*(2006.01)n

According to International Patent Classification (IPC) or to both national classification and IPC

B. FIELDS SEARCHED

Minimum documentation searched (classification system followed by classification symbols)
F21S2/00, G02F1/13357, F21Y101/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-87647 A (Sharp Corp.), 05 April 2007 (05.04.2007), entire text; all drawings (Family: none) | 1-28 |
| A | JP 2008-66014 A (Enplas Corp.), 21 March 2008 (21.03.2008), entire text; all drawings & US 2008/151578 A1 & CN 101140337 A & KR 10-2008-22068 A | 1-28 |
| A | JP 2005-302458 A (Seiko Instruments Inc.), 27 October 2005 (27.10.2005), entire text; all drawings (Family: none) | 1-28 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 December, 2009 (01.12.09) | 08 December, 2009 (08.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/067465

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-20125 A (Nitto Denko Corp.), 23 January 1998 (23.01.1998), entire text; all drawings (Family: none) | 1-28 |
| A | JP 2006-294343 A (Mitsubishi Rayon Co., Ltd.), 26 October 2006 (26.10.2006), entire text; all drawings (Family: none) | 1-28 |
| A | JP 2002-245823 A (Mitsubishi Rayon Co., Ltd.), 30 August 2002 (30.08.2002), entire text; all drawings & US 2002/163790 A1 & EP 1361392 A & WO 02/048609 A1 & CN 1479848 A & KR 10-2002-31952 A | 1-28 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001110218 A